(19)

Europäisches Patentamt

European Patent Office

Office européen des brevets

(11)  EP 2 850 359 B1

(12)  **EUROPEAN PATENT SPECIFICATION**

(45) Date of publication and mention
of the grant of the patent:
**06.05.2020  Bulletin 2020/19**

(21) Application number: **13790013.0**

(22) Date of filing: **17.05.2013**

(51) Int Cl.:
*F21S 2/00* (2016.01)          *F21V 8/00* (2006.01)

(86) International application number:
**PCT/US2013/041655**

(87) International publication number:
**WO 2013/173760 (21.11.2013 Gazette 2013/47)**

(54)  **SOURCE CONDITIONING FOR IMAGING DIRECTIONAL BACKLIGHTS**

QUELLENAUFBEREITUNG ZUR ABBILDUNG GERICHTETER RÜCKLICHTER

CONDITIONNEMENT D'UNE SOURCE POUR IMAGERIE PAR RÉTROÉCLAIRAGES DIRECTIONNELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2012  US 201261648942 P**
**18.05.2012  US 201261648888 P**
**18.05.2012  US 201261649116 P**
**18.05.2012  US 201261649054 P**
**16.11.2012  US 201261727421 P**

(43) Date of publication of application:
**25.03.2015  Bulletin 2015/13**

(73) Proprietor: **RealD Spark, LLC**
**Beverly Hills, CA 90212 (US)**

(72) Inventors:
• **ROBINSON, Michael, G.**
**Beverly Hills, CA 90210 (US)**

• **WOODGATE, Graham, J.**
**Beverly Hills, CA 90210 (US)**
• **HARROLD, Jonathan**
**Beverly Hills, CA 90210 (US)**
• **SCHUCK, Miller, H.**
**Beverly Hills, CA 90210 (US)**

(74) Representative: **J A Kemp LLP**
**14 South Square**
**Gray's Inn**
**London WC1R 5JJ (GB)**

(56) References cited:
**JP-A- H08 254 617          JP-A- 2004 319 364**
**JP-A- 2005 135 844        JP-A- 2006 031 941**
**US-A1- 2009 016 057    US-A1- 2009 016 057**
**US-A1- 2009 135 623    US-A1- 2010 220 260**
**US-A1- 2011 242 298    US-A1- 2012 293 721**

Description

TECHNICAL FIELD

This disclosure generally relates to illumination of spatial light modulators, and more specifically relates to light guides for providing large area illumination from localized light sources for use in 2D, 3D, and/or autostereoscopic display devices.

BACKGROUND

Spatially multiplexed autostereoscopic display devices typically align a parallax component such as a lenticular screen or parallax barrier with an array of images arranged as at least first and second sets of pixels on a spatial light modulator, for example an LCD. The parallax component directs light from each of the sets of pixels into different respective directions to provide first and second viewing windows in front of the display. An observer with an eye placed in the first viewing window can see a first image with light from the first set of pixels; and with an eye placed in the second viewing window can see a second image, with light from the second set of pixels.

Such display devices have reduced spatial resolution compared to the native resolution of the spatial light modulator and further, the structure of the viewing windows is determined by the pixel aperture shape and parallax component imaging function. Gaps between the pixels, for example for electrodes, typically produce non-uniform viewing windows. Undesirably such displays exhibit image flicker as an observer moves laterally with respect to the display and so limit the viewing freedom of the display. Such flicker can be reduced by defocusing the optical elements; however such defocusing results in increased levels of image cross talk and increases visual strain for an observer. Such flicker can be reduced by adjusting the shape of the pixel aperture, however such changes can reduce display brightness and can comprise addressing electronics in the spatial light modulator.

BRIEF SUMMARY

The present disclosure relates to a directional backlight for providing large area uniform directed illumination of a spatial light modulator from localized light sources. Within an exemplary directional backlight, a waveguide comprises comprise first and second, opposed guide surfaces for guiding light along the waveguide, and a reflective end facing the input end for reflecting input light from the input sources back through the waveguide. The waveguide may be arranged to direct input light from the light sources as output light through the first guide surface after reflection from the reflective end, for example using light extraction features hidden to guided light propagating in a first forward direction..

The output light may be directed into optical windows in output directions distributed in a lateral direction to the normal to the first guide surface that are dependent on the input positions of light sources in a lateral direction across the input end of the waveguide. Such controlled illumination may provide for efficient, multi-user autostereoscopic displays as well as improved 2D display functionality.

Display backlights in general employ waveguides and edge emitting sources. Certain imaging directional backlights have the additional capability of directing the illumination through a display panel into viewing windows. An imaging system may be formed between multiple sources and the respective window images. One example of an imaging directional backlight is an optical valve that may employ a folded optical system and hence may also be an example of a folded imaging directional backlight. Light may propagate substantially without loss in one direction through the optical valve while counterpropagating light may be extracted by reflection off tilted facets as described in Pat. App. Ser. No. 13/300,293.

US-2011/0242298, on which the two-part form of claim 1 is based discloses a directional backlight comprising: a waveguide having an input end; and an array of light sources disposed at different input positions in a lateral direction across the input end of the waveguide, the waveguide further comprising first and second, opposed guide surfaces for guiding light along the waveguide, and a reflective end facing the input end for reflecting input light from the input sources back through the waveguide, the waveguide being arranged to direct input light from the light sources as output light through the first guide surface after reflection from the reflective end into optical windows in output directions distributed in a lateral direction to the normal to the first guide surface that are dependent on the input positions.

An aspect of the present disclosure is concerned with controlling the lateral luminance distribution for light outputted from the waveguide and directed into the viewing windows, typically through a spatial light modulator when the directional backlight forms part of a display device.

According to an aspect of the present disclosure, there is provided a directional backlight comprising: a waveguide having an input end; and an array of light sources disposed at different input positions in a lateral direction across the input end of the waveguide. The waveguide may further comprises first and second, opposed guide surfaces for guiding light along the waveguide, and a reflective end facing the input end for reflecting input light from the input sources back through the waveguide. The waveguide is arranged to direct input light from the light sources as output light through the first guide surface after reflection from the reflective end into optical windows in output directions distributed in a lateral direction to the normal to the first guide surface that are dependent on the input positions. The directional backlight is arranged such that the input light in the waveguide from the respective light sources have distributions of luminous intensity laterally by angle that vary with the input position of the light sources in the lateral direction by increasing in width with distance from the optical axis of the waveguide.

In operation, the angular distribution of luminous intensity of the respective light sources may be mapped to lateral intensity distribution across the width of the reflective end. Such lateral intensity distribution may further be mapped to a lateral luminance distribution for light outputted from the waveguide and directed through a spatial light modulator to the optical windows. The variance in the mapping from (a) luminous intensity distribution to (b) lateral brightness distribution, depending on the lateral position of the light source may be controlled. Advantageously variations in the lateral luminance distribution as an observer moves lateral position with respect to the display are reduced. The display brightness, uniformity and the range of lateral viewing freedom may be increased. Display flicker for a moving observer in an observer tracking system may be reduced.

Advantageously, the variation of display luminance with viewing angle may vary in a manner to minimize visibility of luminance changes with viewing angles, and so that light from the light sources is efficiently directed to the reflective end, increasing display efficiency and reducing power consumption and cost.

The desired distributions of luminous intensity laterally by angle may be achieved by provision of an optical structure arranged between the light sources and the waveguide. Such an optical structure may change the change the distributions of luminous intensity laterally by angle of the light output from the respective light sources. Such an optical structure may be formed by the input end of the waveguide and/or by an additional optical element. In either of those cases, the optical structure may comprise a field lens surface having positive optical power, or may be a non-imaging structure, for example an array of facets or a light-diffusing structure.

Further, the field optical element may be a non-imaging optic modified to produce a variation in distribution direction based on the position of the light emitting element relative to the center of the waveguide. The non-imaging optic may be arranged to transfer light energy from the light emitting element to the width of the reflective end without forming an image of the light emitting element at the reflective end. Advantageously, the distribution of light at the reflective end can be made uniform and independent of structure of light emission from the light emitting element and may achieve increased efficiency and improved window uniformity, thus reducing flicker for a moving observer. Further, the distribution of light at the non-imaging optic exit surface can be made uniform and independent of structure of light emission from the light emitting element, including structure in illuminance and color. Further, light can be efficiently collected by the non-imaging optic, reducing cost, improving energy efficiency and increasing brightness. Further, a light emitting element can be selected to closely match the etendue of the optical waveguide (in at least one plane), and the non-imaging optic can provide an area and angle transforming function that maintains etendue, thus improving energy efficiency while reducing cost and maintaining or increasing brightness. Further the numerical aperture of the waveguide can be reduced so that aberrational performance can be improved, increasing viewing range in an autostereoscopic display.

In other, related aspects, the present disclosure relates to improvement of illumination uniformity of imaging directional backlights. Illumination uniformity from directional backlights may vary as a function of eye position and may be caused primarily from non-ideal spatial and angular ray distributions emanating from the input surface of the system's waveguide. The nature of imaging backlight systems is to image the light distribution in this surface into the viewing window plane thus reproducing any non-uniformity. In a simple exemplary case, LED sources are simply placed against this surface leading to significant spatial non-uniformity by virtue of the LED packaging and physical spatial separation. In contrast, the angular distribution is often near uniform, having close to a Lambertian profile. Refraction however occurs on entering the waveguide and the resulting reduced angular spread may either be too small or off center or both to fill the opposing reflective end, which in the case of an optical valve, if curved and reflecting.

Described here are methods and apparatus for modification of these and other related non-ideal spatial and angular source distributions to improve illumination uniformity of imaging directional backlights.

According to a further aspect of the present disclosure, a directional illumination apparatus for use with an electronic display system includes a directional optical waveguide, an illuminator, and a plurality of non-imaging optical elements. The illuminator array has a plurality of illuminator elements. The plurality of non-imaging optical elements optically couples the directional optical waveguide to respective illuminator elements. Each non-imaging optical element directs light from the respective illuminator element into respective predetermined directional distributions within the directional optical waveguide.

According to another aspect of the present disclosure, a directional illumination apparatus for use with an electronic display system includes a directional optical waveguide, an illuminator, and a plurality of non-imaging optical elements. The directional optical waveguide has an exit face operable to illuminate a spatial light modulator. The illuminator array has a plurality of illuminator elements, and a non-imaging optical element optically couples the directional optical waveguide to at least one illuminator element. The non-imaging optical element directs light from the at least one illuminator element into a predetermined directional distribution within the directional optical waveguide, wherein the directional optical waveguide directs the light from the predetermined directional distribution through the exit face toward a predetermined zone.

According to yet another aspect of the present disclosure, a directional illumination apparatus for use with an electronic display system includes a directional optical waveguide, an illuminator array, and a field optical element. The directional optical waveguide has a near end and a reflecting far end, and a thickness of the waveguide at the reflecting end greater than a thickness at the near end. The illuminator array has a plurality of illuminator elements proximate the near end. The field optical element is located between the illuminator array and the directional optical waveguide, and is arranged to direct light from each of the illuminator elements into respective different directional distributions within the directional optical waveguide such that the directional distributions from each of the illuminator elements is substantially centered on the reflecting far end.

A field optical element may be an imaging lens located near the light emitting elements. Further, the field optical element may be an imaging lens located between the waveguide and non-imaging optical elements which collect light from the light emitting elements.

A uniform variation of distribution of luminous intensity laterally by angle may be achieved by the field optical element so that advantageously the variation of display luminance with viewing angle may vary in a manner to minimize visibility of luminance changes with viewing angles, and so that light from the light sources is efficiently directed to the reflective end, increasing display efficiency and reducing power consumption and cost.

Further, the field optical element may be a non-imaging optic modified to produce a variation in distribution direction based on the position of the light emitting element relative to the center of the waveguide. The non-imaging optic may be arranged to transfer light energy from the light emitting element to the width of the reflective end without forming an image of the light emitting element at the reflective end. Advantageously, the distribution of light at the reflective end can be made uniform and independent of structure of light emission from the light emitting element and may achieve increased efficiency and improved window uniformity, thus reducing flicker for a moving observer. Further, the distribution of light at the non-imaging optic exit surface can be made uniform and independent of structure of light emission from the light emitting element, including structure in illuminance and color. Further, light can be efficiently collected by the non-imaging optic, reducing cost, improving energy efficiency and increasing brightness. Further, a light emitting element can be selected to closely match the etendue of the optical waveguide (in at least one plane), and the non-imaging optic can provide an area and angle transforming function that maintains etendue, thus improving energy efficiency while reducing cost and maintaining or increasing brightness. Further the numerical aperture of the waveguide can be reduced so that aberrational performance can be improved, increasing viewing range in an autostereoscopic display.

Embodiments herein may provide an autostereoscopic display with large area and thin structure. Further, as will be described, the optical valves of the present disclosure may achieve thin optical components with large back working distances. Such components can be used in directional backlights, to provide directional displays including autostereoscopic displays. Further, embodiments may provide a controlled illuminator for the purposes of an efficient autostereoscopic display.

Embodiments of the present disclosure may be used in a variety of optical systems. The embodiment may include or work with a variety of projectors, projection systems, optical components, displays, microdisplays, computer systems, processors, self-contained projector systems, visual and/or audiovisual systems and electrical and/or optical devices. Aspects of the present disclosure may be used with practically any apparatus related to optical and electrical devices, optical systems, presentation systems or any apparatus that may contain any type of optical system. Accordingly, embodiments of the present disclosure may be employed in optical systems, devices used in visual and/or optical presentations, visual peripherals and so on and in a number of computing environments.

Before proceeding to the disclosed embodiments in detail, it should be understood that the disclosure is not limited in its application or creation to the details of the particular arrangements shown, because the disclosure is capable of other embodiments. Moreover, aspects of the disclosure may be set forth in different combinations and arrangements to define embodiments unique in their own right. Also, the terminology used herein is for the purpose of description and not of limitation.

Directional backlights offer control over the illumination emanating from substantially the entire output surface controlled typically through modulation of independent LED light sources arranged at the input aperture side of an optical waveguide. Controlling the emitted light directional distribution can achieve single person viewing for a security function, where the display can only be seen by a single viewer from a limited range of angles; high electrical efficiency, where illumination is only provided over a small angular directional distribution; alternating left and right eye viewing for time sequential stereoscopic and autostereoscopic display; and low cost.

These and other advantages and features of the present disclosure will become apparent to those of ordinary skill in the art upon reading this disclosure in its entirety.

## BRIEF DESCRIPTION OF THE DRAWINGS

Embodiments are illustrated by way of example in the accompanying FIGURES, in which like reference numbers indicate similar parts, and in which:

FIGURE 1A is a schematic diagram illustrating a front view of light propagation in one embodiment of a directional display device, in accordance with the present disclosure;

**FIGURE 1B** is a schematic diagram illustrating a side view of light propagation in one embodiment of directional display device of FIGURE 1A, in accordance with the present disclosure;

**FIGURE 2A** is a schematic diagram illustrating in a top view of an optical valve apparatus propagation of light in a directional display device, in accordance with the present disclosure;

**FIGURE 2B** is a schematic diagram illustrating light propagation in a side view of the directional display device of FIGURE 2A, in accordance with the present disclosure;

**FIGURE 2C** is a schematic diagram illustrating light propagation in a side view of the directional display device of FIGURE 2A, in accordance with the present disclosure;

**FIGURE 3** is a schematic diagram illustrating in side view, a directional display device, in accordance with the present disclosure;

**FIGURE 4A** is schematic diagram illustrating in front view, generation of a viewing window in a directional display device and including curved light extraction features, in accordance with the present disclosure;

**FIGURE 4B** is a schematic diagram illustrating in front view, generation of a first and a second viewing window in a directional display device and including curved light extraction features, in accordance with the present disclosure;

**FIGURE 5** is a schematic diagram illustrating generation of a first viewing window in a directional display device including linear light extraction features, in accordance with the present disclosure;

**FIGURE 6A** is a schematic diagram illustrating one embodiment of the generation of a first viewing window in a time multiplexed imaging directional display device in a first time slot, in accordance with the present disclosure;

**FIGURE 6B** is a schematic diagram illustrating another embodiment of the generation of a second viewing window in a time multiplexed directional display device in a second time slot, in accordance with the present disclosure;

**FIGURE 6C** is a schematic diagram illustrating another embodiment of the generation of a first and a second viewing window in a time multiplexed directional display device, in accordance with the present disclosure;

**FIGURE 7** is a schematic diagram illustrating an observer tracking autostereoscopic display apparatus including a time multiplexed directional display device, in accordance with the present disclosure;

**FIGURE 8** is a schematic diagram illustrating a multi-viewer directional display device, in accordance with the present disclosure;

**FIGURE 9** is a schematic diagram illustrating a privacy directional display device, in accordance with the present disclosure;

**FIGURE 10** is a schematic diagram illustrating in side view, the structure of a time multiplexed directional display device, in accordance with the present disclosure;

**FIGURE 11A** is a schematic diagram illustrating a front view of a wedge type directional backlight, in accordance with the present disclosure;

**FIGURE 11B** is a schematic diagram illustrating a side view of a wedge type directional backlight, in accordance with the present disclosure;

**FIGURE 11C** is a schematic diagram illustrating a directional display apparatus comprising a display device and a control system;

**FIGURE 12A** is a schematic cross-sectional diagram illustrating a stepped waveguide in the x-z plane, in accordance with the present disclosure;

**FIGURE 12B** is a schematic diagram illustrating a simplified optical model of the stepped waveguide of FIGURE 12 A where the extraction features have been combined into a single reflection surface and the TIR faces are combined into two surfaces for analysis purposes, in accordance with the present disclosure;

**FIGURE 13A** is a schematic diagram illustrating a top view of a directional backlight comprising a waveguide and input light sources, and also input non-imaging optics (NIOs), in the *x-y* plane, in accordance with the present disclosure;

**FIGURE 13B** is a schematic diagram illustrating a top view of a directional backlight, in accordance with the present disclosure;

**FIGURES 14A** and **14B** are schematic diagrams respectively showing air and dielectric-filled non-imaging optics, in accordance with the present disclosure;

**FIGURES 15A** and **15B** are schematic diagrams illustrating side views of exemplary tapered light pipes, in accordance with the present disclosure;

**FIGURES 16A-16E** are schematic diagrams illustrating various exemplary embodiments of compound concentrators, in accordance with the present disclosure;

**FIGURE 17** is a schematic diagram showing a perspective view of a directional backlight with air-spaced non-imaging optics, in accordance with the present disclosure;

**FIGURE 18** is a schematic diagram showing a perspective view of a directional backlight with optically coupled non-imaging optics, in accordance with the present disclosure;

**FIGURES 19A-19C** are schematic block diagrams illustrating several collection lens forms, in accordance with the present disclosure;

**FIGURE 20** is a schematic diagram illustrating a directional backlight with optically coupled collection lenses, in accordance with the present disclosure;

**FIGURES 21** - **22B** are schematic diagrams illustrating various light recycling optical arrangements for a light source, in accordance with the present disclosure;

**FIGURE 23** is a schematic diagram illustrating an exemplary asymmetric non-imaging optic (NIO), in accordance with the present disclosure;

**FIGURE 24** is a schematic diagram illustrating a directional backlight with asymmetric non-imaging optics, in accordance with the present disclosure;

**FIGURES 25A** and **25B** are schematic diagrams illustrating exemplary configurations for a directional backlight, each including a waveguide, a diffuser, and a block, in accordance with the present disclosure;

**FIGURE 26** is a schematic diagram illustrating a directional backlight having a diffuser at the exit face, in accordance with the present disclosure;

**FIGURE 27A** is a schematic diagram illustrating a side view of a light pipe and non-imaging optic, in accordance with the present disclosure;

**FIGURE 27B** is a schematic diagram illustrating a perspective view of a light pipe and non-imaging optic, in accordance with the present disclosure;

**FIGURE 28A** is a schematic diagram illustrating an exemplary hemispherical lens implementation, in accordance with the present disclosure;

**FIGURE 28B** is a schematic diagram illustrating a system having a directional backlight having an array of light sources, an array of hemispherical immersion lenses and a stepped waveguide, in accordance with the present disclosure;

**FIGURE 28C** is a schematic diagram illustrating of another exemplary LED package, including a light source and a hemi-cylindrical lens, in accordance with the present disclosure;

**FIGURE 29A** is a schematic diagram illustrating a directional backlight having another hemispherical lens implementation, in accordance with the present disclosure;

**FIGURE 29B** is a schematic diagram illustrating a directional backlight having another hemispherical lens implementation, in accordance with the present disclosure;

**FIGURE 30** is a schematic diagram of an illuminator arrangement illustrating a phosphor or quantum dot coated non-imaging optic, in accordance with the present disclosure;

**FIGURES 31A** - **31C** are schematic diagrams illustrating various exemplary embodiments of directional backlights including integrating cavities and light recycling apparatus, in accordance with the present disclosure;

**FIGURES 32A** and **32B** are schematic diagrams illustrating two perspective views of an etendue shifting optical system, in accordance with the present disclosure;

**FIGURE 33** is a schematic diagram illustrating a portrait packing scheme for LED sources for improving spatial uniformity, in accordance with the present disclosure;

**FIGURE 34** is a graph showing an emission profile of LED emission against horizontal position, relating to the exemplary embodiment of Figure 33, in accordance with the present disclosure;

**FIGURE 35** is a schematic diagram illustrating an alternative LED placement for improved spatial uniformity, in accordance with the present disclosure;

**FIGURE 36** is a graph showing an emission profile of LED emission against horizontal position, relating to the exemplary embodiment of FIGURE 35, in accordance with the present disclosure;

**FIGURE 37** is a schematic diagram illustrating a dual array placement scheme in which dual chip LED packages are used for improved uniformity, in accordance with the present disclosure;

**FIGURE 38** is a graph showing an emission profile of LED emission against horizontal position, relating to the exemplary embodiment of Figure 37, in accordance with the present disclosure;

**FIGURE 39** is a schematic diagram illustrating a slanted packing scheme for improved spatial uniformity, in accordance with the present disclosure;

**FIGURE 40** is a schematic diagram illustrating an LED array where emitter chips are packaged in pairs, in accordance with the present disclosure;

**FIGURE 41A** is a schematic diagram illustrating an LED array where physically small emitter chips are addressed in pairs, in accordance with the present disclosure;

**FIGURE 41B** is a schematic diagram illustrating an LED array using slanted packaging, in accordance with the present disclosure;

**FIGURE 42A** is a schematic diagram illustrating a cross section of an LED package with reduced source to source gap, in accordance with the present disclosure;

**FIGURE 42B** is a schematic diagram illustrating a cross section of an alternative LED package with reduced source to source gap, in accordance with the present disclosure;

**FIGURE 43** is a schematic perspective diagram illustrating a shared non-imaging optical element arranged at the input to a waveguide of a directional backlight for improved input uniformity, in accordance with the present disclosure;

**FIGURE 44** is a schematic perspective diagram illustrating another shared non-imaging optical element arranged at the input to a waveguide of a directional backlight for improved input uniformity, in accordance with the present disclosure;

**FIGURE 45** is a schematic perspective diagram illustrating separated LED sources with cuboid non-imaging optical elements arranged at the input to a waveguide of a directional backlight, in accordance with the present disclosure;

**FIGURE 46** is a schematic perspective diagram illustrating separated LED sources with trapezoid sided non-imaging optical elements arranged at the input to a waveguide of a directional backlight, in accordance with the present disclosure;

**FIGURE 47** is a schematic perspective diagram illustrating separated LED sources in landscape orientation with trapezoid sided non-imaging optical elements arranged at the input to a waveguide of a directional backlight, in accordance with the present disclosure;

**FIGURE 48A** is a schematic diagram illustrating a top view of a directional backlight including a waveguide having light redirecting input facets arranged to achieve increased display illumination uniformity, in accordance with the present disclosure;

**FIGURE 48B** is a schematic diagram illustrating a top view of part of a directional backlight including a waveguide having light redirecting input facets arranged to achieve increased display illumination uniformity, in accordance with the present disclosure;

**FIGURE 49** is a schematic diagram illustrating a front view of part of an input coupling element for a directional waveguide of a directional backlight, in accordance with the present disclosure;

**FIGURE 50A** is a schematic diagram illustrating a front view of a directional backlight including a waveguide including an input coupling element, in accordance with the present disclosure;

**FIGURE 50B** is a schematic diagram illustrating a front view of a directional backlight including a waveguide including an array of input facets on the input end, in accordance with the present disclosure;

**FIGUREs 50C-50E** are schematic diagrams illustrating a front view of a detail of a directional backlight including a waveguide including an array of input facets on the input end, in accordance with the present disclosure;

**FIGURE 51A** is a schematic diagram illustrating a top view of a directional backlight including a waveguide comprising a planar input end, in accordance with the present disclosure;

**FIGURE 51B** is a schematic diagram illustrating a top view of a directional backlight including a waveguide comprising light redirecting input facets on the input end arranged to achieve increased display illumination uniformity, in accordance with the present disclosure;

**FIGURE 52A** is a schematic diagram illustrating a top view of a directional backlight comprising a waveguide and a light redirecting input diffuser arranged to achieve increased display illumination uniformity, in accordance with the present disclosure;

**FIGURE 52B** is a schematic diagram illustrating a side view of a diffuser of FIGURE 52A, in accordance with the present disclosure;

**FIGURE 52C** is a schematic diagram illustrating a side view of a diffuser of FIGURE 52B, in accordance with the present disclosure;

**FIGURE 52D** is a schematic diagram illustrating a side view of a diffractive element arranged to achieve a variation of luminous intensity variation with lateral position across the input aperture, in accordance with the present disclosure;

**FIGURE 52E** is a schematic diagram illustrating a front view of a directional backlight including a waveguide whose input end comprises a high angle diffuser, in accordance with the present disclosure;

**FIGURE 52F** is a schematic diagram illustrating a front view of the operation of a high angle diffuser, in accordance with the present disclosure;

**FIGURE 53A** is a schematic diagram illustrating a graph of luminous intensity distribution for light from a Lambertian light source in air and within a waveguide, in accordance with the present disclosure;

**FIGUREs 53B-D** are schematic diagrams illustrating graphs of luminous intensity distribution for light from light sources distributed in a lateral direction across the input end of the waveguide, in accordance with the present disclosure;

**FIGURE 53E** is a schematic diagram illustrating a graph of angular deflection of light from light sources against lateral position of the light source at the input end of a waveguide, in accordance with the present disclosure;

**FIGURES 54A -54C** and **FIGURE 55** are schematic diagrams illustrating various directional backlights employing a field lens, in accordance with the present disclosure;

**FIGURE 56** is a schematic diagram illustrating a top view of a directional backlight including a waveguide having a planar input end and inclined light sources, in accordance with the present disclosure;

**FIGURE 57** is a schematic diagram illustrating an edge view of a directional backlight including a waveguide having a planar input end and inclined light sources, in accordance with the present disclosure;

**FIGURE 58A** is a schematic diagram illustrating a top view of light propagation in a directional backlight including a waveguide whose input end comprises angled input facets and inclined light sources, in accordance with the present disclosure;

**FIGURE 58B** is a schematic diagram illustrating a side view of a directional backlight including a waveguide whose input end comprises angled input facets and inclined light sources , in accordance with the present disclosure;

**FIGURE 58C** is a schematic diagram illustrating an edge view of a directional backlight including a waveguide whose input end comprises angled input facets and inclined light sources, in accordance with the present disclosure;

**FIGURE 59** is a schematic diagram illustrating a directional backlight in which the polarization of light emitted by a single source is locally recovered, in accordance with the present disclosure;

FIGURE 60 is a schematic diagram illustrating the illumination and light sources of FIGURE 59 in further detail, in accordance with the present disclosure;

FIGURE 61 is a schematic diagram illustrating another directional backlight in which the polarization of light emitted by a single source is locally recovered, in accordance with the present disclosure;

FIGURE 62 is a schematic diagram illustrating the illumination and light sources of FIGURE 61 in further detail, in accordance with the present disclosure;

FIGURE 63 is a schematic diagram illustrating another directional backlight where the polarization of light emitted by a single source is locally recovered, in accordance with the present disclosure;

FIGURE 64 is a schematic diagram illustrating the illumination and light sources of FIGURE 63 in further detail, in accordance with the present disclosure; and

FIGURE 65 is a schematic diagram illustrating a detail of a directional backlight including a polarised input light source array, in accordance with the present disclosure.

## DETAILED DESCRIPTION

Time multiplexed autostereoscopic displays can advantageously improve the spatial resolution of autostereoscopic display by directing light from all of the pixels of a spatial light modulator to a first viewing window in a first time slot, and all of the pixels to a second viewing window in a second time slot. Thus an observer with eyes arranged to receive light in first and second viewing windows will see a full resolution image across the whole of the display over multiple time slots. Time multiplexed displays can advantageously achieve directional illumination by directing an illuminator array through a substantially transparent time multiplexed spatial light modulator using directional optical elements, wherein the directional optical elements substantially form an image of the illuminator array in the window plane.

The uniformity of the viewing windows may be advantageously independent of the arrangement of pixels in the spatial light modulator. Advantageously, such displays can provide observer tracking displays which have low flicker, with low levels of cross talk for a moving observer.

To achieve high uniformity in the window plane, it is desirable to provide an array of illumination elements that have a high spatial uniformity. The illuminator elements of the time sequential illumination system may be provided, for example, by pixels of a spatial light modulator with size approximately 100 micrometers in combination with a lens array. However, such pixels suffer from similar difficulties as for spatially multiplexed displays. Further, such devices may have low efficiency and higher cost, requiring additional display components.

High window plane uniformity can be conveniently achieved with macroscopic illuminators, for example, an array of LEDs in combination with homogenizing and diffusing optical elements that are typically of size 1 mm or greater. However, the increased size of the illuminator elements means that the size of the directional optical elements increases proportionately. For example, a 16 mm wide illuminator imaged to a 65 mm wide viewing window may require a 200 mm back working distance. Thus, the increased thickness of the optical elements can prevent useful application, for example, to mobile displays, or large area displays.

Addressing the aforementioned shortcomings, optical valves as described in commonly-owned U.S. Patent Application No. 13/300,293 advantageously can be arranged in combination with fast switching transmissive spatial light modulators to achieve time multiplexed autostereoscopic illumination in a thin package while providing high resolution images with flicker free observer tracking and low levels of cross talk. Described is a one dimensional array of viewing positions, or windows, that can display different images in a first, typically horizontal, direction, but contain the same images when moving in a second, typically vertical, direction.

Conventional non-imaging display backlights commonly employ optical waveguides and have edge illumination from light sources such as LEDs. However, it should be appreciated that there are many fundamental differences in the function, design, structure, and operation between such conventional non-imaging display backlights and the imaging directional backlights discussed in the present disclosure.

Generally, for example, in accordance with the present disclosure, imaging directional backlights are arranged to direct the illumination from multiple light sources through a display panel to respective multiple viewing windows in at least one axis. Each viewing window is substantially formed as an image in at least one axis of a light source by the imaging system of the imaging directional backlight. An imaging system may be formed between multiple light sources and the respective window images. In this manner, the light from each of the multiple light sources is substantially not visible for an observer's eye outside of the respective viewing window.

In contradistinction, conventional non-imaging backlights or light guiding plates (LGPs) are used for illumination of 2D displays. See, e.g., Kälil Käläntär et al., Backlight Unit With Double Surface Light Emission, J. Soc. Inf. Display, Vol. 12, Issue 4, pp. 379-387 (Dec. 2004). Non-imaging backlights are typically arranged to direct the illumination from multiple light sources through a display panel into a substantially common viewing zone for each of the multiple light sources to achieve wide viewing angle and high display uniformity. Thus non-imaging backlights do not form viewing windows. In this manner, the light from each of the multiple light sources may be visible for an observer's eye at substantially all positions across the viewing zone. Such conventional non-imaging backlights may have some directionality, for example, to increase screen gain compared to Lambertian illumination, which may be provided by brightness enhancement films such as BEF™ from 3M. However, such directionality may be substantially the same for each of the respective light sources. Thus, for these reasons and others that should be apparent to persons of ordinary skill, conventional non-imaging backlights are different to imaging directional backlights. Edge lit non-imaging backlight illumination structures may be used in liquid crystal display systems such as those seen in 2D Laptops, Monitors and TVs. Light propagates from the edge of a lossy waveguide which may include sparse features; typically local indentations in the surface of the guide which cause light to be lost regardless of the propagation direction of the light.

As used herein, an optical valve is an optical structure that may be a type of light guiding structure or device referred to as, for example, a light valve, an optical valve directional backlight, and a valve directional backlight ("v-DBL"). In the present disclosure, optical valve is different to a spatial light modulator (which is sometimes referred to as a "light valve"). One example of an imaging directional backlight is an optical valve that may employ a folded optical system. Light may propagate substantially without loss in one direction through the optical valve, may be incident on an imaging reflector, and may counter-propagate such that the light may be extracted by reflection off tilted light extraction features, and directed to viewing windows as described in Pat. App. Ser. No. 13/300,293, which is herein incorporated by reference in its entirety.

As used herein, examples of an imaging directional backlight include a stepped waveguide imaging directional backlight, a folded imaging directional backlight, a wedge type directional backlight, or an optical valve.

Additionally, as used herein, a stepped waveguide imaging directional backlight may be an optical valve. A stepped waveguide is a waveguide for an imaging directional backlight comprising a waveguide for guiding light, further comprising: a first light guiding surface; and a second light guiding surface, opposite the first light guiding surface, further comprising a plurality of light guiding features interspersed with a plurality of extraction features arranged as steps.

Moreover, as used, a folded imaging directional backlight may be at least one of a wedge type directional backlight, or an optical valve.

In operation, light may propagate within an exemplary optical valve in a first direction from an input end to a reflective end and may be transmitted substantially without loss. Light may be reflected at the reflective end and propagates in a second direction substantially opposite the first direction. As the light propagates in the second direction, the light may be incident on light extraction features, which are operable to redirect the light outside the optical valve. Stated differently, the optical valve generally allows light to propagate in the first direction and may allow light to be extracted while propagating in the second direction.

The optical valve may achieve time sequential directional illumination of large display areas. Additionally, optical elements may be employed that are thinner than the back working distance of the optical elements to direct light from macroscopic illuminators to a nominal window plane. Such displays may use an array of light extraction features arranged to extract light counter propagating in a substantially parallel waveguide.

Thin imaging directional backlight implementations for use with LCDs have been proposed and demonstrated by 3M, for example U.S. Patent No. 7,528,893; by Microsoft, for example U.S. Patent No. 7,970,246 which may be referred to herein as a "wedge type directional backlight;" by RealD, for example U.S. Patent Application No. 13/300,293 which may be referred to herein as an "optical valve" or "optical valve directional backlaght."

The present disclosure provides stepped waveguide imaging directional backlights in which light may reflect back and forth between the internal faces of, for example, a stepped waveguide which may include a first guide surface and a second guide surface comprising a plurality of light extraction features and intermediate regions. As the light travels along the length of the stepped waveguide, the light may not substantially change angle of incidence with respect to the first and second guide surfaces and so may not reach the critical angle of the medium at these internal surfaces. Light extraction may be advantageously achieved by a light extraction features which may be facets of the second guide surface (the step "risers") that are inclined to the intermediate regions (the step "treads"). Note that the light extraction features may not be part of the light guiding operation of the stepped waveguide, but may be arranged to provide light extraction from the structure. By contrast, a wedge type imaging directional backlight may allow light to guide within a wedge profiled waveguide having continuous internal surfaces. Thus the stepped waveguide (optical valve) is thus not a wedge type imaging directional backlight.

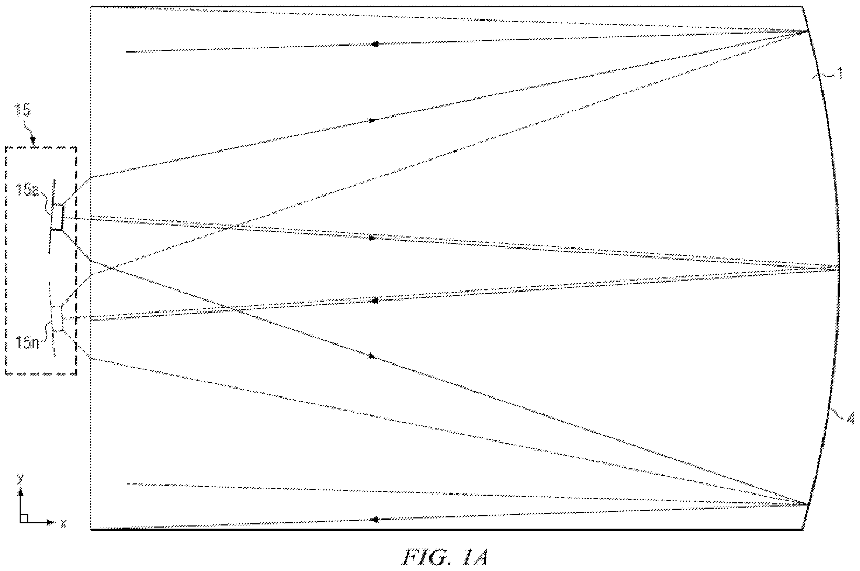

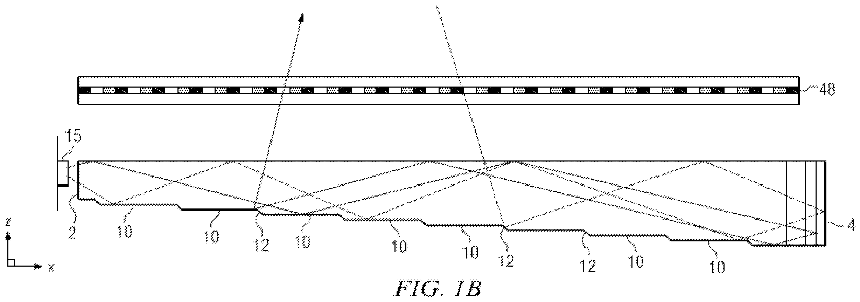

**FIGURE 1A** is a schematic diagram illustrating a front view of light propagation in one embodiment of a directional display device, and **FIGURE 1B** is a schematic diagram illustrating a side view of light propagation in the directional display device of FIGURE 1A.

FIGURE 1A illustrates a front view in the *xy* plane of an optical valve, and includes an illuminator array 15 which may be used to illuminate a stepped waveguide 1. Illuminator array 15 includes illuminator elements 15a through illuminator element 15n (where n is an integer greater than one). In one example, the stepped waveguide 1 of FIGURE 1A may be a stepped, display sized waveguide 1. Illuminator elements 15a through 15n form light sources and may be light emitting diodes (LEDs). Although LEDs are discussed herein as illuminator elements 15a - 15n, other light sources may be used such as, but not limited to, diode sources, semiconductor sources, laser sources, local field emission sources, organic emitter arrays, and so forth. Additionally, FIGURE 1B illustrates a side view in the *xz* plane, and includes illuminator array 15, SLM (spatial light modulator) 48, extraction features 12, guiding features 10, and stepped waveguide 1, arranged as shown. The side view provided in FIGURE 1B is an alternative view of the front view shown in FIGURE 1A. Accordingly, the illuminator array 15 of FIGURES 1A and 1B corresponds to one another and the stepped waveguide 1 of FIGURES 1A and 1B may correspond to one another.

Further, in FIGURE 1B, the stepped waveguide 1 may have an input end 2 that is thin and a reflective end 4 that is thick. Thus the waveguide 1 extends between the input end 2 that receives input light and the reflective end 4 that reflects the input light back through the waveguide 1. The length of the input end 2 in a lateral direction across the waveguide is greater than the height of the input end 2. The illuminator elements 15a - 15n are disposed at different input positions in a lateral direction across the input end 2.

The waveguide 1 has first and second, opposed guide surfaces extending between the input end 2 and the reflective end 4 for guiding light forwards and back along the waveguide 1 by total internal reflection. The first guide surface is planar. The second guide surface has a plurality of light extraction features 12 facing the reflective end 4 and inclined to reflect at least some of the light guided back through the waveguide 1 from the reflective end in directions that break the total internal reflection at the first guide surface and allow output through the first guide surface, for example, upwards in FIGURE 1B, that is supplied to the SLM 48.

In this example, the light extraction features 12 are reflective facets, although other reflective features could be used. The light extraction features 12 do not guide light through the waveguide, whereas the intermediate regions of the second guide surface intermediate the light extraction features 12 guide light without extracting it. Those regions of the second guide surface are planar and may extend parallel to the first guide surface, or at a relatively low inclination. The light extraction features 12 extend laterally to those regions so that the second guide surface has a stepped shape including the light extraction features 12 and intermediate regions. The light extraction features 12 are oriented to reflect light from the light sources, after reflection from the reflective end 4, through the first guide surface.

The light extraction features 12 are arranged to direct input light from different input positions in the lateral direction across the input end in different directions relative to the first guide surface that are dependent on the input position. As the illumination elements 15a-15n are arranged at different input positions, the light from respective illumination elements 15a-15n is reflected in those different directions. In this manner, each of the illumination elements 15a-15n directs light into a respective optical window in output directions distributed in the lateral direction in dependence on the input positions.

The lateral direction across the input end 2 in which the input positions are distributed corresponds with regard to the output light to a lateral direction to the normal to the first guide surface. The lateral directions as defined at the input end 2 and with regard to the output light remain parallel in this embodiment where the deflections at the reflective end 4 and the first guide surface are generally orthogonal to the lateral direction.. Under the control of a control system, the illuminator elements 15a - 15n may be selectively operated to direct light into a selectable optical window.

In the present disclosure an optical window may correspond to the image of a single light source in the window plane, being a nominal plane in which optical windows form across the entirety of the display device. Alternatively, an optical windows may correspond to the image of a groups of light sources that are driven together. Advantageously, such groups of light sources may increase uniformity of the optical windows of the array 121.

By way of comparison, a viewing window is a region in the window plane wherein light is provided comprising image data of substantially the same image from across the display area. Thus a viewing window may be formed from a single optical window or from plural optical windows, under the control of the control system..

The SLM 48 extends across the waveguide is transmissive and modulates the light passing therethrough. Although the SLM 48 may be a liquid crystal display (LCD) but this is merely by way of example, and other spatial light modulators or displays may be used including LCOS, DLP devices, and so forth, as this illuminator may work in reflection. In this example, the SLM 48 is disposed across the first guide surface of the waveguide and modulates the light output through the first guide surface after reflection from the light extraction features 12.

The operation of a directional display device that may provide a one dimensional array of viewing windows is illustrated in front view in FIGURE 1A, with its side profile shown in FIGURE 1B. In operation, in FIGURES 1A and 1B, light may be emitted from an illuminator array 15, such as an array of illuminator elements 15a through 15n, located at different positions, y, along the surface of input end 2, x=0, of the stepped waveguide 1. The light may propagate along +x in a first direction, within the stepped waveguide 1, while at the same time, the light may fan out in the *xy* plane and upon reaching the reflective end 4 that is curved to have positive optical power, may substantially or entirely fill the reflective end 4. While propagating, the light may spread out to a set of angles in the *xz* plane up to, but not exceeding the critical angle of the guide material. The extraction features 12 that link the guiding features 10 of the second guide surface of the stepped waveguide 1 may have a tilt angle greater than the critical angle and hence may be missed by substantially all light propagating along +x in the first direction, ensuring the substantially lossless forward propagation.

Continuing the discussion of FIGURES 1A and 1B, the reflective end 4 of the stepped waveguide 1 may be made reflective, typically by being coated with a reflective material such as, for example, silver, although other reflective techniques may be employed. Light may therefore be redirected in a second direction, back down the guide in the direction of -*x* and may be substantially collimated in the *xy* or display plane. The angular spread may be substantially preserved in the *xz* plane about the principal propagation direction, which may allow light to hit the riser edges and reflect out of the guide. In an embodiment with approximately 45 degree tilted extraction features 12, light may be effectively directed approximately normal to the *xy* display plane with the xz angular spread substantially maintained relative to the propagation direction. This angular spread may be increased when light exits the stepped waveguide 1 through refraction, but may be decreased somewhat dependent on the reflective properties of the extraction features 12.

In some embodiments with uncoated extraction features 12, reflection may be reduced when total internal reflection (TIR) fails, squeezing the *xz* angular profile and shifting off normal. However, in other embodiments having silver coated or metallized extraction features, the increased angular spread and central normal direction may be preserved. Continuing the description of the embodiment with silver coated extraction features, in the *xz* plane, light may exit the stepped waveguide 1 approximately collimated and may be directed off normal in proportion to the y-position of the respective illuminator element 15a - 15n in illuminator array 15 from the input edge center. Having independent illuminator elements 15a - 15n along the input end 2 then enables light to exit from the entire first guide surface 6 and propagate at different external angles, as illustrated in FIGURE 1A.

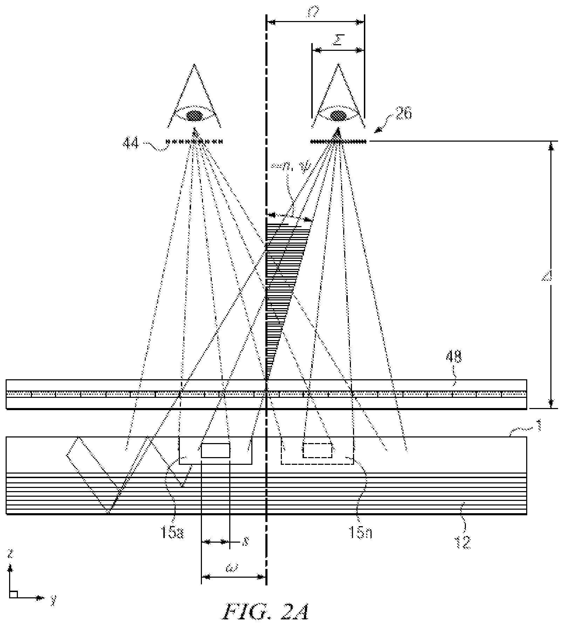

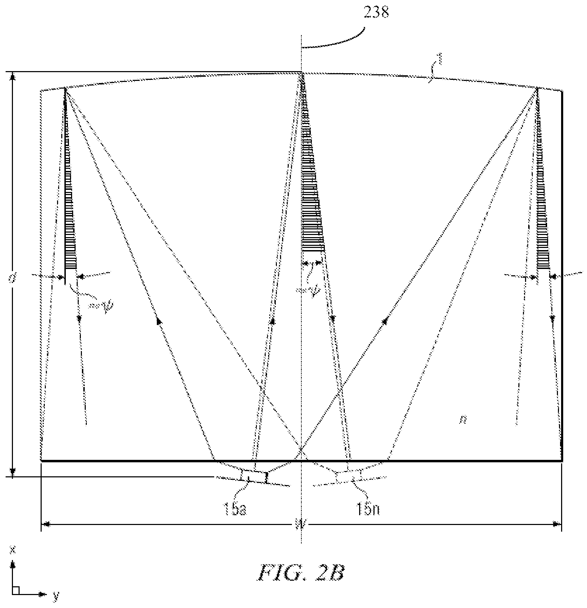

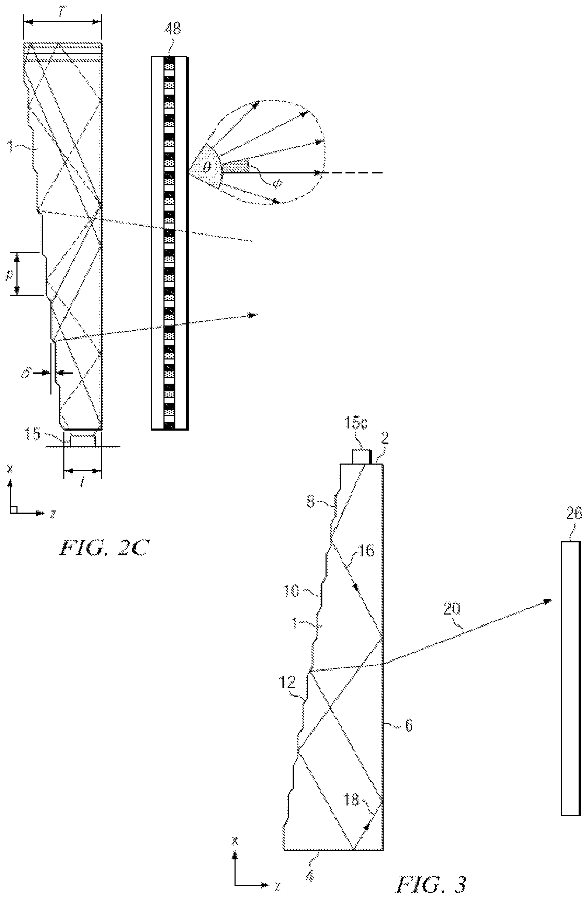

Illuminating a spatial light modulator (SLM) 48 such as a fast liquid crystal display (LCD) panel with such a device may achieve autostereoscopic 3D as shown in top view or *yz*-plane viewed from the illuminator array 15 end in **FIGURE 2A,** front view in **FIGURE 2B** and side view in **FIGURE 2C.** FIGURE 2A is a schematic diagram illustrating in a top view, propagation of light in a directional display device, FIGURE 2B is a schematic diagram illustrating in a front view, propagation of light in a directional display device, and FIGURE 2C is a schematic diagram illustrating in side view propagation of light in a directional display device. As illustrated in FIGURES 2A, 2B, and 2C, a stepped waveguide 1 may be located behind a fast (e.g., greater than 100Hz) LCD panel SLM 48 that displays sequential right and left eye images. In synchronization, specific illuminator elements 15a through 15n of illuminator array 15 (where n is an integer greater than one) may be selectively turned on and off, providing illuminating light that enters right and left eyes substantially independently by virtue of the system's directionality. In the simplest case, sets of illuminator elements of illuminator array 15 are turned on together, providing a one dimensional viewing window 26 or an optical pupil with limited width in the horizontal direction, but extended in the vertical direction, in which both eyes horizontally separated may view a left eye image, and another viewing window 44 in which a right eye image may primarily be viewed by both eyes, and a central position in which both the eyes may view different images. In this way, 3D may be viewed when the head of a viewer is approximately centrally aligned. Movement to the side away from the central position may result in the scene collapsing onto a 2D image.

The reflective end 4 may have positive optical power in the lateral direction across the waveguide. In embodiments in which typically the reflective end 4 has positive optical power, the optical axis may be defined with reference to the shape of the reflective end 4, for example being a line that passes through the centre of curvature of the reflective end 4 and coincides with the axis of reflective symmetry of the end 4 about the x-axis. In the case that the reflecting surface 4 is flat, the optical axis may be similarly defined with respect to other components having optical power, for example the light extraction features 12 if they are curved, or the Fresnel lens 62 described below. The optical axis 238 is typically coincident with the mechanical axis of the waveguide 1. In the present embodiments that typically comprise a substantially cylindrical reflecting surface at end 4, the optical axis 238 is a line that passes through the centre of curvature of the surface at end 4 and coincides with the axis of reflective symmetry of the side 4 about the x-axis. The optical axis 238 is typically coincident with the mechanical axis of the waveguide 1. The cylindrical reflecting surface at end 4 may typically comprise a spherical profile to optimize performance for on-axis and off-axis viewing positions. Other profiles may be used.

**FIGURE 3** is a schematic diagram illustrating in side view a directional display device. Further, FIGURE 3 illustrates additional detail of a side view of the operation of a stepped waveguide 1, which may be a transparent material. The stepped waveguide 1 may include an illuminator input end 2, a reflective end 4, a first guide surface 6 which may be substantially planar, and a second guide surface 8 which includes guiding features 10 and light extraction features 12. In operation, light rays 16 from an illuminator element 15c of an illuminator array 15 (not shown in FIGURE 3), that may be an addressable array of LEDs for example, may be guided in the stepped waveguide 1 by means of total internal reflection by the first guide surface 6 and total internal reflection by the guiding features 10 of the second guide surface 8, to the reflective end 4, which may be a mirrored surface. Although reflective end 4 may be a mirrored surface and may reflect light, it may in some embodiments also be possible for light to pass through reflective end 4.

Continuing the discussion of FIGURE 3, light ray 18 reflected by the reflective end 4 may be further guided in the stepped waveguide 1 by total internal reflection at the reflective end 4 and may be reflected by extraction features 12. Light rays 18 that are incident on extraction features 12 may be substantially deflected away from guiding modes of the stepped waveguide 1 and may be directed, as shown by ray 20, through the first guide surface 6 to an optical pupil that may form a viewing window 26 of an autostereoscopic display. The width of the viewing window 26 may be determined by at least the size of the illuminator, output design distance and optical power in the reflective end 4 and extraction features 12. The height of the viewing window may be primarily determined by the reflection cone angle of the extraction features 12 and the illumination cone angle input at the input end 2. Thus each viewing window 26 represents a range of separate output directions with respect to the surface normal direction of the SLM 48 that intersect with a plane at the nominal viewing distance.

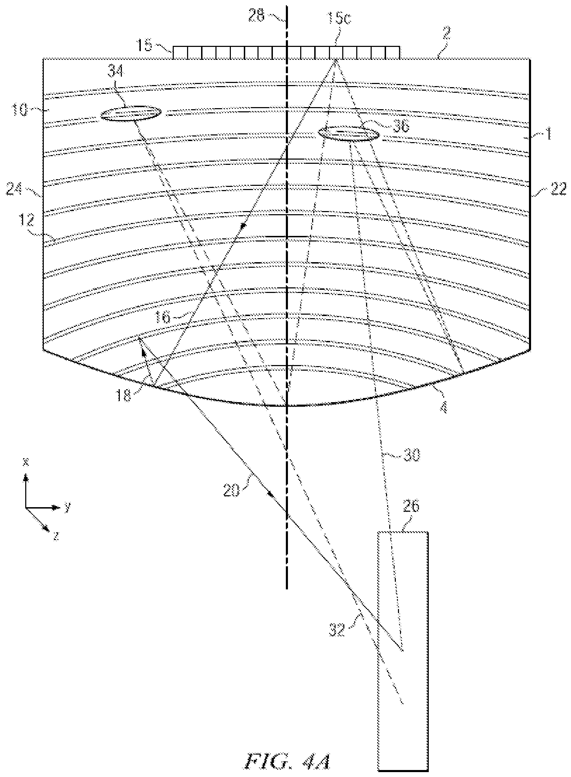

FIGURE 4A is a schematic diagram illustrating in front view a directional display device which may be illuminated by a first illuminator element and including curved light extraction features. In FIGURE 4A, the directional backlight may include the stepped waveguide 1 and the light source illuminator array 15. Further, FIGURE 4A shows in front view further guiding of light rays from illuminator element 15c of illuminator array 15, in the stepped waveguide 1. Each of the output rays are directed towards the same viewing window 26 from the respective illuminator 14. Thus light ray 30 may intersect the ray 20 in the window 26, or may have a different height in the window as shown by ray 32. Additionally, in various embodiments, sides 22, 24 of the optical valve may be transparent, mirrored, or blackened surfaces. Continuing the discussion of FIGURE 4A, light extraction features 12 may be elongate, and the orientation of light extraction features 12 in a first region 34 of the light directing second guide surface 8 (which second guide surface 8 is shown in FIGURE 3, but not shown in FIGURE 4A) may be different to the orientation of light extraction features 12 in a second region 36 of the guide surface 8.

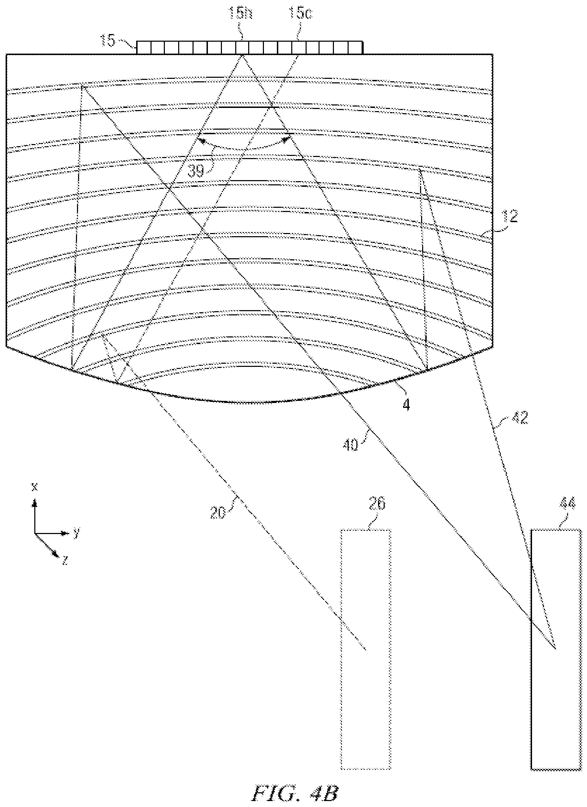

FIGURE 4B is a schematic diagram illustrating in front view a directional display device which may illuminated by a second illuminator element. Further, FIGURE 4B shows the light rays 40, 42 from a second illuminator element 15h of the illuminator array 15. The curvature of the reflective surface on the reflective end 4 and the light extraction features 12 cooperatively produce a second viewing window 44 laterally separated from the viewing window 26 with light rays from the illuminator element 15h.

Advantageously, the arrangement illustrated in FIGURE 4B may provide a real image of the illuminator element 15c at a viewing window 26 in which the real image may be formed by cooperation of optical power in reflective end 4 and optical power which may arise from different orientations of elongate light extraction features 12 between regions 34 and 36, as shown in FIGURE 4A. The arrangement of FIGURE 4B may achieve improved aberrations of the imaging of illuminator element 15c to lateral positions in viewing window 26. Improved aberrations may achieve an extended viewing freedom for an autostereoscopic display while achieving low cross talk levels.

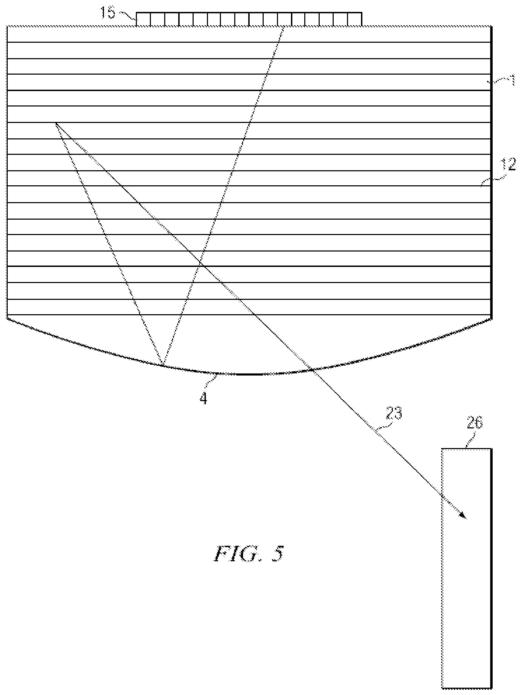

FIGURE 5 is a schematic diagram illustrating in front view an embodiment of a directional display device comprising a waveguide 1 having substantially linear light extraction features. Further, FIGURE 5 shows a similar arrangement of components to FIGURE 1 (with corresponding elements being similar), with one of the differences being that the light extraction features 12 are substantially linear and parallel to each other. Advantageously, such an arrangement may provide substantially uniform illumination across a display surface and may be more convenient to manufacture than the curved extraction features of FIGURE 4A and FIGURE 4B.

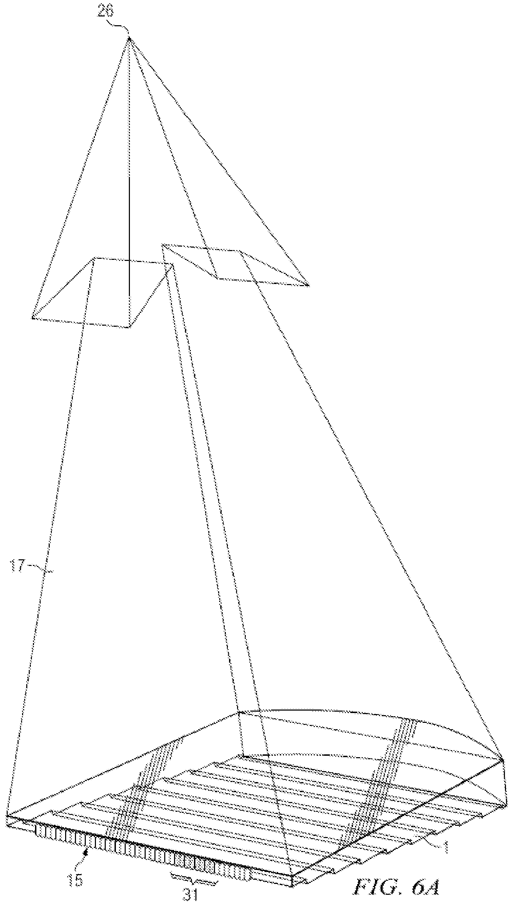

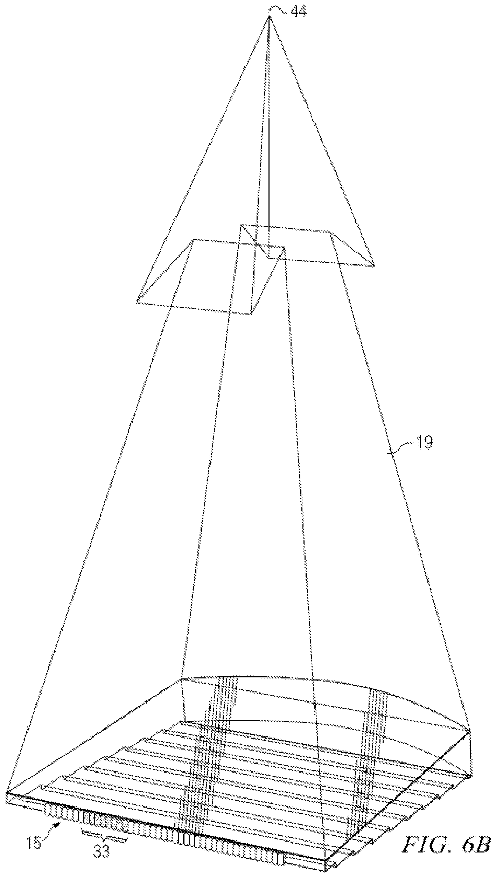

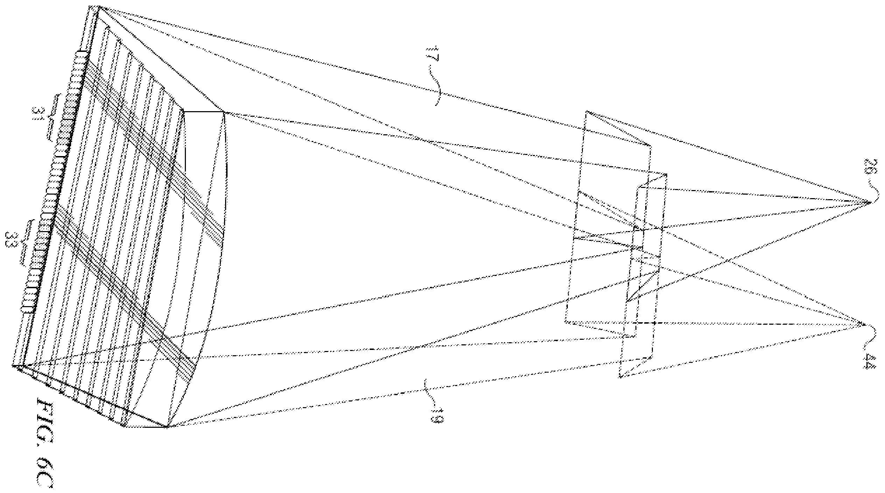

FIGURE 6A is a schematic diagram illustrating one embodiment of the generation of a first viewing window in a time multiplexed imaging directional display device in a first time slot, FIGURE 6B is a schematic diagram illustrating another embodiment of the generation of a second viewing window in a time multiplexed imaging directional display device in a second time slot, and FIGURE 6C is a schematic diagram illustrating another embodiment of the generation of a first and a second viewing window in a time multiplexed imaging directional display device. Further, FIGURE 6A shows schematically the generation of illumination window 26 from stepped waveguide 1. Illuminator element group 31 in illuminator array 15 may provide a light cone 17 directed towards a viewing window 26. FIGURE 6B shows schematically the generation of illumination window 44. Illuminator element group 33 in illuminator array 15 may provide a light cone 19 directed towards viewing window 44. In cooperation with a time multiplexed display, windows 26 and 44 may be provided in sequence as shown in FIGURE 6C. If the image on a SLM 48 (not shown in FIGURES 6A, 6B, 6C) is adjusted in correspondence with the light direction output, then an autostereoscopic image may be achieved for a suitably placed viewer. Similar operation can be achieved with all the directional backlights and directional display devices described herein. Note that illuminator element groups 31, 33 each include one or more illumination elements from illumination elements 15a to 15n, where n is an integer greater than one.

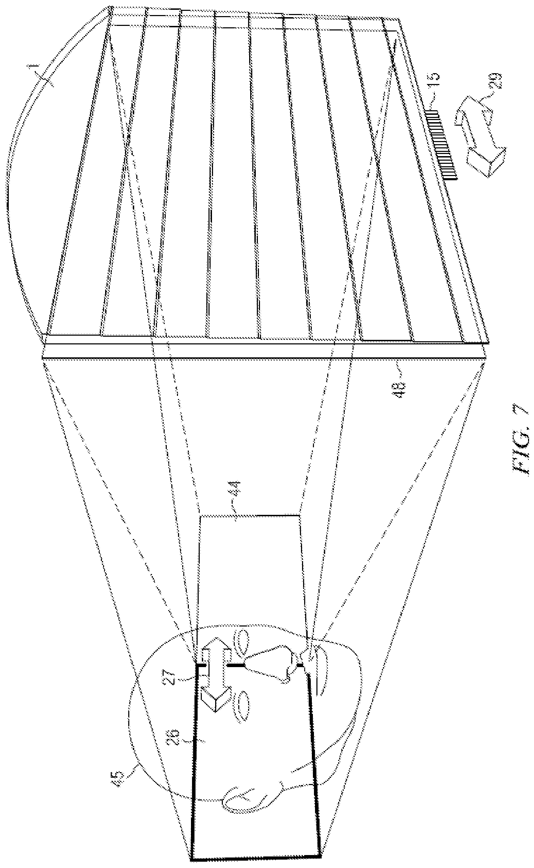

FIGURE 7 is a schematic diagram illustrating one embodiment of an observer tracking autostereoscopic display apparatus including a time multiplexed directional display device. As shown in FIGURE 7, selectively turning on and off illuminator elements 15a to 15n along axis 29 provides for directional control of viewing windows. The head 45 position may be monitored with a camera, motion sensor, motion detector, or any other appropriate optical, mechanical or electrical means, and the appropriate illuminator elements of illuminator array 15 may be turned on and off to provide substantially independent images to each eye irrespective of the head 45 position. The head tracking system (or a second head tracking system) may provide monitoring of more than one head 45, 47 (head 47 not shown in FIGURE 7) and may supply the same left and right eye images to each viewers' left and right eyes providing 3D to all viewers. Again similar operation can be achieved with all the directional backlights and directional display devices described herein.

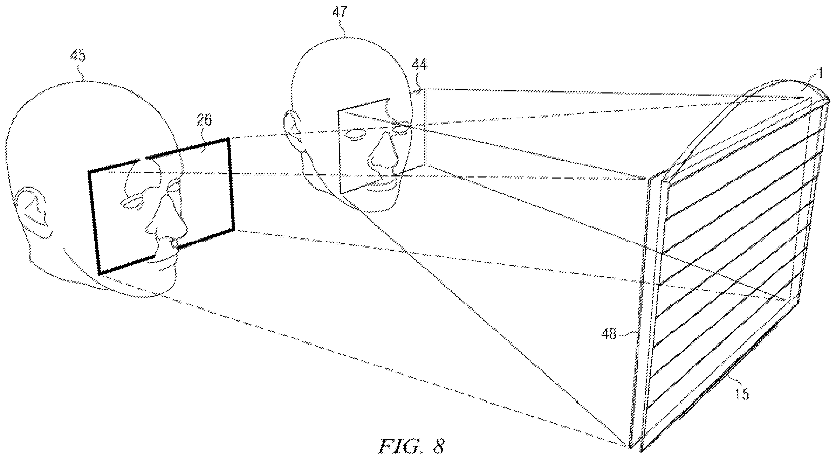

FIGURE 8 is a schematic diagram illustrating one embodiment of a multi-viewer directional display device which includes a directional backlight. As shown in FIGURE 8, at least two 2D images may be directed towards a pair of viewers 45, 47 so that each viewer may watch a different image on the SLM 48. The two 2D images of FIGURE 8 may be generated in a similar manner as described with respect to FIGURE 7 in that the two images would be displayed in sequence and in synchronization with sources whose light is directed toward the two viewers. One image is presented on the SLM 48 in a first phase, and a second image is presented on the SLM 48 in a second phase different from the first phase. In correspondence with the first and second phases, the output illumination is adjusted to provide first and second viewing windows 26, 44 respectively. An observer with both eyes in window 26 will perceive a first image while an observer with both eyes in window 44 will perceive a second image.

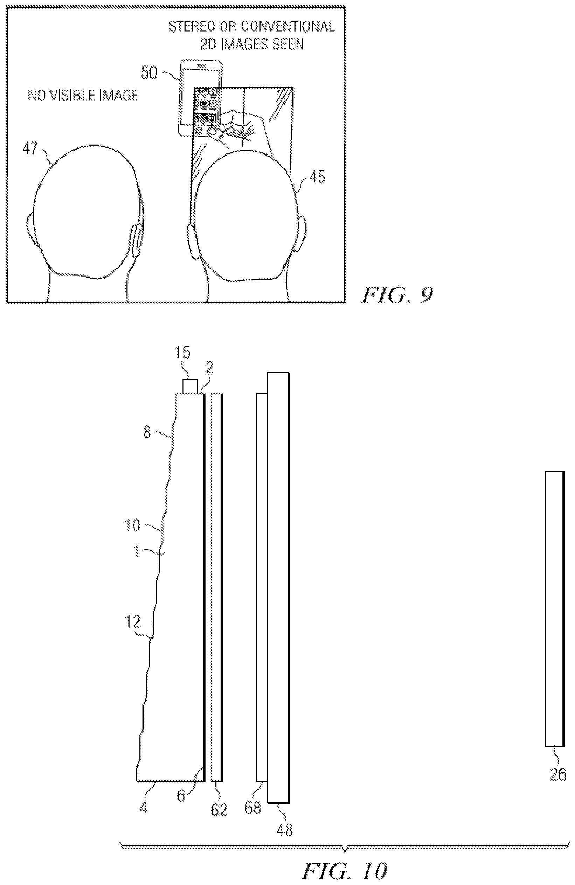

FIGURE 9 is a schematic diagram illustrating a privacy directional display device which includes a directional backlight. 2D image display systems may also utilize directional backlighting for security and efficiency purposes in which light may be primarily directed at the eyes of a first viewer 45 as shown in FIGURE 9. Further, as illustrated in FIGURE 9, although first viewer 45 may be able to view an image on device 50, light is not directed towards second viewer 47. Thus second viewer 47 is prevented from viewing an image on device 50. Each of the embodiments of the present disclosure may advantageously provide autostereoscopic, dual image or privacy display functions.

FIGURE 10 is a schematic diagram illustrating in side view the structure of a time multiplexed directional display device which includes a directional backlight. Further, FIGURE 10 shows in side view an autostereoscopic directional display device, which may include the stepped waveguide 1 and a Fresnel lens 62 arranged to provide the viewing window 26 for a substantially collimated output across the stepped waveguide 1 output surface. A vertical diffuser 68 may be arranged to extend the height of the window 26 further. The light may then be imaged through the SLM 48. The illuminator array 15 may include light emitting diodes (LEDs) that may, for example, be phosphor converted blue LEDs, or may be separate RGB LEDs. Alternatively, the illuminator elements in illuminator array 15 may include a uniform light source and SLM 48 arranged to provide separate illumination regions. Alternatively the illuminator elements may include laser light source(s). The laser output may be directed onto a diffuser by means of scanning, for example, using a galvo or MEMS scanner. In one example, laser light may thus be used to provide the appropriate illuminator elements in illuminator array 15 to provide a substantially uniform light source with the appropriate output angle, and further to provide reduction in speckle. Alternatively, the illuminator array 15 may be an array of laser light emitting elements. Additionally in one example, the diffuser may be a wavelength converting phosphor, so that illumination may be at a different wavelength to the visible output light.

Thus, FIGURES 1 to 10 variously describe: a waveguide 1; a directional backlight comprising such a waveguide 1 and an illuminator array 15; and a directional display device including such a directional backlight and an SLM 48. As such the various features disclosed above with reference to FIGURES 1 to 10 may be combined in any combination.

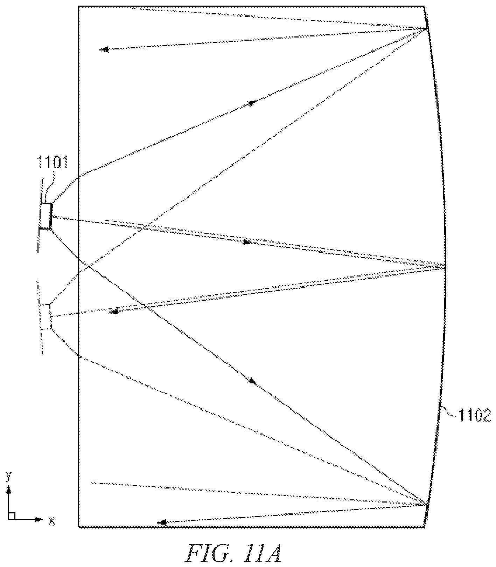

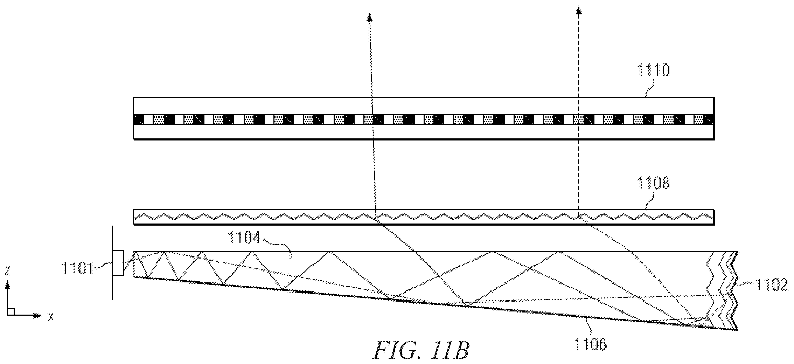

FIGURE 11A is a schematic diagram illustrating a front view of another imaging directional backlight, as illustrated, a wedge type directional backlight, and FIGURE 11B is a schematic diagram illustrating a side view of the same wedge type directional backlight. A wedge type directional backlight is generally discussed by U.S. Patent No. 7,660,047 and entitled "Flat Panel Lens." The structure may include a wedge type waveguide 1104 with a bottom surface which may be preferentially coated with a reflecting layer 1106 and with an end corrugated surface 1102, which may also be preferentially coated with a reflecting layer 1106. As shown in FIGURE 11B, light may enter the wedge type waveguide 1104 from local sources 1101 and the light may propagate in a first direction before reflecting off the end surface. Light may exit the wedge type waveguide 1104 while on its return path and may illuminate a display panel 1110. By way of comparison with an optical valve, a wedge type waveguide provides extraction by a taper that reduces the incidence angle of propagating light so that when the light is incident at the critical angle on an output surface, it may escape. Escaping light at the critical angle in the wedge type waveguide propagates substantially parallel to the surface until deflected by a redirection layer 1108 such as a prism array. Errors or dust on the wedge type waveguide output surface may change the critical angle, creating stray light and uniformity errors. Further, an imaging directional backlight that uses a mirror to fold the beam path in the wedge type directional backlight may employ a faceted mirror that biases the light cone directions in the wedge type waveguide. Such faceted mirrors are generally complex to fabricate and may result in illumination uniformity errors as well as stray light.

The wedge type directional backlight and optical valve further process light beams in different ways. In the wedge type waveguide, light input at an appropriate angle will output at a defined position on a major surface, but light rays will exit at substantially the same angle and substantially parallel to the major surface. By comparison, light input to a stepped waveguide of an optical valve at a certain angle may output from points across the first side, with output angle determined by input angle. Advantageously, the stepped waveguide of the optical valve may not require further light re-direction films to extract light towards an observer and angular non-uniformities of input may not provide non-uniformities across the display surface.

However, in the present disclosure, in general a wedge type waveguide such as wedge type waveguide 1104 may be used in a directional backlight, and may replace the stepped waveguide 1 in the various structures shown in FIGURES 1 to 10 described above and in the structures described below.

There follows a description of some directional display apparatuses including a directional display device and a control system, wherein the directional display device includes a directional backlight including a waveguide and an SLM. In the following description, the waveguides, directional backlights and directional display devices are based on and incorporate the structures of FIGURES 1 to 10 above, but could equally be adapted to replace the stepped waveguide 1 by a wedge type waveguide. Except for the modifications and/or additional features which will now be described, the above description applies equally to the following waveguides, directional backlights and display devices, but for brevity will not be repeated.

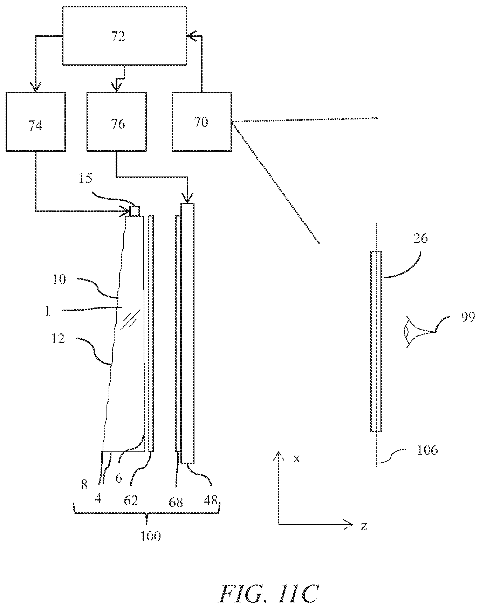

FIGURE 11C is a schematic diagram illustrating a directional display apparatus comprising a display device 100 and a control system. The arrangement and operation of the control system will now be described and may be applied, mutatis mutandis, to each of the display devices disclosed herein. As illustrated in FIGURE 11C, a directional display device 100 may include a directional backlight device that may itself include a stepped waveguide 1 and a light source illuminator array 15. As illustrated in FIGURE 11C, the stepped waveguide 1 includes a light directing side 8, a reflective end 4, guiding features 10 and light extraction features 12. The directional display device 100 may further include an SLM 48.

The waveguide 1 is arranged as described above. The reflective end 4 converges the reflected light. A Fresnel lens 62 may be arranged to cooperate with reflective end 4 to achieve viewing windows 26 at a viewing plane 106 observed by an observer 99. A transmissive SLM 48 may be arranged to receive the light from the directional backlight. Further a diffuser 68 may be provided to substantially remove Moire beating between the waveguide 1 and pixels of the SLM 48 as well as the Fresnel lens structure 62.

The control system may comprise a sensor system arranged to detect the position of the observer 99 relative to the display device 100. The sensor system comprises a position sensor 70, such as a camera, and a head position measurement system 72 that may for example comprise a computer vision image processing system. The control system may further comprise an illumination controller 74 and an image controller 76 that are both supplied with the detected position of the observer supplied from the head position measurement system 72.

The illumination controller 74 selectively operates the illuminator elements 15 to direct light to into the viewing windows 26 in cooperation with waveguide 1. The illumination controller 74 selects the illuminator elements 15 to be operated in dependence on the position of the observer detected by the head position measurement system 72, so that the viewing windows 26 into which light is directed are in positions corresponding to the left and right eyes of the observer 99. In this manner, the lateral output directionality of the waveguide 1 corresponds with the observer position.

The image controller 76 controls the SLM 48 to display images. To provide an autostereoscopic display, the image controller 76 and the illumination controller 74 may operate as follows. The image controller 76 controls the SLM 48 to display temporally multiplexed left and right eye images. The illumination controller 74 operate the light sources 15 to direct light into respective viewing windows in positions corresponding to the left and right eyes of an observer synchronously with the display of left and right eye images. In this manner, an autostereoscopic effect is achieved using a time division multiplexing technique.

There will now be described some specific directional backlights and display devices that are based on and incorporate the structures of FIGURES 1 to 10. Accordingly, except for the modifications and/or additional features which will now be described, the above description applies to the following structures but for brevity will not be repeated. Similarly the following directional backlights and display devices may be used in the directional display apparatus of FIGURE 11C.

It would be desirable to tailor the illumination from one or more illuminator elements 15a to 15n to efficiently provide uniform illumination across the SLM 48 when viewed from any position within a given eyebox. Accordingly, described herein are non-imaging optical elements, field optical elements, light recycling elements, light integrating cavities and combinations thereof for the purpose of efficiently providing uniform illumination at the SLM 48 and eyebox.

In the present embodiments, a Lambertian light source achieves the same apparent luminance of a surface independent of the observer's angle of view. Thus the surface has an isotropic luminance (candela per metre$^2$, or lumen per steradian per metre$^2$) and the variation of luminous intensity (candela, or lumen per steradian) with subtended viewing angle obeys Lambert's cosine law wherein luminous intensity observed from an ideal diffuse radiator is directly proportional to the cosine of the angle $\theta$ between the observer's line of sight and the surface normal. The luminous flux of a light source is defined as the measure of perceived light flux (lumen) emitted by the respective light source.

Light sources such as LEDs emitting in air can be considered to achieve a substantially Lambertian variation of luminous intensity with subtended viewing angle.

The following embodiments are described with respect to a stepped waveguide as an example of waveguide used in an imaging directional backlight. They are not however limited to this particular backlight system and relate in general to all imaging directional backlights. The following description makes reference to illuminator elements that are LEDs, but this is merely by way of example, and any other light source may also be used, as described above.

First, there will be described some non-imaging optics (NIOs) that may be arranged between illuminator elements and the input end of a stepped waveguide, to change the distribution of luminous intensity laterally by angle of the light output by a illuminator element. This allows the distribution of luminous intensity laterally by angle of the light in the waveguide from a respective illuminator element to be controlled.

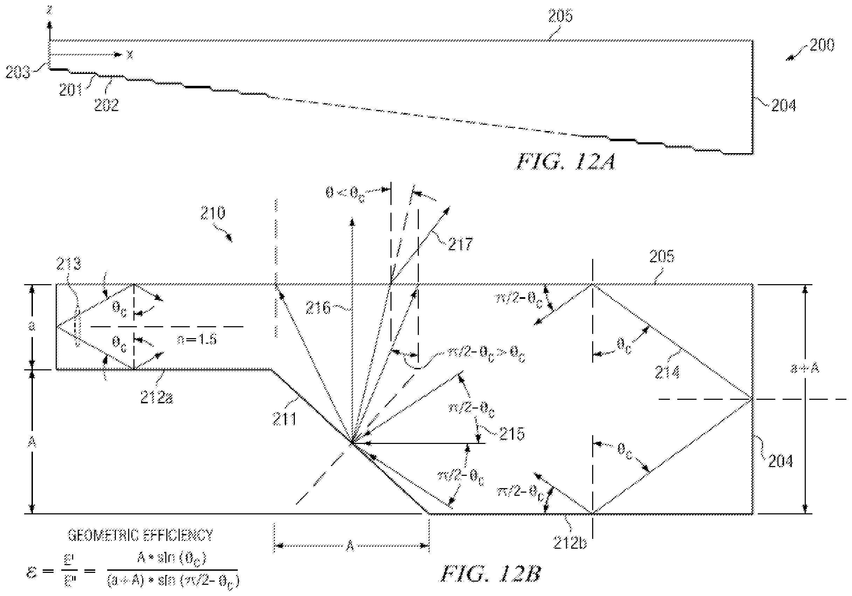

FIGURE 12A is a schematic cross-sectional diagram illustrating a stepped waveguide 200 in the x-z plane. The stepped waveguide 200 comprises an input end 203, a reflective end 204, a first guide surface 205, , and a second guide surface comprising extraction features 201, and intermediate regions 202 that guide light by TIR (total internal reflection). Note that rays may reflect by total internal reflection (TIR) along the first guide surface 205also.

FIGURE 12B is a schematic diagram illustrating a simplified optical model 210 of the stepped waveguide 200 where the extraction features 201 of FIGURE 12A have been combined into a single reflection surface 211 and the intermediate regions 202 202 of FIGURE 12A are combined into two surfaces 212a and 212b for analysis purposes. In operation, according to this optical model, a bundle of rays 213 enters the stepped waveguide 200. For a stepped waveguide 200 having an exemplary index of refraction around 1.5, all rays from an LED source striking the face of the input end 203 and entering the stepped waveguide 200 will totally internally reflect (TIR) at first guide surface 205 and the surfaces 212a, 212b. Using the simplified optical model 210 of FIGURE 12B, it can be shown that the geometric efficiency ε of the stepped waveguide 200 is:

$$\varepsilon = \frac{\epsilon'}{\epsilon''} = \frac{A.\sin(\theta_c)}{(a+A).\sin(\frac{\pi}{2}-\theta_c)}$$

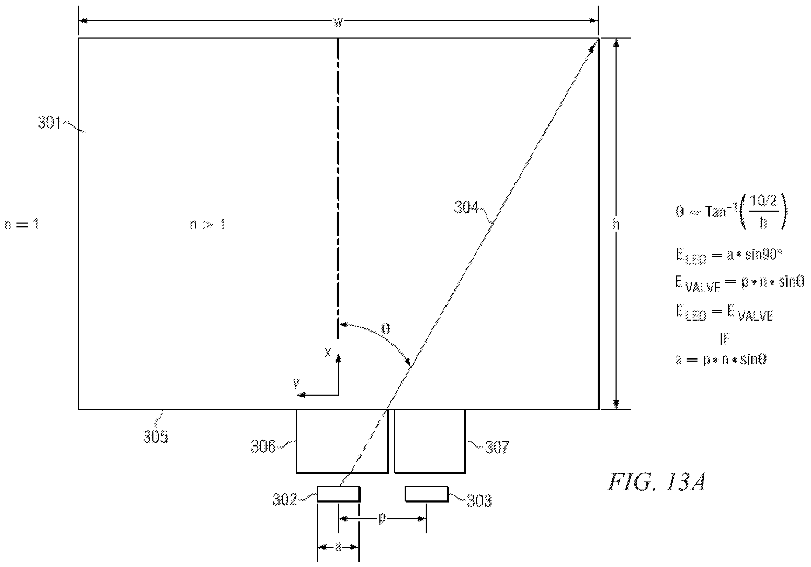

FIGURE 13A is a schematic diagram illustrating a waveguide 301 in the x-y plane. LEDs 302 and 303 are located at the input end 305 of the waveguide 301. The stepped waveguide 301 has refractive index greater than 1. LED 302 is assumed to be centered on the width of the optical valve (w), that is aligned with the optical axis of the waveguide 301. The height of the stepped waveguide 301 is given by h. Each LED 301, 302 has an emitting surface with linear dimension a. The LEDs 302, 303 are separated by pitch p. In operation, non-imaging optical elements (NIOs) 306 and 307 arranged between the LEDs and the input end 305 of the waveguide 301 collect light from the LEDs 302 and 303 and transform the emitting linear dimension and angle while maintaining a system geometrical constant (etendue). A marginal ray from the centered LED 302 and NIO 306 strikes the upper corner of the stepped waveguide 301 in order to fill the stepped waveguide 301 with illumination. For a particular set of stepped waveguide dimensions, LED pitch, LED maximum emission angle (typically 90 degrees) and stepped waveguide index, the etendue matching LED emission dimension can be calculated using the following equations:

$$\theta = \tan^{-1}\frac{w/2}{h}$$

$$E_{LED} = a.\sin 90° = a$$

$$E_{valve} = p.n.\sin\theta$$

The etendue of the LED matches the etendue of the stepped waveguide 301 when $E_{LED} = E_{valve}$ if a = p.n.sin θ

LED products matching (or nearly matching) this emission dimension can then be selected for high system efficiency. Note: If the LED is etendue matched in pitch and angle (but not emission area), NIOs 306 and 307 may be replaced with simple rectangular light pipes. The light pipes have an air gap between them (to maintain TIR within a single pipe). The light pipe creates several images of the source, thereby forming a more uniform illuminance of size p at the light pipe output while maintaining the angular emission range theta (θ).

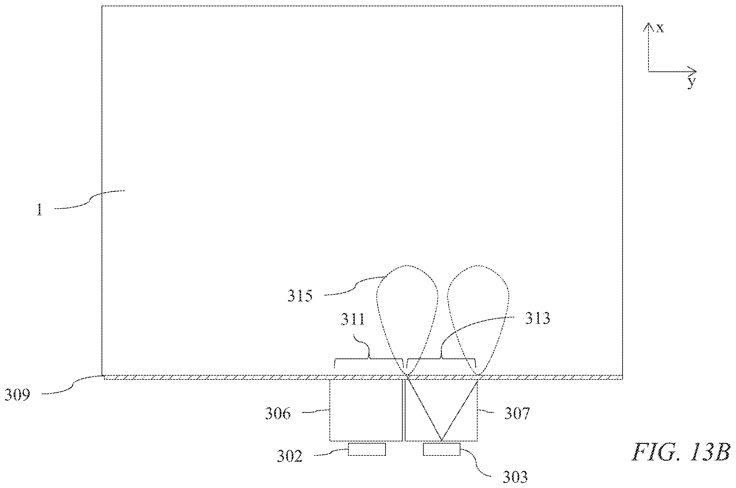

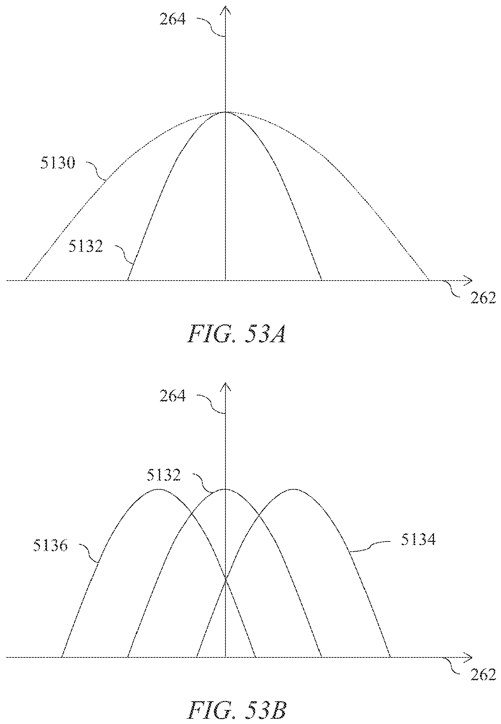

FIGURE 13B is a schematic diagram illustrating a top view of a directional backlight comprising a waveguide 1 and input LEDs 302, 303, and also input NIOs 306, 307 and diffuser, in the x-y plane. LEDs 302, 303 and respective input NIOs 306, 307 may be arranged to illuminate regions 311, 313 of diffuser 309. Diffuser 309 may be arranged to provide luminous intensity distributions 315 within the waveguide 1, such that regions 311, 313 are independently illuminated by LEDs 302, 303 respectively but may advantageously be imaged to optical windows 26 with low cross talk between adjacent optical channels provided by LEDs 302, 303. The diffuser may achieve a variation of luminous intensity distribution with lateral (y-axis) position of the LEDs 302, 303 as will be described below with reference for example to FIGURE 53A.

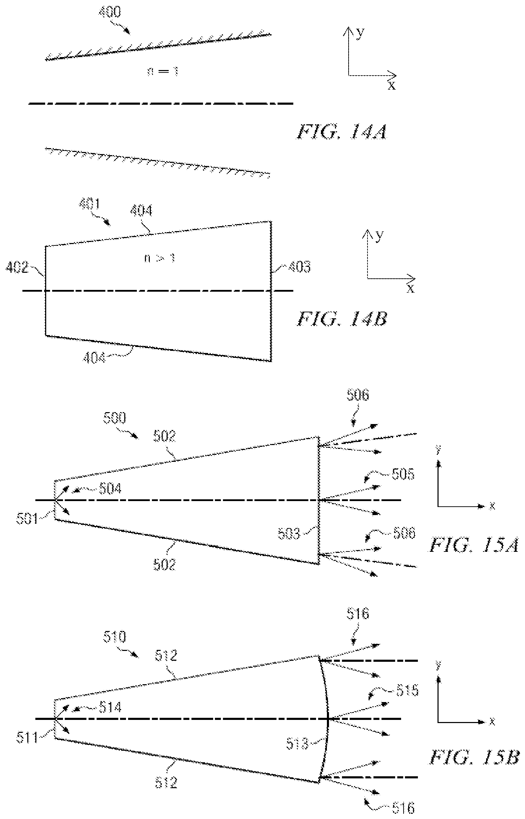

FIGURES 14A and 14B are schematic diagrams respectively showing air and dielectric-filled non-imaging optics 400, 401. Non-imaging optics (NIOs) can be air-filled with mirrored reflecting surface 400, or dielectric-filled 401 with mirrored or bare surfaces. If the dielectric-filled NIO 401 is designed such that all rays of interest entering the entrance face 402 strike the bounding surfaces 404 at angles of incidence greater than the critical angle, high illumination transfer efficiencies can be achieved. Dielectric-filled NIOs 401 which utilize angles greater than the critical angle at the bounding surfaces may be referred to as Dielectric Totally Internally Reflecting Concentrators (DTIRC's). A light source at the entrance face 402 of a DTIRC may be butt-coupled to the DTIRC through air, or may be optically coupled to the entrance face with index matching material or fluid.

**FIGURES 15A and 15B** are schematic diagrams illustrating side views of exemplary tapered light pipes. Generally, tapered light pipes are efficient angle and area transformers. As shown in Figure 15A, light pipe 500 is an exemplary dielectric filled light pipe. In operation, light enters input face 501. Bounding faces 502 are either mirror-coated or bare (when designed for TIR). Exit face 503 has a larger dimension than entrance face 501, and therefore exiting ray bundle 505 has less angular range than entering ray bundle 504 (when considered in the same medium). The marginal ray bundles 506 do not exit the tapered light pipe telecentrically. That is, the chief rays in each bundle (when projected backwards) would cross at a finite distance along the optical axis. Tapered light pipes, due to the multiple reflections of the source occurring inside the bounding surfaces, typically produce uniform area and angular output distributions. Light pipes are often constructed using the edge ray principle and Williamson construction. *See* Donald E. Williamson, Cone Channel Condenser Optics, JOSA Vol. 42, Number 10, pp. 712-715 (Oct. 1952).

As shown in Figure 15B, light pipe 510 is similar to 500 except that the exit surface has been replaced with a curved surface 513. The curved surface 513 is operable to redirect the marginal ray bundles 516 such that their chief rays cross at infinity, making the system telecentric. Telecentric systems typically have higher uniformity and throughput when coupled with imaging optics. Note that each of the NIOs depicted is dielectric-filled, but could alternatively be designed as air-filled concentrators.

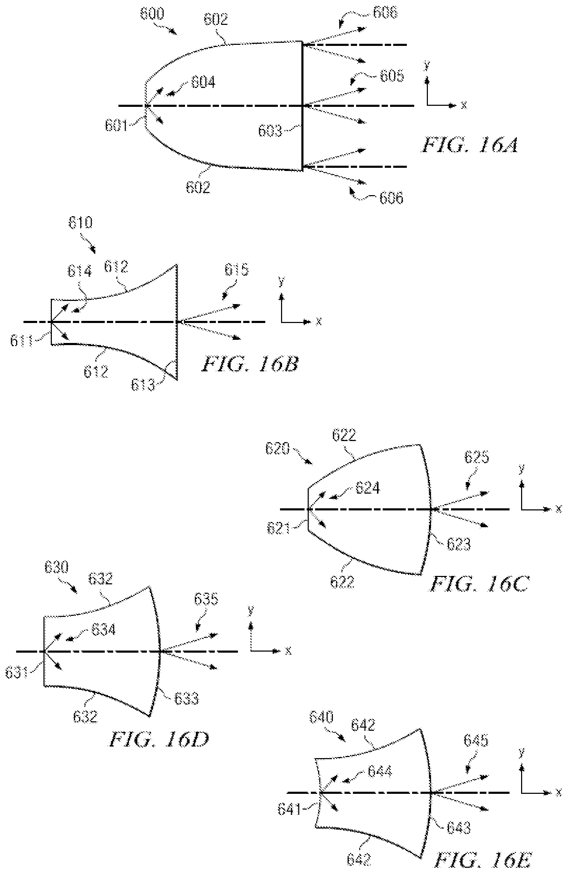

**FIGURES 16A-16E** are schematic diagrams illustrating various exemplary embodiments of compound concentrators, that may be used as NIOs. Compound Parabolic Concentrators (CPC's) and Compound Hyperbolic Concentrators (CHC's) are also efficient angle and area transformers.

FIGURE 16A illustrates CPC 600, an exemplary dielectric filled concentrator. Bounding faces 602 are either mirror-coated or bare (when designed for TIR). Exit face 603 has a larger dimension than entrance face 601, and therefore exiting ray bundle 605 has less angular range than entering ray bundle 604 (when considered in the same medium). The marginal ray bundles exit the tapered light pipe telecentrically; that is, the chief rays in each bundle (when projected backwards along the optical axis) cross at infinity. Generally, due to the multiple reflections of the source occurring inside the bounding surfaces, CPC's typically produce uniform areal and angular output distributions, but not quite as uniform as tapered light pipes. *See, e.g.,* F. Fournier and J. Rolland, Optimization of freeform lightpipes for light-emitting-diode projectors, Applied Optics, Vol. 47, No. 7, pp. 957-966 (Mar. 2008). CPC's are often designed using the edge ray principle and simple parametric equations. *See, e.g.,* W. T. Welford and R. Winston, High Collection Nonimaging Optics, Academic Press (1989). incorporated by reference.

FIGURE 16C illustrates CPC 620, an exemplary dielectric filled concentrator that has a lens surface 623 at the output. The addition of the lens surface 623 allows for a more compact CPC design in comparison to CPC 600 shown in Figure 16A.

FIGURES 16B, 16D, and 16E illustrate Compound Hyperbolic Concentrators (CHC's) 610, 630 and 640. Generally, CHC's perform substantially the same function as a CPC, transforming angle and area of a source to new angles and area while preserving etendue. CHC 630 of Figure 16D is an example of a CHC with a lens at the output surface 633. This allows for telecentric illumination at the output. Figure 15E shows an exemplary CHC 640 with lenses at the input 641 and output 643. The additional lens permits an input illumination range that is less than 90 degrees in air (often referred to as a thetal-theta2 concentrator). CPC's can also be designed as thetal-theta2 concentrators. Freeform optimizations (e.g. using rational Bezier curves) of CPC's and CHC's with and without lenses may optimize angular and spatial uniformity for a given source. Note that each of the NIOs depicted is dielectric-filled, but could also be designed as air-filled concentrators.

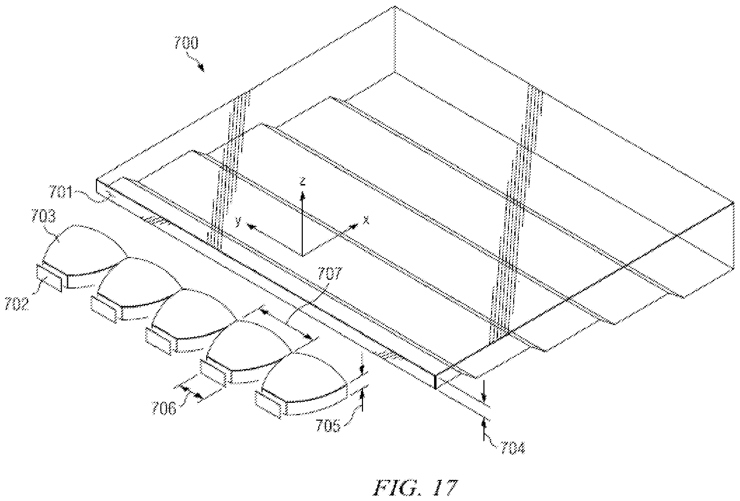

**FIGURE 17** is a schematic diagram showing a perspective view of a directional backlight comprising a stepped waveguide 700 with air-spaced non-imaging optics 703. The waveguide 700 has an array of illuminator elements 702 (e.g. LED's) butt against an array of non-imaging optics 703. In this example, the array of NIOs 703 is air-spaced from the input end 701 of the stepped waveguide 700. The NIOs 703 transform the linear emitting dimension 706 and angle of the LED's to an emitting dimension 707 and angle in the stepped waveguide that closely match the etendue of the stepped waveguide 700, fills in the gaps in the viewing window image, and removes non-uniformities in the spatial and angular distribution at the viewing window.

Generally, in a stepped waveguide, the x-y plane provides dimensional and angular transformation with an NIO. The x-z plane does not require such a transformation and the NIO acts as a light pipe, simply preserving linear dimension (i.e., dimension 705 may be equal to dimension 704) and angle.

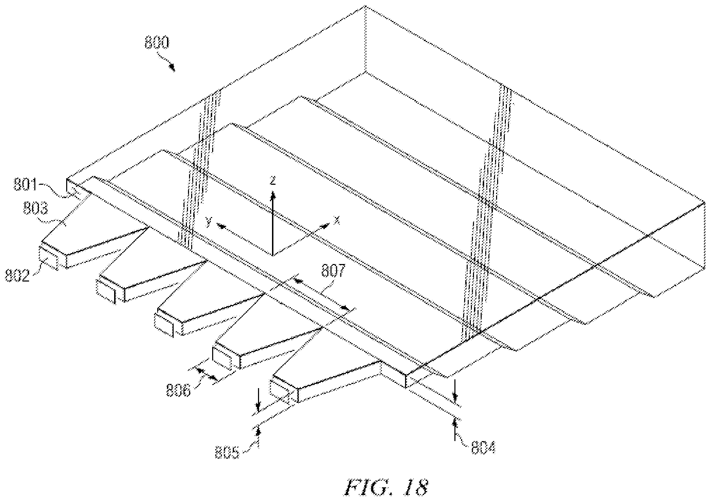

**FIGURE 18** is a schematic diagram showing a perspective view of a directional backlight comprising a stepped waveguide 800 with optically coupled non-imaging optics 803. The waveguide 800 has an array of illuminator elements 802 (e.g. LED's) butted against an array of non-imaging optics 803. In this example, the array of NIOs 803 is optically coupled to the input end 801 of the stepped waveguide 800. The NIOs 803 transform the linear emitting dimension 806 and angle of the LED's to an emitting dimension 807 and angle in the stepped waveguide that closely match the etendue of the stepped waveguide 800, fills in the gaps in the viewing window image, and removes non-uniformities in the spatial and angular distribution at the viewing window.

Generally, only the x-y plane uses dimensional and angular transformation with an NIO. The x-z plane does not use such a transformation and the NIO acts as a light pipe, simply preserving linear dimension (i.e. dimension 805 is equal to dimension 804) and angle.

Next, there will be described some imaging optics that may be arranged between illuminator elements and the input end of a stepped waveguide, to change the distribution of luminous intensity laterally by angle of the light output by a illuminator element. This again allows the distribution of luminous intensity laterally by angle of the light in the waveguide from a respective illuminator element to be controlled.

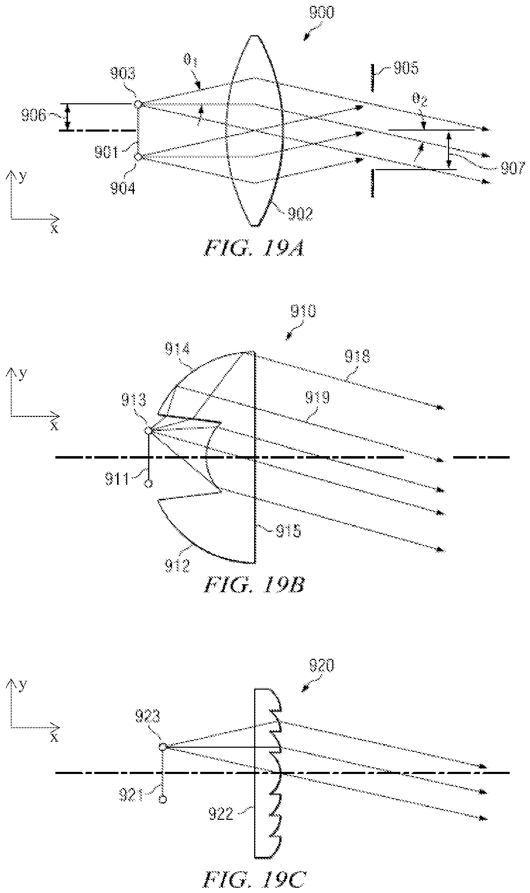

FIGURES 19A-19C are schematic block diagrams illustrating several collection lens forms. FIGURE 19A shows Lens form 900 as a simple lens 902 air-spaced from an illuminator element 901. A simple lens can also act as a dimensional and angular transformer. Input dimension 906 and angle theta1 are transformed into output dimension 907 and angle $\theta_2$. Typically, lenses are designed such that the marginal rays come to a focus at the edge field points 903, 904 and all other rays within the range zero to $\theta_2$ may have larger aberrations (in accordance with edge ray principle and simultaneous multiple surface method or SMS). See W. T. Welford and R. Winston, High Collection Nonimaging Optics, Academic Press (1989). See also, e.g., F. Fournier, A review of beam shaping strategies for LED lighting, Proc. of SPIE, Vol. 8170, 817007, pp. 1-11 (2011). Due to the air-spacing and limited physical aperture of the lens, input ray angles greater than approximately 30 degrees are difficult to capture and focus (at infinity) with a single lens, and stray light escaping into other viewing windows may become an issue.

FIGURE 19B shows Lens form 910 as an illuminator element 911 and a transformer commonly called a TIR lens. The TIR lens combines a refractive central lens with a reflective outer lens (typically designed for total internal reflection at surface 914). The TIR lens can capture higher angle rays 918, 919 and are used to make compact collimators. An advantage of the TIR lens over a standard lens is less stray light escaping into other viewing windows.

FIGURE 19C shows Lens form 920 as a Fresnel lens 922 air-spaced from an illuminator element. A Fresnel lens is a compact form of a standard lens, where facets replace the smooth surface of the standard lens. The Fresnel lens is also an effective transformer. The edge ray principle and SMS are typical methods used for designing Fresnel lenses.

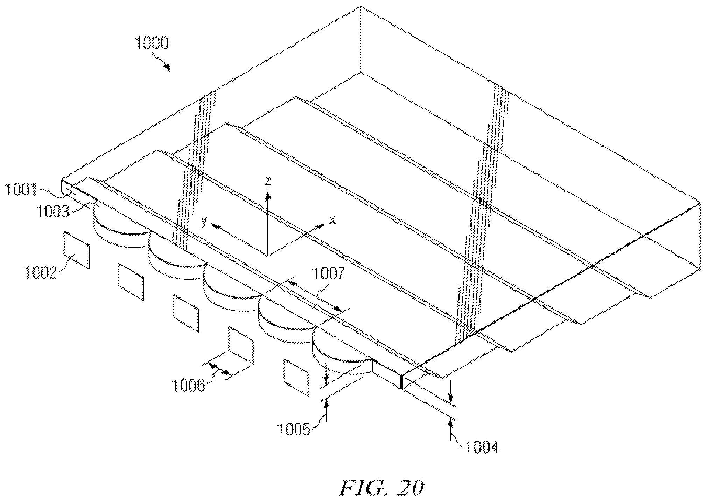

FIGURE 20 is a schematic diagram illustrating a directional backlight comprising a stepped waveguide 1000 with optically coupled collection lenses 1003 arranged between an array of illuminator elements 1002 (e.g., LED's) and the input end 1001 of the stepped waveguide 1000, the illuminator elements 1002 being air-spaced from an array of lenses 1003. The lenses may be standard lenses, TIR lenses, or Fresnel lenses, and may be spherical, aspheric, cylindrical, or toroidal. In this example, the array of lenses 1003 is shown as being optically coupled to the input end 1001 of the stepped waveguide 1000. In other examples, the lenses 1003 may alternatively be air-spaced to the stepped waveguide entrance face 1001. The lenses 1003 transform the linear emitting dimension 1006 and angle of the LED's to an emitting dimension 1007 and angle in the optical valve that closely match the etendue of the stepped waveguide 1000, fills in the gaps in the viewing window image, and removes non-uniformities in the spatial and angular distribution at the viewing window.

Generally, in a stepped waveguide, only the x-y plane uses dimensional and angular transformation with a lens. The x-z plane does not require such a transformation and the lens acts as a light pipe, simply preserving linear dimension (i.e. dimension 1005 is equal to dimension 1004) and angle.

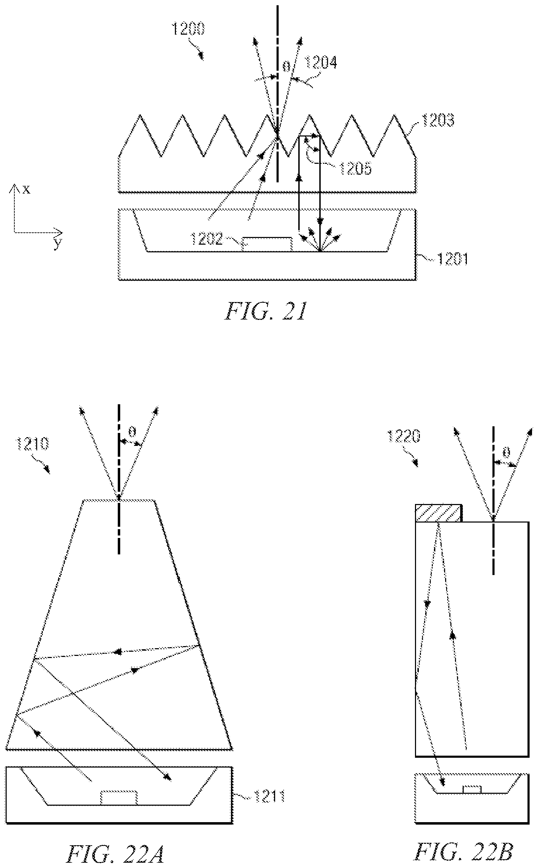

FIGURES 21, 22A and 22B are schematic diagrams illustrating various light recycling optical arrangements for a light source. As shown in FIGURE 21, optical apparatus 1200 includes an LED package 1201 with a prismatic film 1203 (or brightness enhancing film) between the LED 1202 and stepped waveguide or NIO. The prismatic film 1203 allows rays with angle of incidence less than the critical angle 1204 to pass, while rays with AOI greater than the critical angle 1205 are directed back to the LED package 1201 where they diffuse and have a chance to pass through the film. See, e.g., J. Nelson et al., High efficiency cube corner retroflective material, U.S. Pat. 4,938,563 (July 3, 1990). If sufficiently small sources are not available, the brightness of a larger source (within a fixed angular output theta) may be enhanced with such a film. When the enhanced source is coupled to the stepped waveguide or a theta1-theta2 NIO, the etendue of the source and stepped waveguide can be better matched. FIGURE 22A shows another brightness enhancing structure having inverted tapered light pipes 1210; and FIGURE 22B shows yet another brightness enhancing structure having light pipes with partial mirrors at the exit face 1220. See, e.g., G. Ouyang and K. Li, Brightness increase in LED by recycling of light for projection applications, Proc. of SPIE, Vol. 6489. (2007).

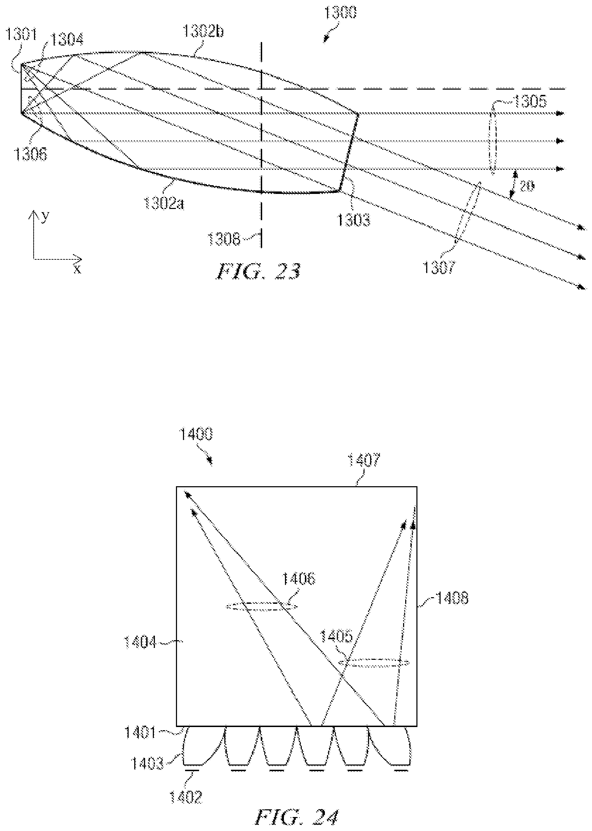

FIGURE 23 is a schematic diagram illustrating an exemplary asymmetric non-imaging optic (NIO) 1300. The functions of the NIO and field lens may be combined in an asymmetric NIO. NIO1300 is an asymmetric Compound Parabolic Concentrator (CPC) with input face 1301 and output face 1303. Asymmetric CPC 1300 can be defined parametrically by tilted parabolic curves 1302a, 1302b, as a more general case of the symmetric CPC. *See, e.g.,* A. Rabl., Comparison of solar concentrators, Solar Energy, Vol. 18, pp. 93-111 (1976), herein incorporated by reference. For input ray bundles 1304 and 1306, the asymmetric CPC outputs ray bundles 1305 and 1307, respectively with different angles relative to the source normal. Asymmetric CPC's may be truncated (*e.g.*, at line 1308) for more compact packaging with a reduction in concentration efficiency. Similarly, asymmetric tapered light pipes and CHC's may be designed to produce asymmetric ray output angles. Thus, NIO1300 changes the distribution of luminous intensity laterally by angle of the light output by a illuminator element, and therefore controls the distribution of luminous intensity laterally by angle of the light in the waveguide.

**FIGURE 24** is a schematic diagram illustrating a directional backlight 1400 with asymmetric non-imaging optics (NIOs) 1403. The directional backlight 1400 includes a stepped waveguide 1404, illuminator elements 1402 and a combination of symmetric and asymmetric NIOs 1403, arranged as shown. The asymmetric NIO 1403 at the edge of optical valve redirects the ray bundle 1405 such that the rays propagate toward the edges of the reflecting end 1407, avoiding the side walls 1408. The less asymmetric NIOs 1403 near the center of the optical valve do less redirecting of the ray bundle 1406, such that the rays propagate toward the edges of the reflecting end 1407, avoiding the side walls 1408. In this example, the NIOs 1403 may be integrated into the input end 1401 of the stepped waveguide 1404, creating a single component.

Thus, NIOs 1403 change the distribution of luminous intensity laterally by angle of the light output by the respective illuminator elements in a manner that varies with the input positions of the illuminator elements 1402, and therefore controls the distribution of luminous intensity laterally by angle of the light in the waveguide to similarly vary with the input positions of the illuminator elements 1402.

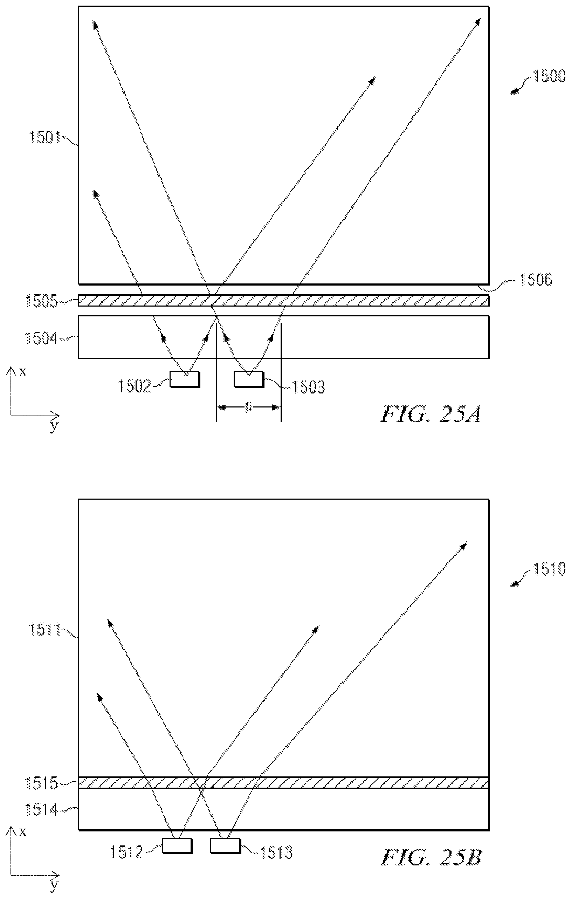

**FIGURES 25A** and **25B** are schematic diagrams illustrating exemplary directional backlights 1500, 1520, each including a stepped waveguide 1501, diffuser 1505, 1515, and a block 1504, 1514 of material having a refractive index greater than one.

As shown by Figure 25A, the directional backlight 1500 includes a stepped waveguide 1501 combined with illuminator elements 1502, 1503, a rectangular block 1504 of material having a refractive index higher than one, and a diffuser 1505, arranged as shown. The block 1504 and diffusing material 1505 extend across at least the entire array of illuminator elements 1502, 1503, in this example across the entire input end 1506 of the stepped waveguide 1501.

In operation, light from illuminator elements (e.g., 1502, 1503) enter the block 1504. The block thickness is chosen such that the rays propagate to a ray bundle size equal to the desired viewing window pitch, p. The diffuser 1505 may optionally be placed between the block 1504 and the input end 1506. The diffuser 1505 conditions the illuminator element light for areal uniformity, angular uniformity and/or angular range. It is anticipated that the illuminator elements 1502, 1503, block 1504, optional diffuser 1505 and input end 1506 would be butted against each other in air.

**FIGURE 25B** shows a directional backlight 1510 having a similar combination of elements as the directional backlight 1500 of FIGURE 25A, but arranged slightly differently. The directional backlight 1510 includes stepped waveguide 1511, illuminator elements 1512, 1513, block 1514, and diffuser 1515, which are the same as the corresponding components of FIGURE 25A. However, in this case, the block 1514, diffuser 1515 and stepped waveguide 1511 are closely optically coupled, in this example, with optical adhesive. Close optical coupling may also be enabled, for example, with a molding process where separate diffuser material is inserted into the mold cavity, or the diffuser 1515 is formed into the entrance face of input end of the stepped waveguide 1511 (via molding or ablation) and the block 1514 is molded to the diffuser 1515 in a separate step, or a diffuser is created directly in the directional backlight 1510 (*e.g.,* by laser ablation).

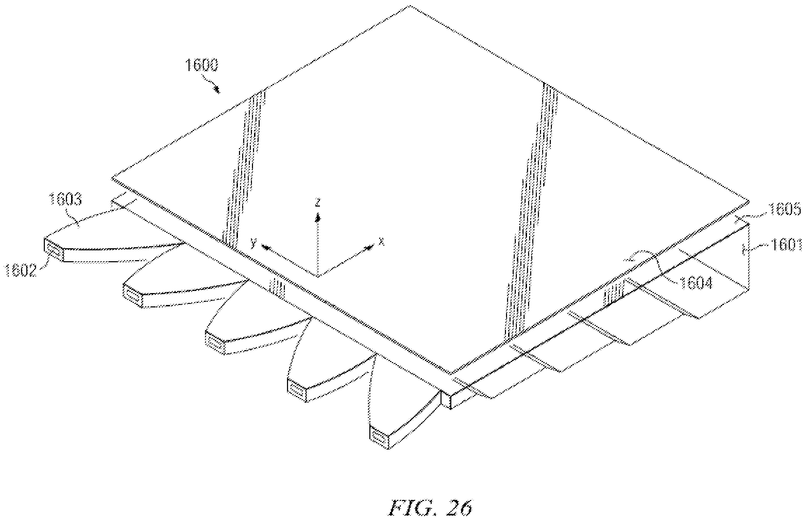

**FIGURE 26** is a schematic diagram illustrating a directional backlight 1600 having a diffuser 1604 extending across the first guide surface 1605 that forms the exit face. The directional backlight 1600 includes a stepped waveguide 1601, illuminator elements 1602, NIOs 1603, and a diffuser 1604 positioned at the first guide surface 1605 of the waveguide 1601. The NIOs 1603 have a similar arrangement to the NIOs of FIGURE 24. The NIOs 1603 and diffuser 1604 cooperate to create substantially uniform illumination at the exit face of the entire structure (prior to light entering the SLM). The NIOs 1603 work to create uniform spatial and angular illumination at the front conjugate of the stepped waveguide 1601, and the diffuser 1604 works to create uniform spatial and angular illumination near the aperture (or exit face formed by the first guide surface 1605) of the stepped waveguide 1601. The diffuser's angular (spatial) scattering properties may be designed or selected to enhance the spatial (angular) uniformity of illumination from the NIO output face. Similarly, the NIOs angular (spatial) illumination properties may be designed or selected to enhance the spatial (angular) uniformity of illumination from the diffuser 1604 exit surface.

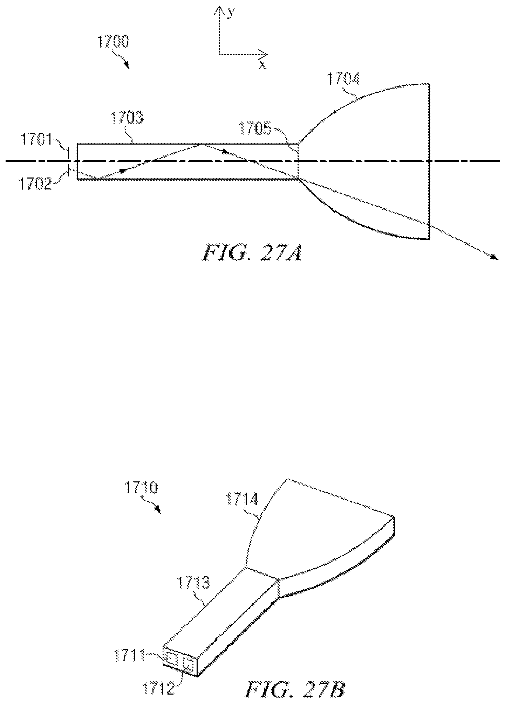

**FIGURE 27A** is a schematic diagram illustrating a side view of a light pipe and non-imaging optic (NIO) 1700. NIO 1700 is another form of NIO for use with single or multiple LED's. NIO 1700 may include a plurality of LEDs 1701, 1702, a light pipe 1703, and an NIO section 1704. In operation, light from the LEDs enters the light pipe, where it totally internally reflects from the side walls, and creates a more uniform spatial illumination distribution at the exit face formed by the first guide surface 1705. In this manner, light from a single structured source or from multiple (possibly different color) sources is mixed to create a uniform output at the exit face formed by the first guide surface 1705. The NIO section 1704 then collects the light and transforms its spatial and angular properties to meet the needs of the stepped waveguide (not shown).

**FIGURE 27B** is a schematic diagram illustrating a perspective view of a light pipe and non-imaging optic. Item 1710 provides an exemplary rectangular version of the light pipe 1713 and NIO 1714. Note that the light pipe and NIO may, in other embodiments, be hollow (air-filled) with mirrored reflective side walls.

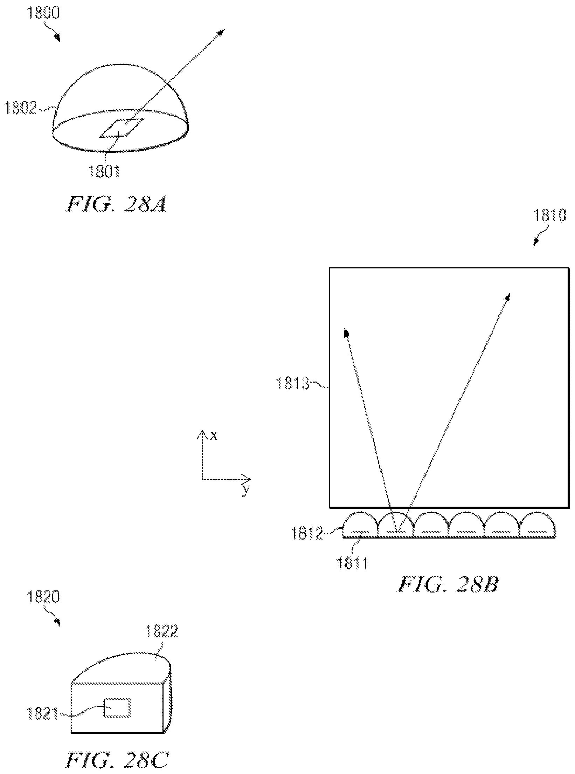

**FIGURE 28A** is a schematic diagram illustrating an exemplary hemispherical lens implementation of an LED package 1800 comprising hemispherical immersion lenses 1802 fabricated around LED chips 1801, as is often done in order to enhance the light extraction efficiency of the entire LED package 1800.

**FIGURE 28B** is a schematic diagram illustrating a directional backlight 1810 having an array of LEDs 1811, an array of hemispherical immersion lenses 1812 (similar to FIGURE 28A) and a stepped waveguide 1813. The array of hemispherical immersion lenses 1812 may, in other embodiments, be provided by an array of hemi-cylindrical lenses, as shown with reference to FIGURE 28C below.

**FIGURE 28C** is a schematic diagram illustrating of another exemplary LED package 1820, including LED 1821 and a hemi-cylindrical lens 1822, where the curvature in one plane allows for better extraction efficiency, and the flats in the other plane allow for light guiding to the stepped waveguide entrance face.

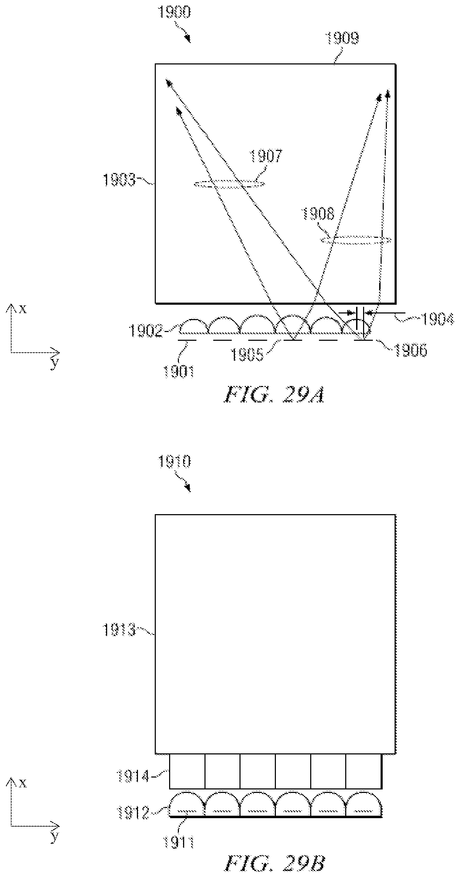

**FIGURE 29A** is a schematic diagram illustrating a directional backlight 1900 having another hemispherical lens implementation. The directional backlight 1900 includes an array 1905 of LEDs 1901, a stepped waveguide 1903 and a hemispherical or hemi-cylindrical lens array of lenses 1902 between the LEDs 1901 and the input end of the waveguide 1903. The lenses 1902 are aligned with respective LEDs 1901 but with increasingly offset lens centers relative to the centers 1906 of the LEDs 1901. The increasing offset 1904 between centers 1906 of the LEDs 1901 and the lenses 1902 provide a substantially similar function as a field lens as described elsewhere herein. Ray bundles 1907 of light in the stepped waveguide 1903 at the center of the array 1905 of LEDs 1901 are substantially un-deviated and fill the objective end of the waveguide 1909. Ray bundles 1908 of light in the stepped waveguide 1903 at the edge of the array 1905 of LEDs 1901 are deviated such that they also fill the objective end of the waveguide 1909.

Thus, the lenses 1902 change the distribution of luminous intensity laterally by angle of the light output by the respective illuminator elements in a manner that varies with the input positions of the LEDs 1901 due to the varying offset 1904. This controls the distribution of luminous intensity laterally by angle of the light in the waveguide 1903 to similarly vary with the input positions of the LEDs 1901.

**FIGURE 29B** is a schematic diagram illustrating a directional backlight 1910 having another hemispherical lens implementation. The directional backlight 1910 includes a combination of LEDs 1911, hemispherical or hemi-cylindrical lenses 1912, a stepped waveguide 1913 and an array of NIOs 1914 between the LEDs 1911 and the input end of the waveguide 1913, arranged as shown. The NIOs 1914 are angle and spatial illumination transformers, working in concert with the hemispherical or hemi-cylindrical lenses to match the LED illumination to the requirements of the stepped waveguide 1913, in a similar manner to the directional backlight 1900 of FIGURE 29A.

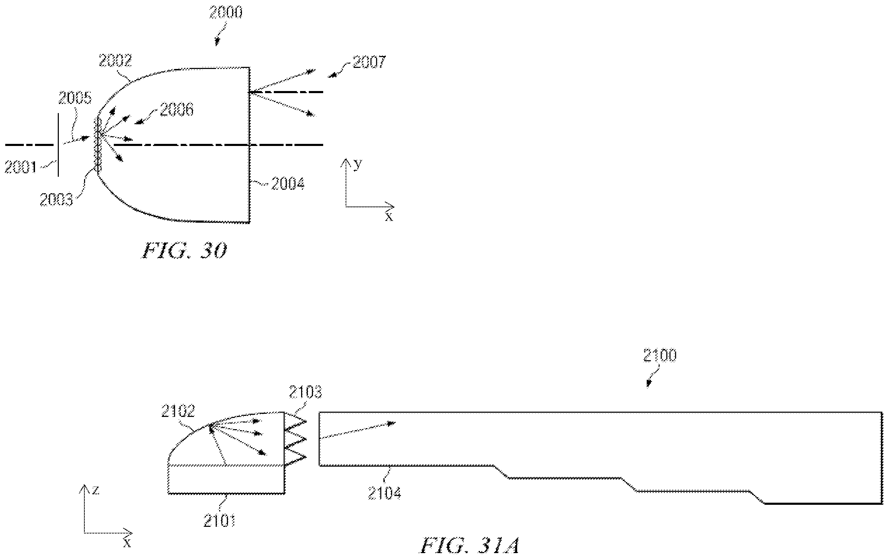

**FIGURE 30** is a schematic diagram of an illuminator arrangement 200 illustrating a phosphor or quantum dot coated non-imaging optic. The illuminator arrangement 2000 comprises an illuminator element 2001, an NIO 2002 and a material 2003 such as a phosphor or quantum dot which absorbs one band of wavelengths and emits in another band of wavelengths. In this case, the phosphor or quantum dot material 2003 may be deposited at the input face of the NIO 2002, and the NIO 2002 transforms the emitting angles and area 2006 to an area and angle more suitable to the stepped waveguide 2007 (not shown). One such combination may be a blue LED illuminator element and yellow phosphor, where some blue light leaks into the NIO 2002 with the newly generated yellow light to form a white light at the output of the NIO 2002. Another combination may be a blue LED illuminator element and red, green and/or blue quantum dot particle illuminator elements.

**FIGURES 31A - 31C** are schematic diagrams illustrating various exemplary embodiments of directional backlights including integrating cavities and light recycling apparatuses.

In FIGURE 31A, a direction backlight 2100 includes an array of illuminator elements 2101 followed by an integrating cavity 2102, a brightness enhancing prismatic film 2103 and a stepped waveguide 2104, arranged as shown. The walls of the integrating cavity 2102 include diffusing material (e.g., white roughened plastic) which diffuse incident light from the illuminator elements 2101. In operation, the integrating cavity 2102 creates more uniform light in angle and space at the output of the integrating cavity 2102. The light enters the prismatic film 2103, which allows the light to pass or recycles it back into the integrating cavity 2102, depending on the angle of incidence of the light at the input face of the prismatic film 2103. The recycled light re-enters the integrating cavity 2102, is diffused and has a chance of passing through the prismatic film 2103 at a new incidence angle, thus increasing the brightness of the light exiting the prismatic film 2103 and entering the stepped waveguide 2104. In this manner, an illuminator element 2101 with etendue larger than the etendue of the stepped waveguide 2104 can recover some of the light lost due to the geometric etendue mismatch.

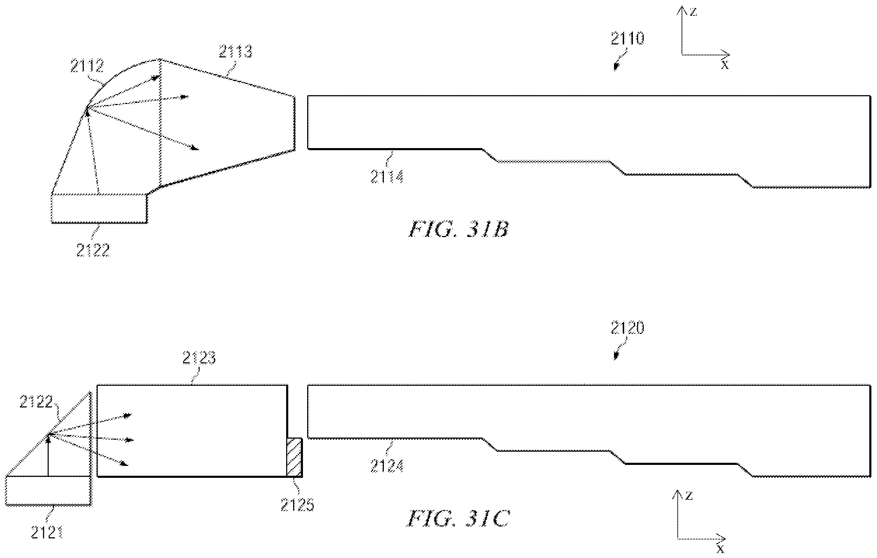

In FIGURE 31B, a directional backlight 2110 is similar to the directional backlight 2100, except the prismatic film 2103 has been replaced by a reverse-tapered light pipe 2113.

In FIGURE 31C, a directional backlight 2120 is also similar to the directional backlight 2100, except the prismatic film 2103 has now been replaced by a light pipe 2123 with a mirror at the output aperture 2125. The reverse-tapered light pipe 2113 and aperture light pipe 2123 act as etendue reducing, light recycling elements.

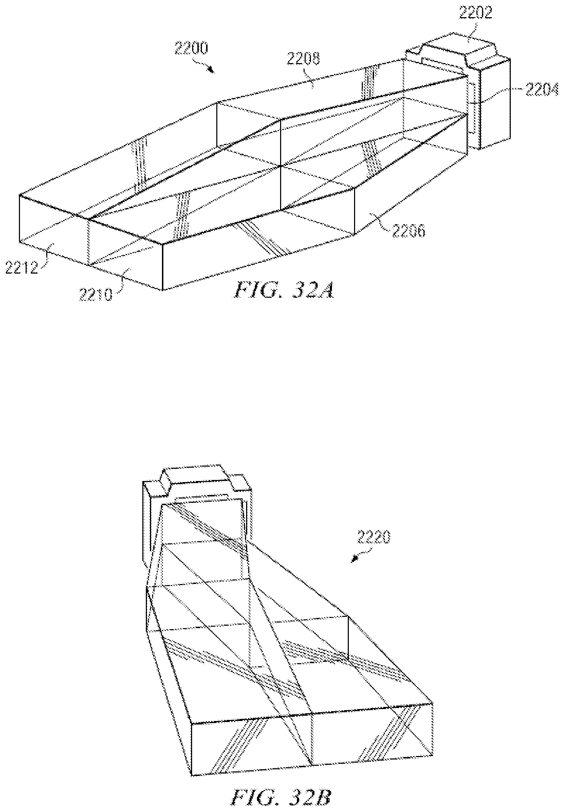

FIGURES 32A and 32B are schematic diagrams illustrating two perspective views of illuminator arrangements 2200 and 2220 including an etendue shifting optical system. As shown in FIGURE 32A, in illuminator arrangement 2200, first and second light guides 2206, 2208 are located at the emitting face 2204 of an LED 2202. The light guides 2206, 2208 are configured to create an emitting area at exit apertures 2210, 2212 with substantially different aspect ratio from the emitting area 2204 of the LED 2202. This type of device is useful for coupling light from an LED into a stepped waveguide whose entrance face edge is smaller in size than the emitting face edge of the LED. The device ideally matches the etendue of the LED and stepped waveguide, resulting in minimal loss of light. FIGURE 32B provides an alternate perspective view of an illuminator arrangement 2220 having similar components described and illustrated with respect to FIGURE 32A.

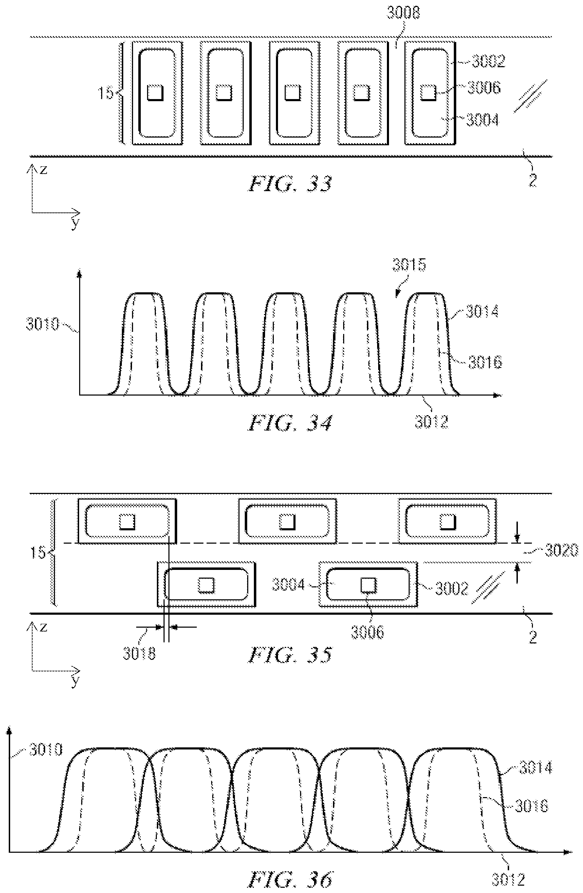

FIGURE 33 is a schematic diagram of an embodiment for improving spatial uniformity in luminance and color by placing LEDs into an array 15 where each LED is in portrait orientation, arranged as shown. Each LED includes a blue emitting chip 3006 placed in a surrounding yellow phosphor region 3004. The one dimensional imaging of imaging directional backlights average output along in the vertical as shown in FIGURE 33.

FIGURE 34 is a graph showing an emission profile 3015 of emission 3010 against horizontal position 3012, relating to the exemplary embodiment of Figure 33. The ratio of the widths of the blue emitting chip 3006 to the surrounding yellow phosphor region 3004 is much greater than their equivalent ratio of heights when oriented in portrait mode improving color uniformity shown in FIGURE 34. Here the blue 3016 and yellow 3014 emission 3010 are shown as a function of horizontal position 3012. The LED package edge width 3002 and placement separation 3008 still introduce small gaps 3015 in the emission profile 3015 of FIGURE 34 which can be tolerated in some systems with the use of a small horizontal diffuser. The portrait orientation also has the advantage of simple independent LED electrical wiring.

FIGURE 35 is a schematic diagram illustrating an alternative LED placement for improved spatial uniformity. Two linear arrays of landscape oriented LEDs 15 are placed one on top of the other where the LED emission of one array fills in the gap of the other and vice versa, arranged as shown.

FIGURE 36 is a graph showing an emission profile of emission 3010 against horizontal position 3012, relating to the exemplary embodiment of FIGURE 35. The extent to which the LEDs overlap 3018 depends on the precise output of the LEDs. Here the blue 3016 and yellow 3014 emission 3010 are shown as a function of horizontal position 3012. The entrance aperture of a stepped waveguide depends on the overall combined height of the LED array 15. This in turn is dependent on the minimum proximity 3020 between placed units and the width of the LED package 3010.

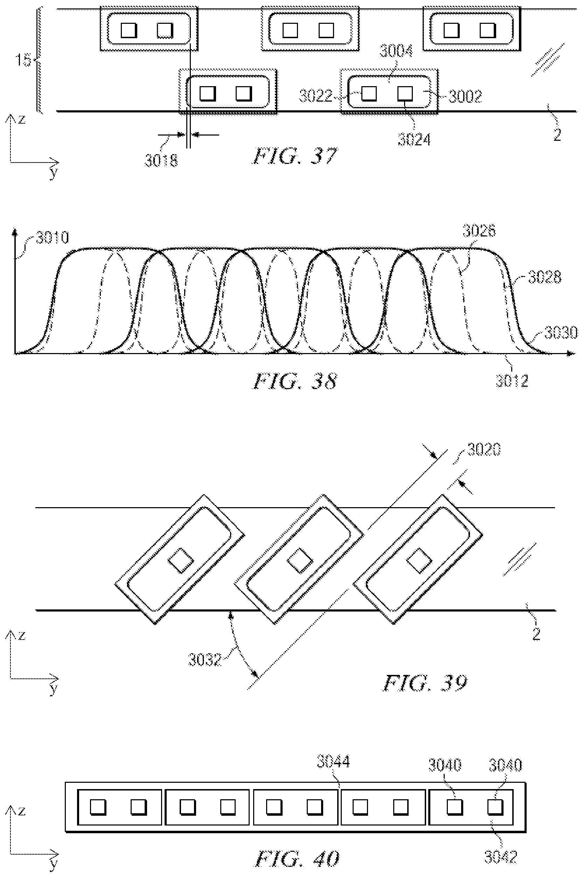

FIGURE 37 is a schematic diagram illustrating a dual array placement scheme in which dual chip LED packages are used for improved uniformity. Chips 3022 and 3024 reside in the same physical packaged sharing a common phosphor 3002, arranged as shown.

FIGURE 38 is a graph showing an emission profile of emission 3010 against horizontal position 3012, relating to the exemplary embodiment of Figure 37. The more spread blue emission from the multiple chips 3022, 3024 result in the uniform output 3030 from emissions 3026, 3028.

FIGURE 39 is a schematic diagram illustrating a slanted LED array embodiment where the orientation and angle 3032 and unit separation 3020 can be chosen for uniformity and entrance aperture size. The LED packages are arranged as shown in the Figure.

FIGURE 40 is a schematic diagram illustrating an LED emitting array with shared phosphor 3042 dual chip 3040 LED optically isolated sections. The gap 3044 can be significantly reduced over that achieved with separate packaging, thereby improving uniformity.

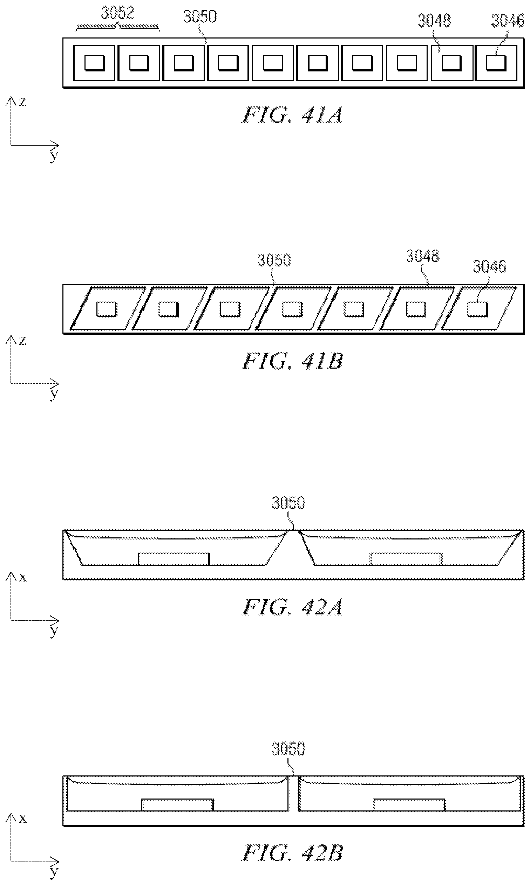

FIGURE 41A is a schematic diagram illustrating a related single packaged LED source array where chips 3052 can be addressed together reducing electrical connections and independent driver requirements while improving uniformity over the previous dual chip approach of FIGURE 40.

FIGURE 41B is a schematic diagram illustrating an embodiment that is similar to the embodiment of FIGURE 41A, but includes oblique boundaries 3050 to further improve uniformity. Slanted chip illuminator elements may also be incorporated in this scheme though not shown here.

FIGURES 42A and 42B are schematic diagrams illustrating cross sections of multichip LED packages where optical isolation is provided by a thin wall 3050 between emitting regions.

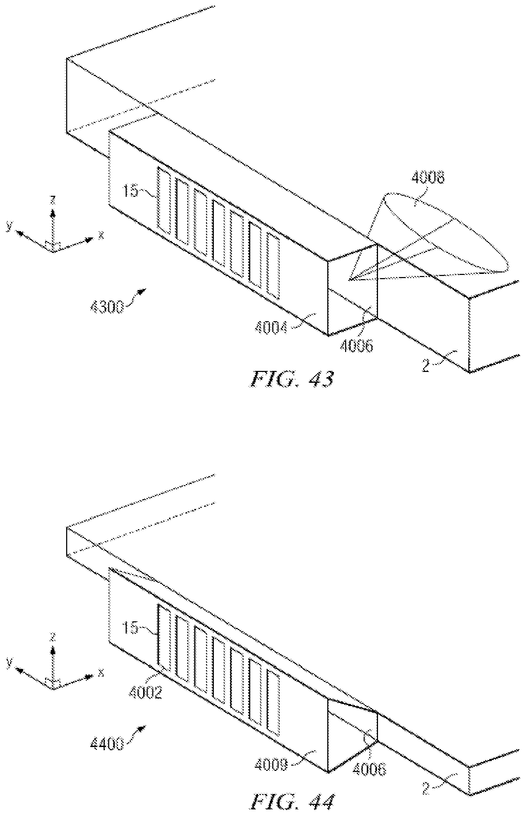

FIGURE 43 is a schematic perspective diagram illustrating a directional backlight 4300 including a shared non-imaging optical element being a homogenizing element 4004 arranged between the LED array 15 and the input end 2 of the waveguide for improved input uniformity. The directional backlight 4300 includes LED array 15 optically coupled to input end 2 of a stepped waveguide of the directional backlight 4300, arranged as shown. In this exemplary embodiment, each LED in the LED array 15 selectively emits light that passes through the homogenizing element 4004 and is incident at input end 2 of the stepped waveguide of the directional backlight 4300.

A diffuser 4006 may be arranged at the output of the homogenizing element 4004 and input to input end 2 that may provide an asymmetric diffusion cone 4008 for incident light rays from the LEDs. Homogenizing element 4004 may be provided by an air gap, or preferentially by a material of refractive index similar to the refractive index of the optical valve 4300. Advantageously, the small vertical diffusion angle (z-direction) of cone 4008 means that scattering in the vertical direction in the directional backlight 4300 that would create light losses and stray light regions over the display area is minimized.

The thickness of the homogenizing element 4004 and the lateral (y-direction) cone sizes of the diffusion cone 4008 may be adjusted to achieve mixing between adjacent emitting apertures of the respective LEDs. Advantageously, the uniformity of illumination in the illumination windows 26 (e.g., shown in FIGURE 6A) may be controlled to achieve low image flicker for a moving observer, while minimizing image cross talk. Further, color differences within the LED chip package, for example between a blue gallium nitride emitter and yellow phosphor may be blurred, providing increased color uniformity for an observer moving in the window plane, and also increased uniformity over the display surface for a fixed observer. Further, the diffuser 4006 may be used to increase cone angle of light from the LED in the stepped waveguide of the optical valve 4300, and may be used to reduce stray light artefacts.

**FIGURE 44** is a schematic perspective diagram illustrating another directional backlight 4400 including a shared non-imaging optical element being a tapered homogenizing element 4009 arranged between the LED array 15 and the input end 2 of the waveguide for improved input uniformity. The directional backlight 4400 includes LED array 15 optically coupled to the input end 2 of a stepped waveguide of the directional backlight 4400, arranged as shown. In this exemplary embodiment, the parallel sided homogenizing element 4004 of FIGURE 43 is replaced by the tapered homogenizing element 4009. The portrait arrangement of LED apertures 4002 advantageously achieves a small separation of LEDs in the y-direction. However, to achieve high efficiency and reduce cross-talk in the stepped waveguide of the optical valve 4400, it is desirable to reduce the height of the input end 2 (in the z-direction). This exemplary embodiment achieves efficient coupling of the portrait LEDs into a thin input end 2 using a tapered section. Etendue considerations mean that the light cannot be coupled into guiding modes with full efficiency, however the losses occur within or close to the tapered homogenizing element 4009, and so the resulting stray light can conveniently be captured.

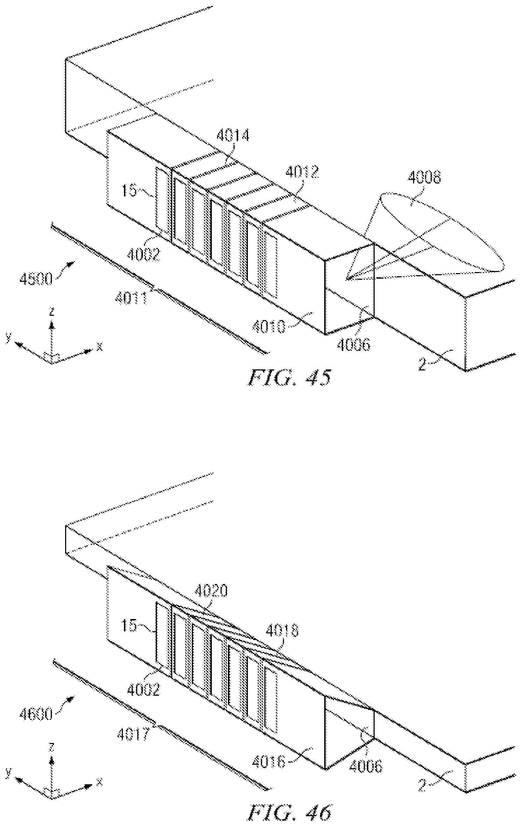

**FIGURE 45** is a schematic perspective diagram illustrating directional backlight 4500 including a separated LED sources with cuboid non-imaging optical elements being homogenizing sections 4012 of a parallel sided homogenizer array 4011. The directional backlight 4500 includes LED array 15 optically coupled to the input end 2 of a stepped waveguide of the directional backlight 4500, arranged as shown. In this exemplary embodiment, the parallel sided homogenizer array 4011 has homogenizing sections 4012 that are optically separated from adjacent sections by means of interfaces 4014. Each interface 4014 may be a small air gap (to achieve optical separation by TIR within the section), may be metallized regions or may be light absorbing regions. At the end of the homogenizer array 4011, end sections 4010 may be provided with increased width so that the intensity of the end windows is somewhat reduced, achieving a roll-off in intensity at the edge of the viewing region. This exemplary embodiment achieves a uniform intensity distribution across the window plane, with reduced cross talk in comparison to the embodiment of FIGURE 43, due to the optical separation of the homogenizing sections 4012.

**FIGURE 46** is a schematic perspective diagram illustrating a directional backlight 4600 including a separated LED sources with trapezoid sided non-imaging optical elements homogenizing sections 4018 of a tapered homogenizer 4017. The directional backlight 4600 includes LED array 15 optically coupled to the input end 2 of a stepped waveguide of the directional backlight 4600, arranged as shown. In this exemplary embodiment, the tapered homogenizer 4017 of FIGURE 44 has additional homogenizing sections 4018 as described with reference to FIGURE 45. This exemplary embodiment achieves coupling from portrait orientation LEDs into a thin stepped waveguide with low cross talk and high illumination window 26 uniformity.

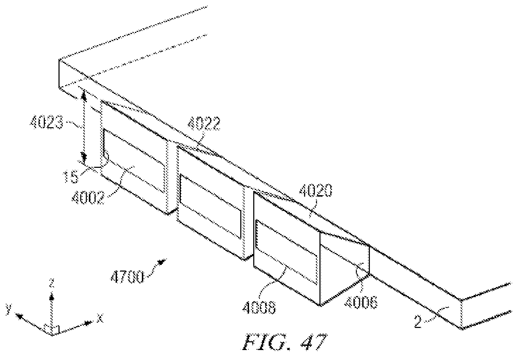

**FIGURE 47** is a schematic perspective diagram illustrating a directional backlight 4700 including a separated LED sources in landscape orientation with trapezoid sided non-imaging optical elements being homogenizing elements 4020. The directional backlight 4700 includes LED array 15 optically coupled to the input end 2 of a stepped waveguide of the directional backlight 4700, arranged as shown. In this exemplary embodiment, the homogenizing elements 4020 include expanding tapers in the y-direction and contracting tapers in the z direction. Gaps 4022 are arranged between adjacent homogenizing elements 4020 to provide optical separation of the respective rays from the LEDs. This exemplary embodiment may be used to further reduce the height of the input end 2 (in the z-direction) compared to the embodiment of FIGURE 46 for example. Reducing height of the input end 2 reduces image artefacts, cross talk and system size, and increases efficiency. The height of the input end 4023 of the homogenizing elements 4020 may be arranged to fit the package height or may be oversized to reduce stray light directed into the optical system. Advantageously, gaps between the packages of the LED 4002 may be minimized, thus increasing window 26 uniformity. Further, the diffuser 4006 may be used to increase cone angle of light from the LED in the stepped waveguide of the optical valve 4700, and may be used to reduce stray light artefacts.

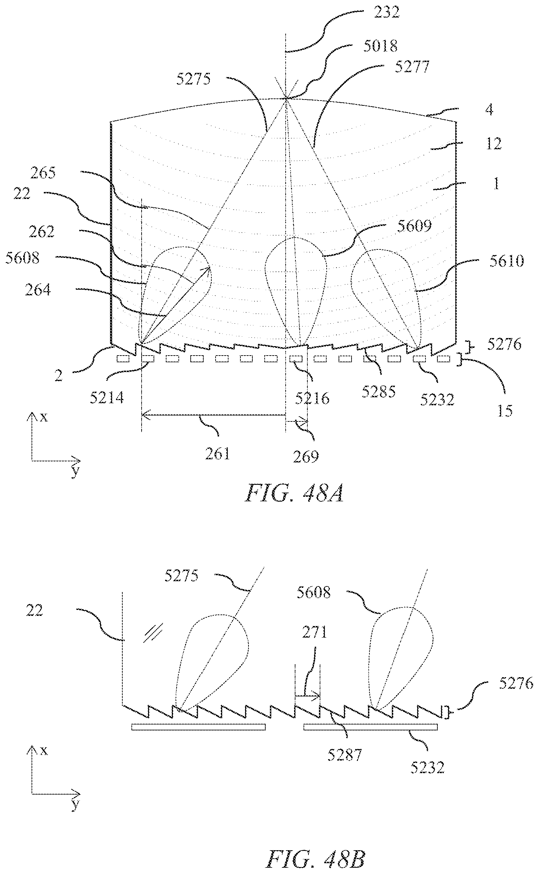

**FIGURE 48A** is a schematic diagram illustrating a top view of a directional backlight, not forming an embodiment of the invention including a waveguide 1 having an input end 2 comprising light redirecting input facets 5276 arranged to achieve increased display illumination uniformity between the waveguide areas illuminated by different illuminator elements, such as illuminator elements 5014, 5016 and 5232 respectively that are arranged at respective distances 261 from the optical axis 232 of the waveguide 1. The optical axis may comprise the optical axis of the reflective end 4 and further may be the axis of lateral symmetry of the waveguide 1, as discussed above. Thus facets 5276 on input end 2 may be arranged to redirect the principal axes 5275, 5277 of respective light cones 5608, 5610 representing distributions of luminous intensity laterally by angle of the light in the waveguide 1 from respective illuminator elements 5214, 5216, 5232. This will now be described in more detail. The luminous intensity distributions of the light output by the respective illuminator elements of the array 15 have the same shape the same for each illuminator element and may be Lambertian in air, for example as typically provided by LEDs. The illuminator elements of the array 15 are all oriented in the same orientation laterally, so the luminous intensity distributions laterally by angle of the light output thereby, i.e. before entry into the waveguide 1, are the same, each having the same shape and being centered on the same angle due to the common orientation.

The input end 2 comprises an array of input facets 5276 that form an optical structure between the illuminator elements 15 and the waveguide 1 that is arranged to change the distributions of the light from the respective illuminator elements by angular deflection due to the refraction on entry into the waveguide 1 as the input light. Each input facet 5276 is planar. The input facets 5276 are each aligned with an illuminator element, having a pitch 269 in the lateral direction that is the same as the pitch of the illuminator elements in the lateral direction. On incidence with a material with refractive index 1.5 at the input end 2 of the waveguide 1 , the luminous intensity distribution is contained within luminous intensity of half angle 41.8° distributions, as shown for example for distributions 5608, 5609, 5610 of the light from illuminator elements 5214, 5216, 5232. This forms distributions of luminous intensity 264 laterally by angle 262 of the light in the waveguide 1.

The input facets 5276 are inclined at different angles so that the distributions of luminous intensity laterally by angle of the light in the waveguide 1 from different light sources is changed by angles that vary so that those distributions vary with the input positions of the illuminator elements in the lateral direction, as illustrated for distributions 5608, 5609, 5610. For example, the axis of the maximum of the distribution 5608 is directed at an angle 265 to the optical axis.

In this example, the directional backlight is arranged such that the input light in the waveguide 1 from all the respective illuminator elements have distributions of luminous intensity laterally by angle that have respective maximums at an angle directed towards a common point on the line of the optical axis, being in this case point 5018 on the reflective end 4, that is the point 5018 in the x-y plane comprises the intersection of the optical axis 232 with the reflective end 4. By way of illustration distributions 5608 and 5610 have maximums directed along axes 5275, 5277.

The distribution of light intensity across the reflective end 4 of the waveguide 1 is thus determined at least in part by the luminous intensity distributions, for example distributions 5608, 5609, 5610. The intensity of light rays reflected from the end thus varies across the width of the end 4. The light output through the first guide surface 6 of the waveguide thus provides a variation of display luminance that varies with lateral position across the SLM 48. For off-axis illuminator elements, the luminance varies with lateral position across the SLM 48 and height on the SLM 48. It would be desirable to reduce this luminance distribution for lateral positions. Advantageously, tilting the axes 5275, 5277 achieves a reduction of the change in luminance distribution of the SLM 48 as the observer moves off-axis. The highest luminance of the display can advantageously be arranged to be close to the optical axis of the waveguide, and thus typically towards the centre of the SLM 48.

The luminous intensity distributions will be further described below with reference to FIGUREs 53A-E. Advantageously display uniformity can be increased across the display area.

Further, the aspect ratio of the waveguide can be increased. In embodiments wherein no diffuser is used at the input end 2 of the waveguide 1, the maximum aspect ratio of the waveguide 1 is approximately 16:9 for on-axis illuminator elements. For off-axis illuminator elements, such an aspect ratio means that the edges of the SLM 48 may not be illuminated unless the luminous intensity distribution of off-axis illuminator elements is adjusted accordingly. Thus, the present embodiments can achieve reduced number of illuminator elements by achieving increased aspect ratio, and thus reduce display cost while achieving a filled display area.

Such embodiments can be combined with the light directing optics of other embodiments herein.

**FIGURE 48B** is a schematic diagram illustrating a top view of part of a directional backlight including a waveguide 1 comprising light redirecting input facets 5276 arranged to achieve increased display illumination uniformity. The arrangement of the directional backlight is similar to that of FIGURE 48A except that the input facets 5276 are arranged to have a pitch 271 in the lateral direction that is smaller than the pitch of the illuminator elements 5232 and smaller than the light emitting region of the illuminator elements 5232. Advantageously the uniformity of output from the array of illuminator elements may be increased while the luminous intensity distribution may be modified to increase display uniformity for off-axis viewing.

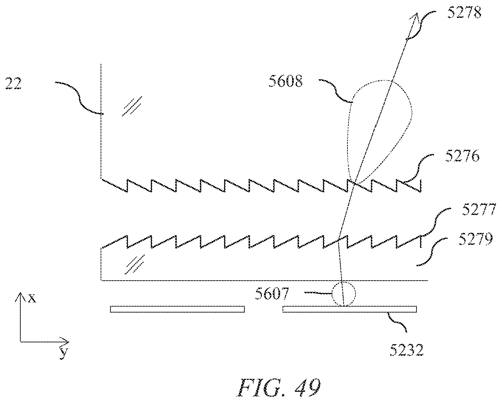

**FIGURE 49** is a schematic diagram illustrating a front view of part of an input coupling element for a waveguide 1 of a directional backlight. In this case, the waveguide 1 has an input end comprising input facets 5276 having a similar construction to FIGURE 48, but an input coupling element 5279 is provided as an additional optical element between the illuminator elements 5232 and the input end 2 of the waveguide 1. The additional optical element 5279 comprises an array of facets 5277 arranged to change the distributions of luminous intensity laterally by angle of the light from the respective illuminator elements 5232 by angular deflection. For example, light rays 5278 from source 5232 with a Lambertian luminous intensity distribution 5607 against angle, may be directed by facets 5276 and further facets 5277 on additional light directing element 5279. The input coupling element 5279 and the input facets 5276 act in combination to change the distributions of the light from the respective illuminator elements 5232 in the same manner as described above for the directional backlight FIGURE where the deflection is performed by the input facets 5276 of the waveguide 1 alone. Advantageously, the optical power of the input coupling elements comprising facets 5276, 5277 can be increased, enabling larger aspect ratio waveguides 1 to be illuminated, thus achieving increased display width uniformity of illumination, and reduced cost.

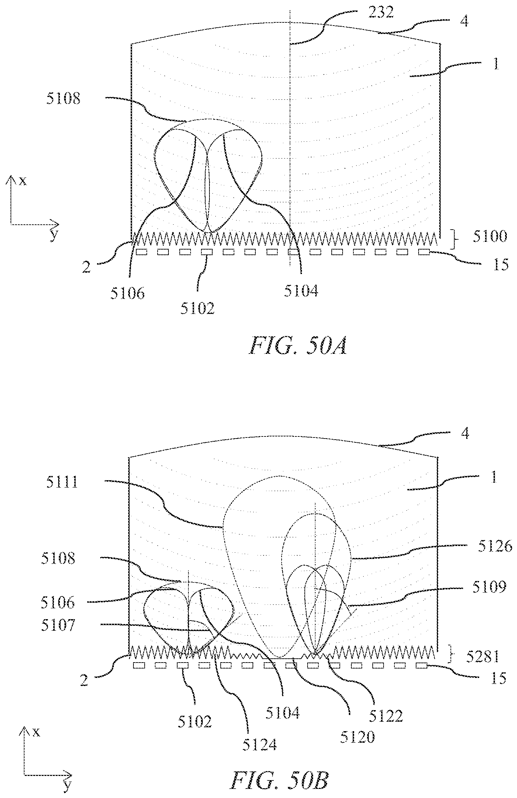

**FIGURE 50A** is a schematic diagram illustrating a front view of a directional backlight including a waveguide 1 having an input end 2 that controls the distributions of luminous intensity laterally by angle of the light in the waveguide 1 from respective illuminator elements 5102.

The illuminator elements 5102 of the array 15 are all oriented in the same orientation laterally, so the luminous intensity distributions laterally by angle of the light output thereby, i.e. before entry into the waveguide 1, are the same, as described above with reference to the directional backlight of FIGURE 48A.

The input end 2 comprises an array 5100 of input facets that form an optical structure between the illuminator elements 15 and the waveguide 1 that is arranged to change the distributions of the light from the respective illuminator elements 5102. In particular, the array 5100 of input facets is arranged to increase the total angle of the output luminous intensity distribution 5108 laterally by angle with respect to the input angle of the luminous intensity distribution laterally by angle of the light from the source 5102 that would be achieved if the input end 2 were planar.

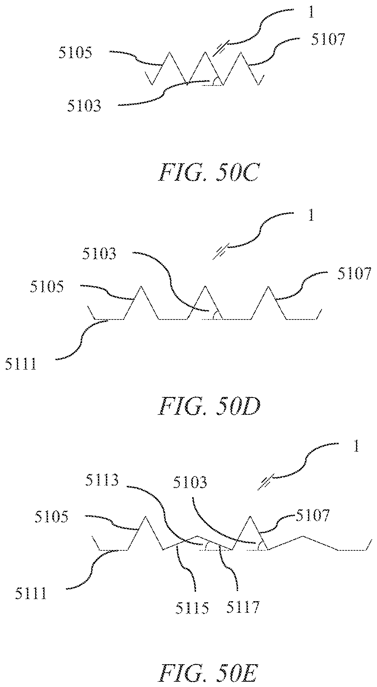

As shown in a detail in **FIGURE 50C** the array 5100 may comprise inclined facets 5105, 5107 that are substantially planar and inclined at facet angles 5103 in both senses to a normal to the optical axis of the waveguide 1.

Thus the input facets change the luminous intensity distributions laterally by angle of the light from the respective illuminator elements 5102 to form for the light in the waveguide 1 luminous intensity distribution components illustrated for one of the illuminator elements 5102 by light luminous intensity distributions 5104, 5106 that combine to achieve a resultant luminous intensity distribution illustrated by light luminous intensity distribution 5108. Further diffusion properties such as provided by surface roughening may be applied to the surfaces 5105, 5107 to further increase the total luminous intensity distribution angle 290 of the luminous intensity distribution within the medium of the waveguide 1. Thus, the angular output of the illuminator element 5102 may be increased in a controlled manner. The angular size of the luminous intensity distribution 5108 may thus be increased.

In an illustrative example, the input facets of the array 5100 may be arranged with an isosceles triangular cross section wherein the facet angle 5103 of the facets may be 22.5° to the horizontal. Advantageously such facet angle can reduce the visibility of stray light from the reflective end 4 falling on the input end 2 by distributing the internally reflected light from the facet array 5100.

The facets may alternatively be arranged with an isosceles triangular cross section wherein the facet angle 5103 of the facets from the horizontal may be 60°. such a facet angle may achieve a substantially Lambertian luminous intensity distribution of light within the waveguide 1 without index matching the illuminator elements to the input end.

Advantageously the arrangement of the input facets of the array 5100 may be designed so that the aperture of the reflective end 4 of the waveguide 1 may be filled with light for all aspect ratios. Further, the waveguide and illuminator elements 5102 may remain mechanically separate to minimize mechanical and optical failure that may be provided by failure of the index matching material between the illuminator element and waveguide 1.

By way of comparison, known 2D waveguides for non-directional display applications may use prismatic arrays to couple light into waveguides from LEDs with a Lambertian output. In such waveguides, the problem to be solved is uniform illumination of the waveguide in the region close to the LEDs so that the display appears to be uniformly illuminated. However, in the present embodiments, the problem to be solved is (i) the filling of the aperture of the reflective end 4 of the waveguide 1 and (ii) the reduction of the appearance of stray light from the reflective end 4 falling on the input end 2.

Advantageously, the aspect ratio of the display may be increased while maintaining display uniformity, reducing cost.

In the arrangement of FIGURE 50A, the input facets of the array 5100 repeat uniformly across the input end 2. Thus, when the luminous intensity distributions laterally by angle of the light output by the illuminator elements 5102 is the same, due them being oriented in the same orientation laterally, then the luminous intensity distributions laterally by angle of the light in the waveguide 1 also the same without variation with the input position of the illuminator element 5102. However, since the input facets of the array 5100 form an optical structure that changes the luminous intensity distributions on entry of light into the waveguide, the form of the input facets may be varied across the length of the array 5100 to provide luminous intensity distributions for the light inside the waveguide 1 that vary with the input position of the illuminator elements 5102. An example of this will now be described with reference to FIGURE 50B.

**FIGURE 50B** is a schematic diagram illustrating a front view of a directional backlight that is the same as that of FIGURE 50A except that the input end 2 comprises an array 5281 of input facets having a similar form but with varying in size across the input end 2. In particular, the array 5281 may comprise at least first region 5122 and second region 5124 in which the input facets of different sizes so that the luminous intensity distributions 5108, 5126 laterally by angle of the light inside the waveguide from an individual illuminator element 5102 are different. In particular, the distributions of luminous intensity laterally by angle increase in width with distance from the optical axis of the waveguide 1 in the first and second regions 5122 and 5124. The width may be defined for example as the angular width 5107, 5109 for regions 5108, 5126 respectively at which the luminous intensity drops to 10% of the peak luminous intensity. This increase in width allows the light to fill the aperture of the reflective end 4 for illuminator elements 5120 across the array 15.

In an illustrative example shown in FIGURE 50B, the first region 5120 is closer to the optical axis of the waveguide 1 than the second region 5124 and the input facets in the first region 5122 may be arranged with an isosceles triangular cross section wherein the slope of the input facets is 22.5°to the horizontal and in the second region 5124 the input facets may be arranged with an isosceles triangular cross section wherein the slope of the input facets is 60°. In a further embodiment, optionally the input end 2 may include a planar region 5120 closer to the optical axis of the waveguide 1 than the first region 5120 of input facets to achieve an unmodified luminous intensity distribution 5111. In further embodiments, the slope of the facets of element 5281 may be arranged to vary across the width of the input end 2 in a more continuous manner, or with an increased number of regions to advantageously improve the variation of display luminance with viewing angle.

**FIGUREs 50D** and **50E** are schematic diagrams illustrating a front view of a detail of a directional backlight comprising a waveguide 1 including an array of input facets on the input end 2 having modified forms as compared to FIGURE 50C that may be applied to the directional backlights of FIGURES 50A and 50B.

FIGURE 50D shows an example in which additional intermediate facets 5111 extending along a normal to the optical axis of the waveguide 1 are arranged intermediate prism elements comprising the inclined input facets 5105, 5107. Such an arrangement may achieve further modification of the output of the input end 2 to achieve further filling of the reflective end 4. Such intermediate facets 5111 may be provide further modification of the directional distribution of the luminous intensity distribution inside the waveguide 1.

FIGURE 50E illustrates an example in which further prism elements with inclined input facets 5115, 5117 are incorporated between prism elements comprising the inclined input facets 5105, 5107 wherein the angle 5113 between the input facets 5115, 5117 is smaller than the angle 5103 between the input facets 5105, 5107. Such an arrangement may achieve further modification of the luminous intensity distribution inside the waveguide 1, as well as reduction in the visibility of light rays that are reflected from the input end 2 after reflection from the reflective end 4.

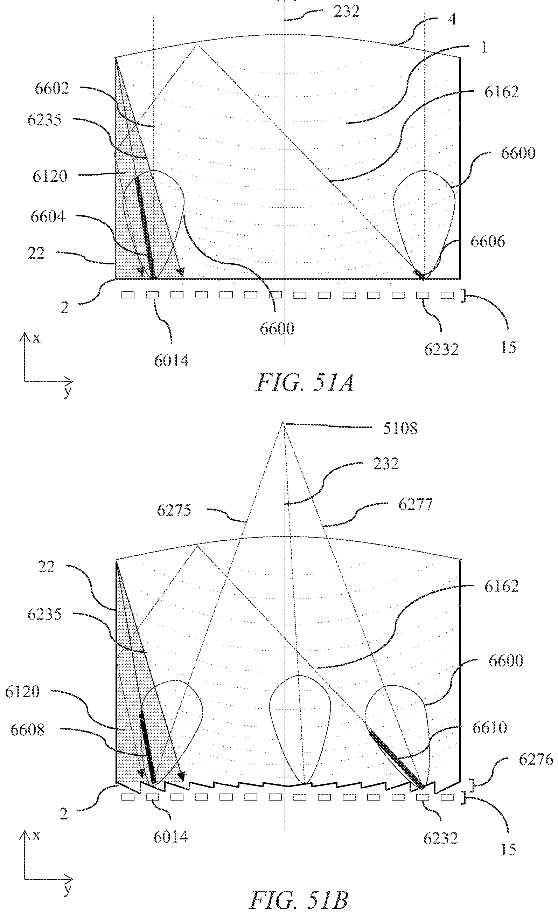

**FIGURE 51A** is a schematic diagram illustrating a top view of a directional backlight including a waveguide comprising a planar input end 2 arranged with illuminator elements 6014, 6232 to achieve filling of portions 6120, in part by means of reflection for side 22 of waveguide 1. Illuminator elements such as LEDs typically achieve a substantially Lambertian output luminous intensity distribution in air. When coupled into the waveguide 1, this produces a luminous intensity distribution 6600 laterally by angle for the light from an illuminator element inside the waveguide 1 having a lateral half-angle extent of the critical angle in the medium of the valve, for example 41.8° for a refractive index of 1.5. The luminous intensity output of the rays 6162 from source 6232 can thus be shown by section 6606 of luminous intensity distribution 6600 whereas the ray intensity for ray 6235 is shown by section 6604 of the luminous intensity distribution 6600. Thus the intensity of light from the shadow portion 6120 may be lower than that in the regions that are seen to be illuminated by source 6014, and a boundary at the edge of shadow portion 6120 may be visible. It would be desirable to reduce the visibility of the boundary at the edge of the portion 6120.

By way of comparison, **FIGURE 51B** is a schematic diagram illustrating a top view of a directional backlight having a similar arrangement to that of FIGURE 48A, in particular comprising a waveguide 1 having light redirecting input facets 6276 arranged to achieve increased display illumination uniformity between the waveguide areas illuminated by different illuminator elements, for example illuminator elements 6014 and 6232 respectively. Thus facets 6276 on the input end 2 may be arranged to redirect the respective luminous intensity distributions 6600 laterally by angle of light inside the waveguide 1 from respective illuminator elements, such that the distributions 6600 have respective maximums at an angle directed towards a common point 5108 on the line of the optical axis, being in this case point 5108 that is positioned beyond the reflective end 4. By way of illustration, the luminous intensity distributions 6600 laterally by angle of light inside the waveguide 1 from respective illuminator elements 6014 and 6232 have maximums directed along axes 6275 and 6277.

As a result, in the example, the luminous intensity represented by section 6610 in the shadow portion 6120 achieved by illuminator element 6232 is similar to the light ray luminous intensity represented by section 6608 in the illuminated region achieved by illuminator element 6014. Advantageously display uniformity can be increased across the display area.

In the above examples, the input end 2 comprises an array of input facets forming an optical structure that is arranged to change the luminous intensity distributions laterally by angle of the light from the respective illuminator elements, an optical structure providing a similar effect may comprise an additional optical element arranged between the illuminator elements and the input end 2 of the waveguide 1. Some examples of this will now be described.

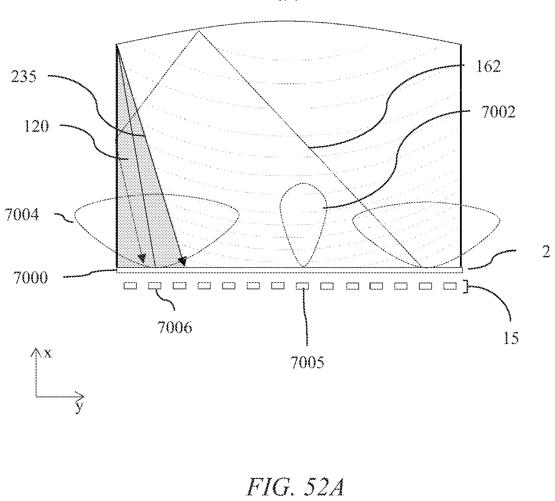

FIGURE 52A is a schematic diagram illustrating a top view of a directional backlight comprising a waveguide 1 and a light redirecting input diffuser 7000 arranged to achieve increased display illumination uniformity. The directional backlight comprises an array 15 of illuminator elements, for example illuminator element 7005 aligned with the optical axis of the waveguide 1 and illuminator element 7006 offset from the optical axis of the waveguide 1. The illuminator elements of the array 15 are all oriented in the same orientation laterally, so the luminous intensity distributions laterally by angle of the light output thereby, i.e. before entry into the waveguide 1, are the same, each having the same shape and being centered on the same angle due to the common orientation.

The diffuser 7000 is arranged between the illuminator elements and the input end 2 of the waveguide 1 extending across all the illuminator elements, in this example across the entire length of the input end 2 in the lateral direction. The diffuser 7000 changes the angular dispersion of the luminous intensity distributions laterally by angle of the light from the respective illuminator elements and therefore changes the distributions of the light from the respective illuminator elements entering into the waveguide 1 as the input light.

The diffuser 7000 has a varying diffusion profile across its length in the lateral direction so that the amounts by which the diffuser 7000 change the angular dispersion of the luminous intensity distributions vary in the lateral direction across the input end 2. In particular, the light is more widely dispersed at the edges of the input end 2 compared to the centre around the optical axis. In this example, the directional backlight is arranged such that the input light in the waveguide 1 from the respective illuminator elements have distributions of luminous intensity laterally by angle that increase in width with distance from the optical axis of the waveguide 1. By way of illustration, the light from illuminator element 7005 aligned with the optical axis has a luminous intensity distribution 7002 inside the waveguide 1 and the light from illuminator element 7006 has a luminous intensity distribution 7004 inside the waveguide 1 that is laterally wider than the luminous intensity distribution 7002. That is, central luminous intensity distributions 7002 may undergo a small amount of diffusion whereas edge luminous intensity distributions 7004 are more widely laterally dispersed.

Advantageously, the diffuser 7000 may be designed so that the aperture of the reflective end 4 of the waveguide 1 may be filled with light for all aspect ratios. Such a diffuser 7000 can achieve illumination of wide aspect ratio panels such as those with a 16:9 aspect ratio without substantial light losses and acceptable uniformity.

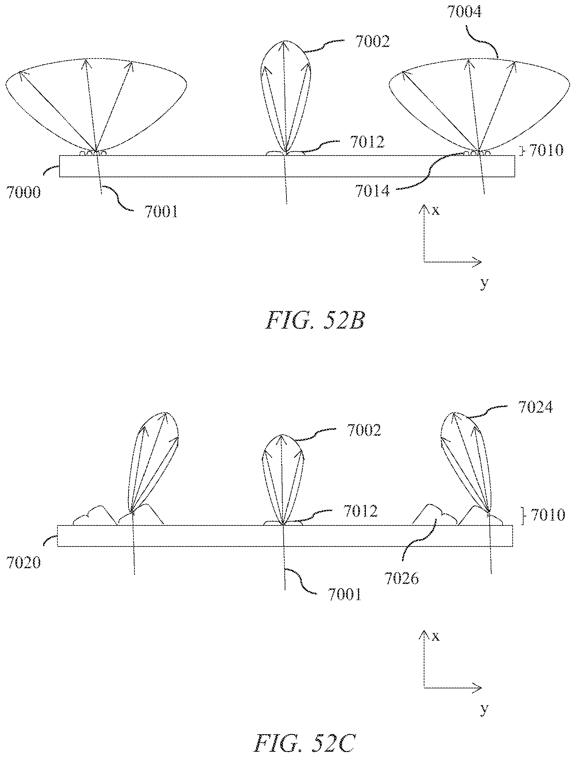

FIGURE 52B is a schematic diagram illustrating a side view of a possible construction for the diffuser 7000 of FIGURE 52A. The diffuser 7000 may comprise a surface or bulk diffusing layer 7010 wherein the feature size of the diffusing elements in the layer 7010 may vary in size and/or density across the lateral width of the diffuser 7000 such that elements in region 7012 are more closely packed and of smaller size than elements in region 7014. Thus input collimated rays 7001 may achieve respective light output luminous intensity distributions 7002, 7004 that vary according to the input position across the length in the lateral direction of input end 2. Such an arrangement can be achieved for example by embossing into a lacquer from a tool. Such a tool may be formed by means of controlled photoresist exposure. Advantageously such an element has small size in comparison to the diffuser 68 in the aperture of the spatial light modulator 48, having substantially the same dimensions as the input end 2, and low cost while achieving increased display uniformity and wider display aspect ratio.

FIGURE 52C is a schematic diagram illustrating a side view of a further possible construction for the diffuser 7000 of FIGURE 52A. As for FIGURE 52B, the structure of the diffuser layer 7010 for diffuser 7000 may vary across the length in the lateral direction of the input end 2 so that light luminous intensity distributions 7002, 7024 are provided to achieve increased display uniformity with viewing angle. However, the feature size of diffusing elements of layer 7010 in region 7012 may be similar in region 7026, and a tilt of elements in region 7026 may be provided to achieve a tilt in the pointing direction of output luminous intensity distribution 7024 compared to luminous intensity distribution 7002 for input ray 7001. Advantageously, an increased brightness uniformity can be achieved for the display area as the observer moves off-axis and respective illuminator elements 7006 are illuminated.

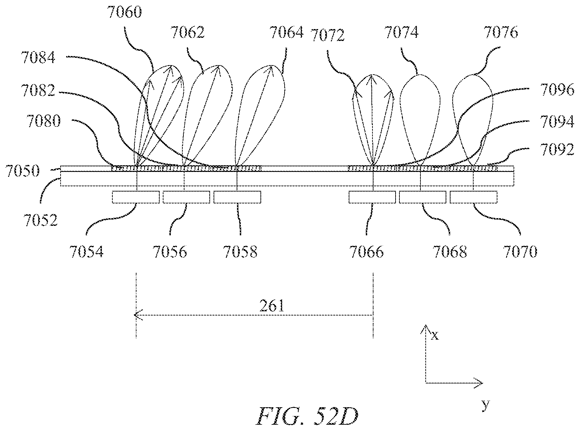

FIGURE 52D is a schematic diagram illustrating a side view of a directional backlight comprising a diffractive layer 7050 arranged to achieve a variation of luminous intensity distributions with lateral position across the input end 2 of a waveguide 1. The directional backlight comprises an array of illuminator elements 7054, 7056, 7058, 7066 , 7068 and 7070 that are all oriented in the same orientation laterally, so the luminous intensity distributions laterally by angle of the light output thereby, i.e. before entry into the waveguide 1, are the same, each having the same shape and being centered on the same angle due to the common orientation.

A diffractive layer 7050 supported on a substrate 7052 is arranged between the illuminator elements and the input end 2 of the waveguide 1 extending across all the illuminator elements, in this example across the entire length of the input end 2 in the lateral direction. The diffractive layer 7050 may for example be a surface relief hologram or a volume hologram and may comprise multiple layers.

The diffractive layer 7050 changes the angular dispersion of the luminous intensity distributions laterally by angle of the light from the respective illuminator elements in the same manner as the diffuser 7000 in FIGURE 52A, as described above. To achieve this, the diffractive layer 7050 may comprise an array of light directing elements aligned with the respective illuminator elements to process the light output thereby. By way of illustration, red illuminator elements 7054, 7066, green illuminator elements 7056, 7068 and blue illuminator elements 7058, 7070 may for example comprise narrow band illuminator elements and may be directed, respectively, by red light directing elements 7080, 7096, green light directing elements 7082, 7094 and blue light directing elements 7084, 7092 of the diffractive layer 7050.

Thus luminous intensity distributions 7060, 7062, 7064 may be different from distributions 7072, 7074, 7076 and achieve the advantageous light directing properties described for example with reference to FIGURE 48A. Further the diffractive elements may be provided in a thin layer and may be tuned to the colour of the illuminator elements, reducing dispersion of the light directing elements.

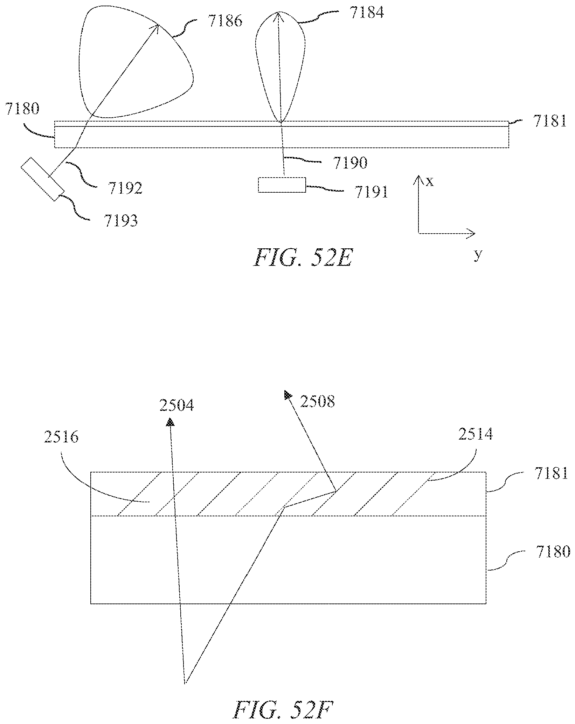

FIGURE 52E is a schematic diagram of an embodiment of the invention illustrating a high angle diffuser arranged to provide to achieve a variation of luminous intensity distributions with lateral position. A high angle diffuser 7181 may be arranged on substrate 7180 and arranged with light sources 7191, 7193 with varying orientation with respect to the diffuser 7181, rotated about the z axis. Light rays 7190 are directed through the diffuser substantially with low scatter and luminous intensity distribution 7184 is substantially the same as for the unmodified source 7191. For off-axis light sources 7193, rays 7192 are directed into the diffuse cone of the diffuser 7181, thus increasing the width of the luminous intensity distribution 7186 with respect to the width of distribution 7184. Advantageously the uniformity of output may be increased. In other embodiments, the orientation of the light sources 7191, 7193 may be the same and the diffuser may provide a variation in output across the input side as seen from a point at the reflective end 4.

FIGURE 52F is a schematic diagram illustrating one example embodiment of a high angle diffuser 7181. The diffuser comprises a support layer 7180 has a layer 7181 formed thereon comprising a monomeric mixture with inclined regions 2514 of low refractive index alternating with regions 2516 of high refractive index therebetween. The regions 2514 and 2516 are inclined with respect to the normal of the diffuser. Although this example includes two regions of 2514 and 2516 of differing refractive index, in general there may be additional regions of differing refractive index. Light rays 2508 that are incident close to the inclination angle of the regions 2514, 2516 may be scattered that may be due to total internal reflection between layers 2514, 2516 while light rays 2504 that are incident away from the inclination angle of the regions 2514, 2516 may be directly transmitted. Multiple scattering directions can be achieved by stacking diffusers arranged at an angle to each other so that a central clear window may be achieved with outer diffusing regions in horizontal directions or horizontal and vertical directions. At very high incident angles, the diffuser may no longer scatter the light. Thus the diffuser may be substantially transparent in a first range, which in this example is from 0 degrees to 25 degrees, with respect to the normal to the diffuser and may be substantially scattering in a second range, which in this example is from 25 degrees to 55 degrees, with respect to the normal to the diffuser.

An example of a high angle diffuser film is provided by Sumitomo Chemical Co., LTD. under the trademarked product name "Lumisty".

There will now be described graphs that illustrate directional distributions of the luminous intensity 264 laterally by angle 262 of light in the waveguide from respective illuminator elements. These graphs illustrate how those distributions may vary with the input positions of the illuminator elements in the lateral direction across the input end of the waveguide. Each of the optical structures described above that control the distributions in the waveguide may be arranged to provide any of the variations illustrated below.

FIGURE 53A is a schematic diagram illustrating a graph of luminous intensity distribution for light from a Lambertian illuminator element in air and within a waveguide 1. Thus the luminous intensity distribution 5130 representing a illuminator element output in air is a cosine function while the distribution 5132 representing a illuminator element output in the waveguide 1 with a planar input end 2, representing the distribution of luminous intensity after refraction into the waveguide 1.

FIGUREs 53B-D are schematic diagrams illustrating graphs of luminous intensity distribution for light from illuminator elements distributed in a lateral direction across the input end 2 of the waveguide 1.

In FIGURE 53B, luminous intensity distributions 5134, 5136 are produced for off-axis illuminator elements for light cones 5608, 5610 of FIGURE 48A for example after deflection by faceted structure 5276. Thus the luminous intensity distributions of luminous intensity 264 against angle 262 vary with lateral position 261 across the input end 2, in a manner having the same shape with maximums at angles offset from each other. Such variation may be used in directional backlights where an optical structure arranged between the illuminator elements and the waveguide 1 changes the orientation of the distribution, but not the shape. This may achieve, for example, direction of the maximums of the distributions towards the optical axis of the maximum.

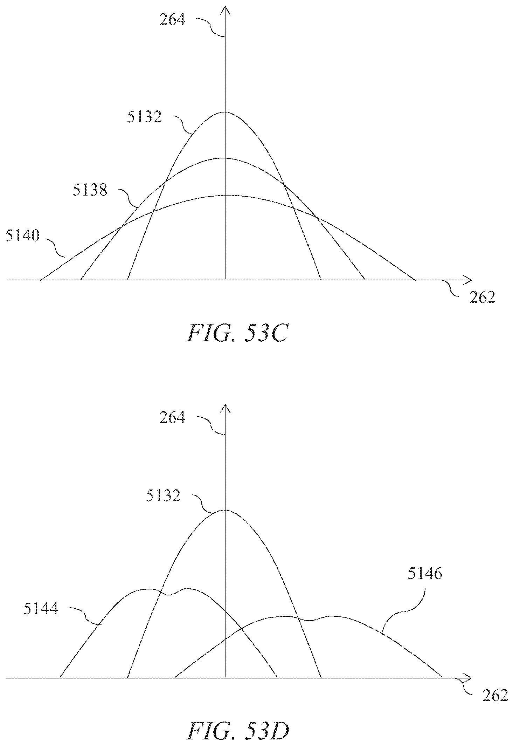

In FIGURE 53C, the distributions of luminous intensity 264 against angle 262 vary with lateral position across the input end 2, in a manner having differing angular dispersion in the lateral direction. Increasing diffusion or deflection of luminous intensity distributions as described herein may be achieved for increasing off-axis positions so that distribution 5132 may be provided on-axis while 5138 may be provided for an intermediate off-axis lateral position 261 (along the y-axis) and distribution 5140 for a higher off axis lateral position 261.

FIGURE 53D shows the distributions of luminous intensity 264 against angle 262 for the prismatic faceted structure 5281 of FIGURE 50B, for example, which may achieve a luminous intensity distribution 5132 for an on-axis source in region 5120, distribution 5144 in region 5122 and first off-axis source and distribution 5146 in region 5124. Thus the peak luminance of the display will vary as the observer moves off-axis. However, such a reduction of peak luminance may be perceived in a similar manner to display gain in known 2D displays where the on-axis luminance is greater than off-axis luminance.

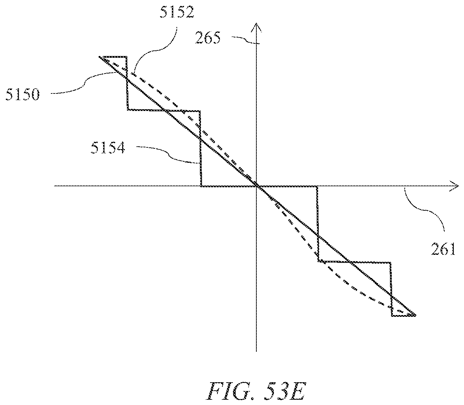

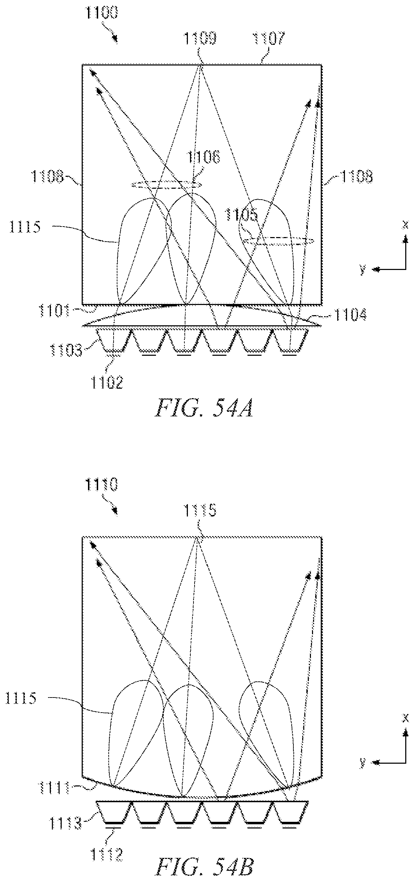

FIGURE 53E is a schematic diagram illustrating a graph of angular deflection 265 of light from illuminator elements against the lateral position 261 of the illuminator element in the lateral direction across the input end 2 of the waveguide 1. Thus, as the lateral position 261 across the input aperture 2 varies, the deflection angle 265 of the axis 5275 may vary. The variation may be a linear profile 5150, an aberrated profile 5152, (such as provided by a field lens, described in FIGUREs 54A-D below) or a stepped profile 5154 (such as shown in FIGURE 50B). Advantageously the output uniformity of the display device may be improved for off-axis viewing positions.

FIGURES 54A - 54C are schematic diagrams illustrating various field lenses. Generally, rays exiting NIOs or lens concentrators have a limited angular range. When the ray bundles are telecentric, each bundle propagates in the same direction in the stepped waveguide. Portions of ray bundles emerging from NIOs at the edge of the stepped waveguide will propagate to the side wall and be extinguished, while ray bundles emerging from NIOs at the center of the stepped waveguide will not extinguish at the side walls. This results in a non-uniform brightness across the exit face when viewed with light from NIOs at the edge of the stepped waveguide. One solution is to insert a field lens between the NIOs and stepped waveguide. Field lenses are used in optical systems to prevent vignetting (or extinguishing of rays) at a system aperture (in this case, the side walls of the optical valve) for bundles emerging from the edge of the field (or source). See, e.g., W. Smith, Modern Optical Engineering, McGraw-Hill (1990).

FIGURE 54A is a schematic diagram illustrating the top view of a directional backlight 1100, including illuminator elements 1102 optically coupled to a stepped waveguide 1109 via NIOs 1103 and a field lens 1104 arranged between the illuminator elements 1102 and the stepped waveguide 1109. The illuminator elements 1102 are all oriented in the same orientation laterally, so the luminous intensity distributions 1115 laterally by angle of the light output thereby, i.e. before entry into the waveguide 1, are the same, as described above.

The field lens 1104 has positive optical power in the lateral direction and therefore is an optical structure that is arranged to change the distributions of luminous intensity laterally by angle of the light from the respective illuminator elements 1102, by angular deflection. In particular, the field lens surface 1104 is operable to redirect the ray bundle 1105 from the NIO at the edge of the optical valve such that the rays propagate toward the edges of the reflecting surface 1107, substantially avoiding the side walls 1108. In this example, the field lens is a separate element, air-spaced between the NIOs 1103 and stepped waveguide entrance face 1101. The field lens surface may provide similar luminous intensity distributions to the arrangements of FIGURES 48A and 51B, as described above.

FIGURE 54B is a schematic diagram illustrating the top view of a directional backlight 1110, including illuminator elements 1112 optically coupled to a stepped waveguide 1115 via NIOs 1113 and a field lens surface 1111 formed by appropriately shaping the input end of the stepped waveguide 1115 entrance face. The operation of the field lens 1111 is the same as in the example of FIGURE 54A, except now the waveguide 1115 and field lens 1111 can be manufactured as one part.

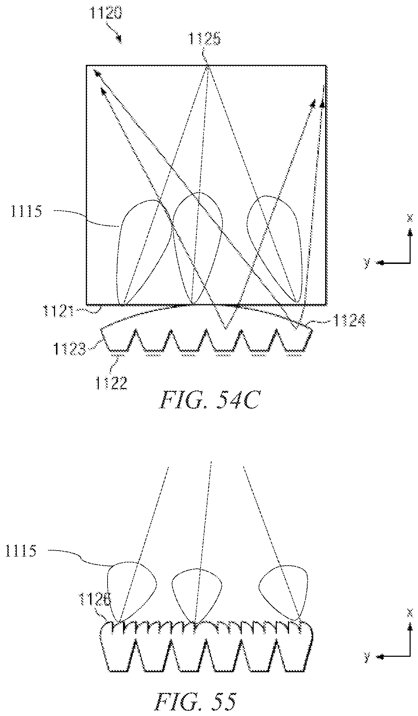

FIGURE 54C is a schematic diagram illustrating the top view of a directional backlight 1120, including illuminator elements 1122 optically coupled to stepped waveguide 1125 via NIOs 1123, and a field lens 1124 that is integrated into the array of NIOs. The field lens operates in substantially the same manner as in the example of FIGURE 54A.

FIGURE 55 is a schematic diagram illustrating the top view of item 1126 as similar to the NIO array 1123 and field lens 1124 of FIGURE 54C, except the field lens has been implemented as a Fresnel lens for more compact packaging. Note that the field lens surfaces 1104, 1111, 1124 in optical valves 1100, 1110 and 1120 can be implemented as spherical, aspheric, cylindrical, toroidal, and/or Fresnel lenses in each case.

Thus an additional optical element may comprise a field lens surface 1104 having positive optical power in the lateral direction 261 arranged to change the distributions of luminous intensity 264 laterally by angle 262, of the light from the respective illuminator elements by angular deflection.

In the above examples, the illuminator elements of the array are all oriented in the same orientation laterally, so the luminous intensity distributions laterally by angle of the light output thereby, i.e. before entry into the waveguide 1, are the same, and the desired luminous intensity distributions inside the waveguide 1 are produced by an optical structure arranged between the illuminator elements and the waveguide 1. As an alternative, the illuminator elements of the array may be oriented in different orientations laterally, so the luminous intensity distributions laterally by angle of the light output thereby are different, in particular having maximums at different angles, but possibly the same shape. Some examples of this are now illustrated.

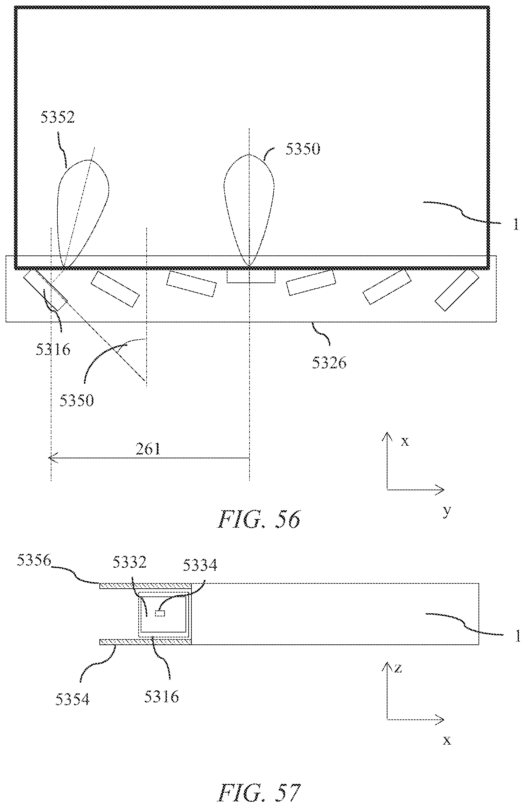

**FIGURE 56** is a schematic diagram illustrating a top view of a directional backlight including a waveguide 1 having a planar input end 2 and inclined LEDs 5316 oriented in different orientations laterally. Thus LEDs 5316 may be mounted on a substrate 5326 such that the light is emitted from the side of the package in a Lambertian manner. The LEDs 5316 may be inclined at a lateral angle 5350 that varies with the input position 261 in the lateral direction. Thus the luminous intensity distributions 5352 and 5350 inside the waveguide 1 are different, having maximums at different angles. Due to the refraction at the input end 2, the luminous intensity distributions 5352 and 5350 inside the waveguide 1 also have different shapes even where the luminous intensity distributions laterally by angle of the light output by the LEDs 5316 have the same shape.

**FIGURE 57** is a schematic diagram illustrating an edge view of a directional backlight of FIGURE 56. Thus side emitting LED 5316 may comprise an emitting element 5334 and a wavelength conversion element 5332. The package of the LED may be inclined at an angle to the input end as shown in FIGURE 56. Light may be guided into the waveguide 1 by means of reflective surfaces 5354, 5356 so that stray light is minimised and optical coupling efficiency is optimised.

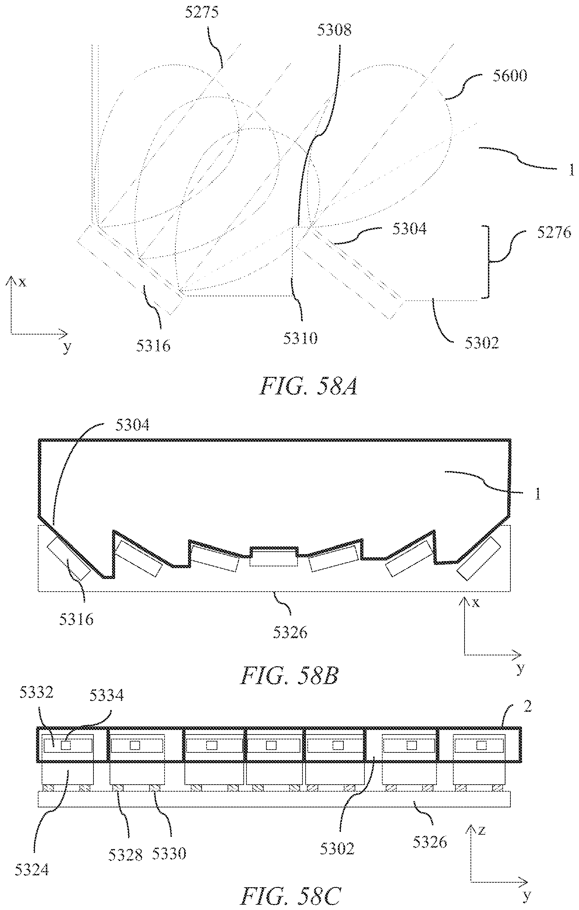

**FIGURES 58A and 58B** are schematic diagrams illustrating top views of a directional backlight comprising a waveguide 1 and inclined LEDs 5316. The LEDs 5316 are oriented in the same manner as the directional backlight of FIGURE 56. However, the input end of the waveguide 1 has a faceted structure 5276 including inclined input facets 5304, each aligned with a respective LED 5316 and oriented in an orientation parallel to the respective LED 5316. The faceted structure 5276 may further comprise draft regions 5310 and flat regions 5302, 5308 intermediate the input facets 5304. Adjacent inclined LEDs 5316 may advantageously be placed against the input facets 5304. The orientations of the LEDs 5316 provide luminous intensity distributions 5600 inside the waveguide 1 similar to the directional backlight of FIGURE 56 except that the refraction at the input end 2 is changed, or eliminated if the LEDs 5316 are optically coupled with the waveguide 1.

**FIGURE 58C** is a schematic diagram illustrating an edge view of the directional backlight of FIGURES 58A and 58B.. Advantageously the inclined LEDs 5316 with chip 5334, phosphor 5332 package 5324 and electrical contacts 5328, 5330 can be arranged closely adjacent to the input facets 5304 while the LEDs may be formed on a planar thermally conductive substrate 5326 such as an metal core printed circuit board (MCPCB).

Such an arrangement has similar advantages to that described in FIGURE 48A and FIGURE 56however the LEDs 5314, 5316 can be more intimately coupled into the waveguide 1, improving light coupling efficiency and reducing stray light.

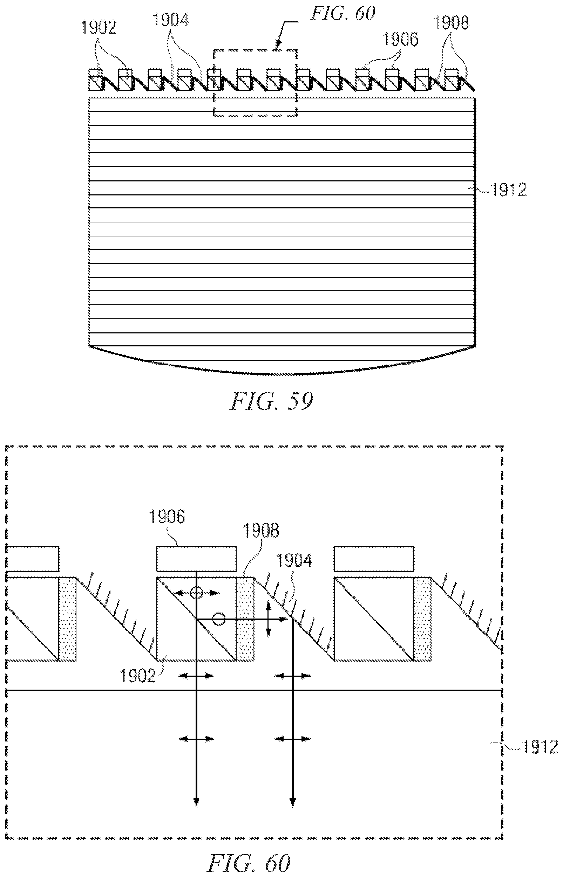

**FIGURE 59** is a schematic diagram illustrating a directional backlight in which the polarization of light emitted by a single source is locally recovered. Further, FIGURE 59 and its detail shown in **FIGURE 60** is an embodiment in which the light from the unpolarised sources of an imaging directional backlight, in this case an optical valve, may be transformed locally into a single polarized input beam. As shown, LED sources 1906 may emit light into polarization beamsplitter (PBS) cubes 1902. The polarization sensitive reflections may separate polarization components from one another. The reflected component may travel substantially parallel to the input surface and may pass through a polarization transformation layer 1908. This layer may be a half wave plate oriented at approximately 45 degrees to the linear polarization direction. A redirecting reflective surface 1904 may cause the light to propagate in substantially the same direction as the original transmitted polarization state and may create input light of a single polarization state.

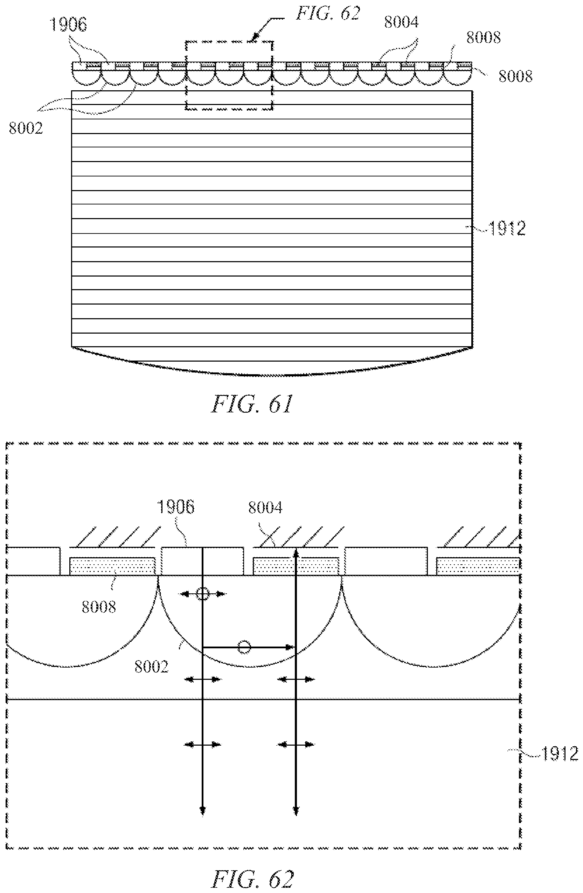

**FIGURE 61** is a schematic diagram illustrating another directional backlight in which the polarization of light emitted by a single source is locally recovered. Further, FIGURE 61 illustrates a further polarization recovery imaging directional backlight embodiment in which unpolarized light from sources 1906 may be first separated into polarization components via a polarization sensitive reflecting layer 8002 before being transformed and redirected by elements 8008 and 8004 respectively. In this embodiment the reflecting surface may be approximately cylindrical to help direct the light input into the waveguide 1912. Additionally, **FIGURE 62** illustrates the illumination and illuminator elements in further detail

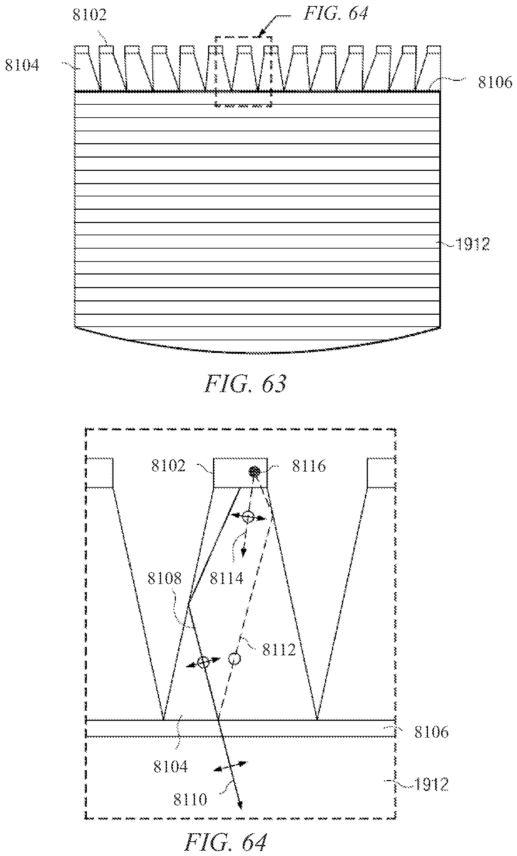

**FIGURE 63** is a schematic diagram illustrating another directional backlight where the polarization of light emitted by a single source is locally recovered. Further, FIGURE 63 is a system embodiment in which the input light 8120 to an imaging directional backlight may be substantially uniformly polarized through first separating polarization components of the emitted light 8108 with a polarization sensitive reflector 8106. Reflected light 8112 may pass back toward the source where it may be scattered back from a point 8116. The act of scattering may cause the polarization state to be mixed enabling further filtering and back reflection of unwanted light by the exiting polarizing reflector 8106. This clean-up cycle may continue until most to all light may be either transformed in polarization and input into the waveguide 1912 or lost through absorption.

FIGURE 63 shows a non-imaging optical (NIO) element 8104 between the illuminator element 8102 and the polarizing reflector 8106 which may cause light in this case, to be more collimated and homogenized prior to entering the optical valve's waveguide 1912. In general, any optical element may exist between source and reflecting polarizer, or no optical element may be between source and reflecting polarizer, for a system like this to deliver some level of polarization recovery. **FIGURE 64** is a schematic diagram illustrating the illumination and illuminator elements of FIGURE 63 in further detail. The general approach applies to sources with various alternative or no NIO conditioning elements as described in filing #316. In general, placing a reflective polarizer at the exit of a source may recover polarized light that would be otherwise lost.

In all the embodiments of FIGURES 59 through 64 which may carry out polarization recovery close to the source, a clean-up sheet polarizer may be employed between the backlight and display panel to ensure polarization integrity.

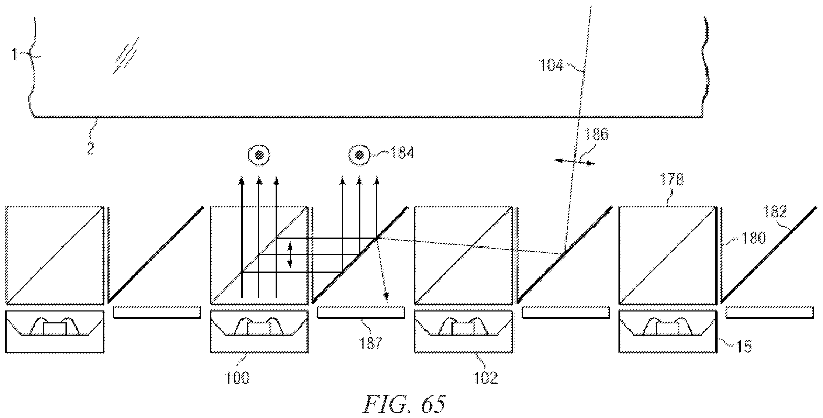

**FIGURE 65** is a schematic diagram illustrating a detail of a directional backlight including a polarised input illuminator array. Further, FIGURE 65 shows another embodiment in which an array of polarizing prisms 178 may be provided. Incident light from element 100 may be incident on prism 178 so that s-polarization state 184 may be transmitted and p-polarization state 186 may be reflected. The incident linear light polarization orientation may be rotated by approximately 90 degrees by waveplate 180 and then reflected by mirror 182 so that the output beam from the element 100 may approximately double in width, but light output may be of a uniform polarization state 184. Reflected light rays 104 from the reflective side 4 and quarter waveplate 176 may have a rotated polarization state 186 such that light may be passed through prism 178 and substantially captured by absorber 187 at a different position to the elements 100, 102. Thus, the reflectance of non-emitting illuminator elements may be reduced, advantageously reducing system cross talk. Further the light from the light emitting elements may be efficiently converted to a single polarization state. Advantageously a single polarization state may be well matched to the operating mode of the SLM 48 in FIGURE 1B.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera. Such relativity between items ranges between less than approximately one percent to ten percent.

While various embodiments in accordance with the principles disclosed herein have been described above, it should be understood that they have been presented by way of example only, and not limitation. Thus, the breadth and scope of this disclosure should not be limited by any of the above-described exemplary embodiments, but should be defined only in accordance with any claims and their equivalents issuing from this disclosure. Furthermore, the above advantages and features are provided in described embodiments, but shall not limit the application of such issued claims to processes and structures accomplishing any or all of the above advantages. For instance, although this application has described various exemplary embodiments using a stepped waveguide as an example of an imaging directional backlight, the teachings of the present disclosure relating to optically coupling illuminators (e.g., LEDs) to directional backlights may be applied to other directional backlights such as Microsoft wedge type directional backlights (e.g., US Pat. 7,970,246 and 3M directional backlights (e.g., US Pat. 7,528,893).

Additionally, the section headings herein are provided for consistency with the suggestions under 37 CFR 1.77 or otherwise to provide organizational cues. These headings shall not limit or characterize the embodiment(s) set out in any claims that may issue from this disclosure. Specifically and by way of example, although the headings refer to a "Technical Field," the claims should not be limited by the language chosen under this heading to describe the so-called field. Further, a description of a technology in the "Background" is not to be construed as an admission that certain technology is prior art to any embodiment(s) in this disclosure. Neither is the "Summary" to be considered as a characterization of the embodiment(s) set forth in issued claims. Furthermore, any reference in this disclosure to "invention" in the singular should not be used to argue that there is only a single point of novelty in this disclosure. Multiple embodiments may be set forth according to the limitations of the multiple claims issuing from this disclosure, and such claims accordingly define the embodiment(s), and their equivalents, that are protected thereby. In all instances, the scope of such claims shall be considered on their own merits in light of this disclosure, but should not be constrained by the headings set forth herein.

**Claims**

1. A directional backlight comprising:

a waveguide (1) having an input end (2); and an array of light sources (15) disposed at different input positions in a lateral direction across the input end (2) of the waveguide (1), the waveguide (1) further comprising first and second, opposed guide surfaces (6, 8) for guiding light along the waveguide, and a reflective end (4) facing the input end (2) for reflecting input light from the input sources back through the waveguide (1), the waveguide (1) being arranged to direct input light from the light sources (15) as output light through the first guide surface (6) after reflection from the reflective end (4) into optical windows in output directions distributed in a lateral direction to the normal to the first guide surface (6) that are dependent on the input positions,

**characterised in that** the directional backlight is arranged such that the input light in the waveguide (1) from the respective light sources (15) have distributions of luminous intensity laterally by angle that vary with the input position of the light sources in the lateral direction by increasing in width with distance from the optical axis of the waveguide (1).

2. A directional backlight according to claim 1, wherein the directional backlight is arranged such that the input light in the waveguide (1) from the light sources have respective distributions of luminous intensity laterally by angle that have respective maximums at an angle directed towards the line of the optical axis of the waveguide (1).

3. A directional backlight according to claim 2, wherein the directional backlight is arranged such that the input light in the waveguide (1) from the light sources (15) have respective distributions of luminous intensity laterally by angle that have respective maximums at an angle directed towards a common point on the line of the optical axis of the waveguide (1).

4. A directional backlight according to claim 3, wherein said common point on the line of the optical axis of the waveguide (1) is beyond the reflective end, or is on the reflective end.

5. A directional backlight according to any one of the preceding claims, wherein the directional backlight includes an optical structure (5276, 5100) between the light sources (15) and the waveguide (1) that is arranged to change arranged to change the distributions of luminous intensity laterally by angle of the light output from the respective light sources (15).

6. A directional backlight according to claim 5, wherein the light sources (15) are oriented in the same orientation laterally such that the light output from the respective light sources (15) have the same distributions of luminous intensity laterally by angle.

7. A directional backlight according to claim 5 or 6, wherein said optical structure (5276, 5100) comprises the input end (2) of the waveguide (1) that is arranged to change the distributions of luminous intensity laterally by angle of the light from the respective light sources (15) on entry into the waveguide as the input light.

8. A directional backlight according to claim 7, wherein the input end (2) comprises an array of input facets (5276, 5100) that are optionally planar and that are arranged to change the distributions of luminous intensity laterally by angle of the light from the respective light sources (15) by angular deflection on entry into the waveguide (1) as the input light.

9. A directional backlight according to claim 8, wherein the array of input facets (5100) comprises inclined facets (5105, 5107) inclined at acute angles in both senses to a normal to the optical axis of the waveguide (1).

10. A directional backlight according to claim 9, wherein the array of input facets further comprises, intermediate the inclined facets (5105, 5107), intermediate facets (5111) extending along a normal to the optical axis of the waveguide.

11. A directional backlight according to any one of claims 8 to 10, wherein the input facets (5100) have a pitch in the lateral direction that is less than the pitch of the light sources (15) in the lateral direction.

12. A directional backlight according to any one of claims 5 to 11, wherein said optical structure comprises an additional optical element (5279) between the light sources (15) and the input end (2) of the waveguide (1).

13. A directional backlight according to claim 12, wherein the additional optical element comprises an array of facets (5277) arranged to change the distributions of luminous intensity laterally by angle of the light from the respective light sources (15) by angular deflection.

14. A directional backlight according to claim 12, wherein the additional optical element comprises a diffuser (7000) arranged to change the angular dispersion of the distributions of luminous intensity laterally by angle of the light from the respective light sources (15) by amounts that vary in the lateral direction across the input end.

15. A directional backlight according to any one of claims 1 to 4, wherein the light sources (15) are oriented in the different orientations laterally such that the light output from the respective light sources have different distributions of luminous intensity laterally by angle.

16. A directional backlight apparatus according to any one of the preceding claims, wherein the first guide surface (6) is arranged to guide light by total internal reflection and the second guide surface (8) comprises a plurality of light extraction features (12) oriented to reflect light guided through the waveguide (1) in directions allowing exit through the first guide surface (6) as the output light and intermediate regions between the light extraction features (12) that are arranged to direct light through the waveguide (1) without extracting it.

17. A directional backlight apparatus according to claim 16, wherein the second guide surface (8) has a stepped shape comprising facets, that are said light extraction features (12), and the intermediate regions.

18. A directional backlight apparatus according to any one of claims 1 to 15, wherein
the first guide surface (6) is arranged to guide light by total internal reflection and the second guide surface (8) is substantially planar and inclined at an angle to reflect light in directions that break the total internal reflection for outputting light through the first guide surface (6), and
the display device further comprises a deflection element extending across the first guide surface (6) of the waveguide (1) for deflecting light towards the normal to the spatial light modulator.

19. A directional backlight according to any one of the preceding claims, wherein the reflective end (4) has positive optical power in a lateral direction across the waveguide (1).

20. A display device comprising:

a directional backlight according to any one of the preceding claims; and
a transmissive spatial light modulator (48) arranged to receive the output light from the first guide surface (6) and to modulate it to display an image.

21. A display apparatus comprising:

a display device according to claim 20; and
a control system (74, 76) arranged to selectively operate the light sources to direct light into varying optical windows corresponding to said output directions.

22. A display apparatus according to claim 21, being an autostereoscopic display apparatus wherein the control system is further arranged to control the display device to display temporally multiplexed left and right images and synchronously to direct the displayed images into viewing windows in positions corresponding to left and right eyes of an observer.

23. An autostereoscopic display apparatus according to claim 22, wherein

the control system (74, 76) further comprises a sensor system (70, 72) arranged to detect the position of an observer across the display device, and
the control system (74, 76) is arranged to selectively operate the light sources (15) to direct the displayed left and right images into viewing windows in positions corresponding to left and right eyes of an observer being performed in dependence on the detected position of the observer.

**Patentansprüche**

1. Gerichtete Hintergrundbeleuchtung, umfassend:

einen Wellenleiter (1) mit einem Eingangsende (2); und
eine Anordnung von Lichtquellen (15), die an verschiedenen Eingangspositionen in einer seitlichen Richtung über dem Eingangsende (2) des Wellenleiters (1) angeordnet sind,
wobei der Wellenleiter (1) ferner erste und zweite gegenüberliegende Führungsflächen (6, 8) zum Führen von Licht entlang des Wellenleiters umfasst, und ein reflektierendes Ende (4), das dem Eingangsende (2) zugewandt ist, um Eingangslicht von den Eingangsquellen zurück durch den Wellenleiter zu reflektieren, wobei der Wellenleiter (1) angeordnet ist, um Eingangslicht von den Lichtquellen (15) als Ausgangslicht durch die erste Führungsfläche (6) nach Reflexion vom reflektierenden Ende (4) in optische Fenster in Ausgangsrichtungen zu richten, die in einer seitlichen Richtung senkrecht zur Normalen zur ersten Führungsfläche (6) verteilt sind, die von den Eingangspositionen abhängig sind,
**dadurch gekennzeichnet, dass** die gerichtete Hintergrundbeleuchtung so angeordnet ist, dass das Eingangslicht im Wellenleiter (1) von den jeweiligen Lichtquellen (15) seitliche Lichtstärkeverteilungen durch Winkel aufweist, die mit der Eingangsposition der Lichtquellen in der seitlichen Richtung variieren, indem sie in Breite mit Abstand von der optischen Achse des Wellenleiters (1) zunehmen.

2. Gerichtete Hintergrundbeleuchtung nach Anspruch 1, wobei die gerichtete Hintergrundbeleuchtung so angeordnet ist, dass das von den Lichtquellen in den Wellenleiter (1) eingegebene Licht jeweilige Lichtstärkeverteilungen seitlich durch Winkel aufweist, die jeweilige Maxima bei einem Winkel aufweisen, der auf die Linie der optischen Achse des Wellenleiters (1) gerichtet ist.

3. Gerichtete Hintergrundbeleuchtung nach Anspruch 2, wobei die gerichtete Hintergrundbeleuchtung so angeordnet ist, dass das von den Lichtquellen in den Wellenleiter (1) eingegebene Licht jeweilige Lichtstärkeverteilungen seitlich durch Winkel aufweist, die jeweilige Maxima bei einem Winkel aufweisen, der auf einen gemeinsamen Punkt auf der Linie der optischen Achse des Wellenleiters (1) gerichtet ist.

4. Hintergrundbeleuchtung nach Anspruch 3, wobei der gemeinsame Punkt auf der Linie der optischen Achse des Wellenleiters (1) jenseits des reflektierenden Endes liegt oder auf dem reflektierenden Ende liegt.

5. Gerichtete Hintergrundbeleuchtung nach einem der vorhergehenden Ansprüche, wobei die gerichtete Hintergrundbeleuchtung eine optische Struktur (5276, 5100) zwischen den Lichtquellen (15) und dem Wellenleiter (1) beinhaltet, die angeordnet ist, um die Lichtstärkeverteilungen seitlich durch den Winkel des von den jeweiligen Lichtquellen (15) abgegebenen Lichts zu ändern.

6. Gerichtete Hintergrundbeleuchtung nach Anspruch 5, wobei die Lichtquellen (15) in der gleichen Ausrichtung seitlich ausgerichtet sind, so dass das von den jeweiligen Lichtquellen (15) ausgegebene Licht die gleichen Lichtstärkeverteilungen seitlich durch den Winkel aufweist.

7. Gerichtete Hintergrundbeleuchtung nach Anspruch 5 oder 6, wobei die optische Struktur (5276, 5100) das Eingangsende (2) des Wellenleiters (1) umfasst, der angeordnet ist, um die Lichtstärkeverteilungen seitlich durch den Winkel des Lichts von dem Licht von den jeweiligen Lichtquellen (15) beim Eintritt in den Wellenleiter als das Eingangslicht zu ändern.

8. Gerichtete Hintergrundbeleuchtung nach Anspruch 7, wobei das Eingangsende (2) eine Anordnung von Eingangsfacetten (5276, 5100) umfasst, die optional eben sind und die angeordnet sind, um die Lichtstärkeverteilungen seitlich durch den Winkel des Lichts von den jeweiligen Lichtquellen (15) durch Winkelablenkung beim Eintritt in den Wellenleiter (1) als das Eingangslicht zu ändern.

9. Gerichtete Hintergrundbeleuchtung nach Anspruch 8, wobei die Anordnung von Eingangsfacetten (5100) geneigte Facetten (5105, 5107) umfasst, die in beiden Richtungen unter spitzen Winkeln zu einer Normalen zur optischen Achse des Wellenleiters (1) geneigt sind.

10. Gerichtete Hintergrundbeleuchtung nach Anspruch 9, wobei die Anordnung von Eingangsfacetten ferner, zwischen den geneigten Facetten (5105, 5107), zwischengelagerte Facetten (5111) umfasst, die sich entlang einer Normalen zur optischen Achse des Wellenleiters erstrecken.

11. Gerichtete Hintergrundbeleuchtung nach einem der Ansprüche 8 bis 10, wobei die Eingangsfacetten (5100) eine Steigung in der seitlichen Richtung aufweisen, die geringer als die Steigung der Lichtquellen (15) in der seitlichen Richtung ist.

12. Gerichtete Hintergrundbeleuchtung nach einem der Ansprüche 5 bis 11, wobei die optische Struktur ein zusätzliches optisches Element (5279) zwischen den Lichtquellen (15) und dem Eingangsende (2) des Wellenleiters (1) umfasst.

13. Gerichtete Hintergrundbeleuchtung nach Anspruch 12, wobei das zusätzliche optische Element eine Anordnung von Facetten (5277) umfasst, die angeordnet sind, um die Lichtstärkeverteilungen seitlich durch den Winkel des Lichts von den jeweiligen Lichtquellen (15) durch Winkelablenkung zu ändern.

14. Gerichtete Hintergrundbeleuchtung nach Anspruch 12, wobei das zusätzliche optische Element einen Diffusor (7000) umfasst, der angeordnet ist, um die Winkelstreuung der Lichtstärkeverteilungen seitlich durch den Winkel des Lichts von den jeweiligen Lichtquellen (15) um Beträge zu ändern, die in der seitlichen Richtung über das Eingangsende variieren.

15. Gerichtete Hintergrundbeleuchtung nach einem der Ansprüche 1 bis 4, wobei die Lichtquellen (15) in den unterschiedlichen Ausrichtungen seitlich so ausgerichtet sind, dass der Lichtausgang von den jeweiligen Lichtquellen unterschiedliche Lichtstärkeverteilungen seitlich durch den Winkel aufweist.

16. Gerichtete Hintergrundbeleuchtungsvorrichtung nach einem der vorhergehenden Ansprüche, wobei die erste Führungsfläche (6) angeordnet ist, um Licht durch interne Totalreflexion zu leiten, und die zweite Führungsfläche (8) eine Vielzahl von Lichtextraktionsmerkmalen (12) umfasst, die ausgerichtet sind, um durch den Wellenleiter (1) geleitetes Licht in Richtungen zu reflektieren, die einen Austritt durch die erste Führungsfläche (6) als Ausgangslicht und Zwischenbereiche zwischen den Lichtextraktionsmerkmalen (12) ermöglichen, die angeordnet sind, um Licht durch den Wellenleiter (1) zu richten, ohne es zu extrahieren.

17. Gerichtete Hintergrundbeleuchtungsvorrichtung nach Anspruch 16, wobei die zweite Führungsfläche (8) eine abgestufte Form aufweist, die Facetten umfasst, die die Lichtextraktionsmerkmale (12) und die Zwischenbereiche sind.

18. Gerichtete Hintergrundbeleuchtungsvorrichtung nach einem der Ansprüche 1 bis 15, wobei die erste Führungsfläche (6) angeordnet ist, um Licht durch interne Totalreflexion zu leiten, und die zweite Führungsfläche (8) im Wesentlichen eben und in einem Winkel geneigt ist, um Licht in Richtungen zu reflektieren, die die interne Totalreflexion unterbrechen, um Licht durch die erste Führungsfläche (6) auszugeben, und die Anzeigevorrichtung ferner ein Ablenkelement umfasst, das sich über die erste Führungsfläche (6) des Wellenleiters (1) erstreckt, um Licht auf die Normale zum räumlichen Lichtmodulator abzulenken.

19. Gerichtete Hintergrundbeleuchtung nach einem der vorhergehenden Ansprüche, wobei das reflektierende Ende (4) in seitlicher Richtung über den Wellenleiter (1) eine positive optische Leistung aufweist.

20. Anzeigevorrichtung umfassend:

eine gerichtete Hintergrundbeleuchtung nach einem der vorhergehenden Ansprüche; und einen transmissiven Raumlichtmodulator (48), der ausgelegt ist, das Ausgangslicht von der ersten Führungsfläche (6) zu empfangen und es zu modulieren, um ein Bild anzuzeigen.

21. Anzeigevorrichtung umfassend:

eine Anzeigevorrichtung nach Anspruch 20; und ein Steuersystem (74, 76), das angeordnet ist, um die Lichtquellen selektiv zu betreiben, um Licht in variierende optische Fenster zu richten, die den Ausgangsrichtungen entsprechen.

22. Anzeigevorrichtung nach Anspruch 21, die eine autostereoskopische Anzeigevorrichtung ist, wobei das Steuersystem ferner angeordnet ist, um die Anzeigevorrichtung zu steuern, um zeitlich gemultiplexte linke und rechte Bilder anzuzeigen und die angezeigten Bilder synchron in Betrachtungsfenster in Positionen zu richten, die linken und rechten Augen eines Betrachters entsprechen.

23. Autostereoskopische Anzeigevorrichtung nach Anspruch 22, wobei das Steuersystem (74, 76) ferner ein Sensorsystem (70, 72) umfasst, das angeordnet ist, um die Position eines Betrachters über die Anzeigevorrichtung zu erfassen, und das Steuersystem (74, 76) angeordnet ist, um die Lichtquellen (15) selektiv zu betreiben, um die angezeigten linken und rechten Bilder in Betrachtungsfenster in Positionen zu lenken, die dem linken und rechten Auge eines Betrachters entsprechen, die in Abhängigkeit von der erfassten Position des Betrachters durchgeführt werden.

**Revendications**

1. Rétroéclairage directionnel comprenant :

un guide d'onde (1) ayant une extrémité d'entrée (2) ; et un réseau de sources lumineuses (15) disposées à différentes positions d'entrée dans une direction latérale à travers l'extrémité d'entrée (2) du guide d'onde (1), le guide d'ondes (1) comprenant en outre des première et seconde surfaces de guidage opposées (6, 8) pour guider la lumière le long du guide d'ondes, et une extrémité réfléchissante (4) faisant face à l'extrémité d'entrée (2) pour réfléchir la lumière d'entrée provenant des sources d'entrée à travers le guide d'ondes (1), le guide d'ondes (1) étant agencé pour diriger la lumière d'entrée des sources lumineuses (15) en tant que lumière de sortie à travers la première surface de guidage (6) après réflexion de l'extrémité réfléchissante (4) dans des fenêtres optiques dans des directions de sortie répartis dans une direction latérale par rapport à la normale à la première surface de guidage (6) qui dépendent des positions d'entrée, **caractérisé en ce que** le rétroéclairage directionnel est agencé de telle sorte que la lumière d'entrée dans le guide d'ondes (1) provenant des sources de lumineuses (15) respectives présente des distributions d'intensité lumineuse latéralement selon un angle qui varient avec la position d'entrée des sources lumineuses dans la direction latérale en augmentant en largeur avec la distance depuis l'axe optique du guide d'onde (1).

2. Rétroéclairage directionnel selon la revendication 1, dans lequel le rétroéclairage directionnel est agencé de telle sorte que la lumière d'entrée dans le guide d'ondes (1) à partir des sources lumineuses a des distributions respectives d'intensité lumineuse latéralement par angle qui ont des maximums respectifs à un angle dirigé vers la ligne de l'axe optique du guide d'onde (1).

3. Rétroéclairage directionnel selon la revendication 2, dans lequel le rétroéclairage directionnel est agencé de telle sorte que la lumière d'entrée dans le guide d'ondes (1) à partir des sources lumineuses (15) a des distributions respectives d'intensité lumineuse latéralement par angle qui ont des maximums respectifs à un angle dirigé vers un point commun sur la ligne de l'axe optique du guide d'onde (1).

4. Rétroéclairage directionnel selon la revendication 3, dans lequel ledit point commun sur la ligne de l'axe optique du guide d'ondes (1) est au-delà de l'extrémité réfléchissante, ou est sur l'extrémité réfléchissante.

5. Rétroéclairage directionnel selon l'une quelconque des revendications précédentes, dans lequel le rétro-éclairage directionnel inclut une structure optique (5276, 5100) entre les sources lumineuses (15) et le guide d'onde (1) qui est agencé pour changer les distributions d'intensité lumineuse latéralement par angle de la lumière émise par les sources lumineuses respectives (15).

6. Rétroéclairage directionnel selon la revendication 5, dans lequel les sources lumineuses (15) sont orientées dans la même orientation latéralement de telle sorte que la lumière émise par les sources lumineuses respectives (15) présente les mêmes distributions d'intensité lumineuse latéralement par angle.

7. Rétroéclairage directionnel selon la revendication 5 ou 6, dans lequel ladite structure optique (5276, 5100) comprend l'extrémité d'entrée (2) du guide d'ondes (1) qui est agencée pour changer latéralement les distributions d'intensité lumineuse par angle de la lumière à partir des sources lumineuses respectives (15) lors de l'entrée dans le guide d'ondes comme lumière d'entrée.

8. Rétroéclairage directionnel selon la revendication 7, dans lequel l'extrémité d'entrée (2) comprend un réseau de facettes d'entrée (5276, 5100) qui sont facultativement planes et qui sont agencées pour changer latéralement les distributions d'intensité lumineuse par angle de la lumière à partir des sources lumineuses respectives (15) par déviation angulaire à l'entrée dans le guide d'ondes (1) comme lumière d'entrée.

9. Rétroéclairage directionnel selon la revendication 8, dans lequel le réseau de facettes d'entrée (5100) comprend des facettes inclinées (5105, 5107) à des angles aigus dans les deux sens par rapport à une normale à l'axe optique du guide d'ondes (1).

10. Rétroéclairage directionnel selon la revendication 9, dans lequel le réseau de facettes d'entrée comprend en outre, entre les facettes inclinées (5105, 5107), des facettes intermédiaires (5111) s'étendant le long d'une normale à l'axe optique du guide d'ondes.

11. Rétroéclairage directionnel selon l'une quelconque des revendications 8 à 10, dans lequel les facettes d'entrée (5100) ont un pas dans la direction latérale qui est inférieur au pas des sources lumineuses (15) dans la direction latérale.

12. Rétroéclairage directionnel selon l'une quelconque des revendications 5 à 11, dans lequel ladite structure optique comprend un élément optique supplémentaire (5279) entre les sources lumineuses (15) et l'extrémité d'entrée (2) du guide d'ondes (1).

13. Rétroéclairage directionnel selon la revendication 12, dans lequel l'élément optique supplémentaire comprend un réseau de facettes (5277) agencé pour changer latéralement les distributions d'intensité lumineuse par angle de la lumière provenant des sources lumineuses respectives (15) par déviation angulaire.

14. Rétroéclairage directionnel selon la revendication 12, dans lequel l'élément optique supplémentaire comprend un diffuseur (7000) agencé pour modifier latéralement la dispersion angulaire des distributions d'intensité lumineuse par angle de la lumière provenant des sources lumineuses respectives (15) par des quantités qui varient dans la direction latérale à travers l'extrémité d'entrée.

15. Rétroéclairage directionnel selon l'une quelconque des revendications 1 à 4, dans lequel les sources lumineuses (15) sont orientées latéralement dans les différentes orientations de telle sorte que la lumière émise par les sources lumineuses respectives a différentes distributions d'intensité lumineuse latéralement par angle.

16. Appareil de rétroéclairage directionnel selon l'une quelconque des revendications précédentes, dans lequel la première surface de guidage (6) est agencée pour guider la lumière par réflexion interne totale et la seconde surface de guidage (8) comprend une pluralité de caractéristiques d'extraction de lumière (12) orienté pour réfléchir la lumière guidée à travers le guide d'ondes (1) dans des directions permettant la sortie à travers la première surface de guidage (6) en tant que lumière de sortie et régions intermédiaires entre les caractéristiques d'extraction de lumière (12) qui sont agencées pour diriger la lumière à travers le guide d'ondes (1) sans l'extraire.

17. Appareil de rétroéclairage directionnel selon la revendication 16, dans lequel la seconde surface de guidage (8) a une forme échelonnée comprenant des facettes, qui sont lesdites caractéristiques d'extraction de lumière (12), et les régions intermédiaires.

18. Appareil de rétroéclairage directionnel selon l'une quelconque des revendications 1 à 15, dans lequel la première surface de guidage (6) est agencée pour guider la lumière par réflexion interne totale et la seconde surface de guidage (8) est sensiblement plane et inclinée selon un angle pour réfléchir la lumière dans des directions qui cassent la réflexion interne totale pour émettre de la lumière à travers la première surface de guidage (6), et
le dispositif d'affichage comprend en outre un élément de déviation s'étendant à travers la première surface de guidage (6) du guide d'ondes (1) pour dévier la lumière vers la normale au modulateur spatial de lumière.

19. Rétroéclairage directionnel selon l'une quelconque des revendications précédentes, dans lequel l'extrémité réfléchissante (4) a une puissance optique positive dans une direction latérale à travers le guide d'ondes (1).

20. Dispositif d'affichage comprenant :

un rétroéclairage directionnel selon l'une quelconque des revendications précédentes ; et
un modulateur spatial de lumière transmissif (48) agencé pour recevoir la lumière de sortie depuis la première surface de guidage (6) et pour la moduler pour afficher une image.

21. Appareil d'affichage comprenant :

un dispositif d'affichage selon la revendication 20; et
un système de commande (74, 76) agencé pour faire fonctionner sélectivement les sources lumineuses pour diriger la lumière dans différentes fenêtres optiques correspondant auxdites directions de sortie.

22. Appareil d'affichage selon la revendication 21, étant un appareil d'affichage auto-stéréoscopique dans lequel le système de commande est en outre agencé pour commander le dispositif d'affichage pour afficher des images gauche et droite multiplexées temporellement et pour diriger de manière synchrone les images affichées dans des fenêtres de visualisation dans des positions correspondant aux yeux gauche et droit d'un observateur.

23. Appareil d'affichage auto-stéréoscopique selon la revendication 22, dans lequel
le système de commande (74, 76) comprend en outre un système de capteur (70, 72) agencé pour détecter la position d'un observateur à travers le dispositif d'affichage, et
le système de commande (74, 76) est agencé pour faire fonctionner sélectivement les sources lumineuses (15) pour diriger les images gauche et droite affichées dans des fenêtres de visualisation dans des positions correspondant aux yeux gauche et droit d'un observateur en fonction de la position détectée de l'observateur.

*FIG. 1A*

*FIG. 1B*

FIG. 2A

FIG. 2B

FIG. 2C

FIG. 3

*FIG. 4A*

FIG. 4B

*FIG. 5*

FIG. 6A

FIG. 6B

FIG. 6C

FIG. 7

FIG. 8

EP 2 850 359 B1

*FIG. 9*

*FIG. 10*

*FIG. 11A*

*FIG. 11B*

*FIG. 11C*

53

*FIG. 12A*

$$\varepsilon = \frac{\varepsilon'}{\varepsilon''} = \frac{A * \sin(\theta_c)}{(a+A) * \sin(\pi/2 - \theta_c)}$$

GEOMETRIC EFFICIENCY

*FIG. 12B*

FIG. 13A

$$\theta = \mathrm{Tan}^{-1}\left(\frac{10/2}{h}\right)$$

$$E_{LED} = a * \sin 90°$$

$$E_{VALVE} = p * n * \sin\theta$$

$$E_{LED} = E_{VALVE}$$

IF

$$a = p * n * \sin\theta$$

FIG. 13B

EP 2 850 359 B1

400

$n = 1$

y

x

*FIG. 14A*

401    404

402    $n > 1$    403

404

y

x

*FIG. 14B*

500    502    506

501    504

502    503    505

506

y

x

*FIG. 15A*

510    512    516

511    514

512    513    515

516

y

x

*FIG. 15B*

FIG. 16A

FIG. 16B

FIG. 16C

FIG. 16D

FIG. 16E

FIG. 17

FIG. 18

*FIG. 19A*

*FIG. 19B*

*FIG. 19C*

FIG. 20

*FIG. 21*

*FIG. 22A*

*FIG. 22B*

*FIG. 23*

*FIG. 24*

*FIG. 25A*

*FIG. 25B*

*FIG. 26*

FIG. 27A

FIG. 27B

1800

1802

1801

*FIG. 28A*

1810

1813

↑ x
→ y

1812

1811

*FIG. 28B*

1820

1822

1821

*FIG. 28C*

FIG. 29A

FIG. 29B

FIG. 30

FIG. 31A

EP 2 850 359 B1

2112    2113    2110

2114    z    x

*FIG. 31B*

2122

2123    2120

2122

2124    z    x

2121    2125    *FIG. 31C*

FIG. 32A

FIG. 32B

3008

3002

3006

15

3004

2

z

y

*FIG. 33*

3015

3010

3014

3016

*FIG. 34*

3012

3020

15

3004

3002

3006

2

z

y

3018

*FIG. 35*

3010

3014

3016

*FIG. 36*

3012

FIG. 37

FIG. 38

FIG. 39

FIG. 40

3052  3050  3048  3046

*FIG. 41A*

z

y

3050  3048  3046

*FIG. 41B*

z

y

3050

*FIG. 42A*

x

y

3050

*FIG. 42B*

x

y

FIG. 43

FIG. 44

*FIG. 45*

*FIG. 46*

FIG. 47

FIG. 48A

FIG. 48B

22

5278

5608

5276

5277

5279

x

y

5607

5232

FIG. 49

*FIG. 50A*

*FIG. 50B*

5105

5107

1

5103

*FIG. 50C*

5103

1

5105

5107

5111

*FIG. 50D*

5113

5103

1

5105

5107

5111

5115  5117

*FIG. 50E*

FIG. 51A

FIG. 51B

*FIG. 52A*

*FIG. 52B*

*FIG. 52C*

FIG. 52D

*FIG. 52E*

*FIG. 52F*

264

5130

5132

262

*FIG. 53A*

264

5132

5136

5134

262

*FIG. 53B*

*FIG. 53C*

*FIG. 53D*

*FIG. 53E*

FIG. 54A

FIG. 54B

FIG. 54C

FIG. 55

*FIG. 56*

*FIG. 57*

*FIG. 58A*

*FIG. 58B*

*FIG. 58C*

FIG. 59

FIG. 60

FIG. 61

FIG. 62

*FIG. 63*

*FIG. 64*

*FIG. 65*

EP 2 850 359 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13300293 B
- US 20110242298 A
- US 300293
- WO 13300293 A

- US 7528893 B
- US 7970246 B
- US 7660047 B
- US 4938563 A

**Non-patent literature cited in the description**

- **KÄLIL KÄLÄNTÄR et al.** Backlight Unit With Double Surface Light Emission. *J. Soc. Inf. Display,* December 2004, vol. 12 (4), 379-387
- **DONALD E. WILLIAMSON.** Cone Channel Condenser Optics. *JOSA,* October 1952, vol. 42 (10), 712-715
- **F. FOURNIER ; J. ROLLAND.** Optimization of free-form lightpipes for light-emitting-diode projectors. *Applied Optics,* March 2008, vol. 47 (7), 957-966
- **W. T. WELFORD ; R. WINSTON.** High Collection Nonimaging Optics. Academic Press, 1989

- **F. FOURNIER.** A review of beam shaping strategies for LED lighting. *Proc. of SPIE,* 2011, vol. 8170 (817007), 1-11
- **G. OUYANG ; K. LI.** Brightness increase in LED by recycling of light for projection applications. *Proc. of SPIE,* 2007, vol. 6489
- **A. RABL.** Comparison of solar concentrators. *Solar Energy,* 1976, vol. 18, 93-111
- **W. SMITH.** Modern Optical Engineering. Mc-Graw-Hill, 1990